(19) Europäisches Patentamt / European Patent Office / Office européen des brevets

(11) **EP 1 989 699 B1**

(12) **EUROPEAN PATENT SPECIFICATION**

(45) Date of publication and mention of the grant of the patent:
**31.07.2013 Bulletin 2013/31**

(51) Int Cl.:
*G09G 3/20* (2006.01)  *G09G 3/22* (2006.01)
*G09G 3/30* (2006.01)  *H01J 29/10* (2006.01)
*G03B 21/56* (2006.01)  *G03B 21/60* (2006.01)
*G03B 21/00* (2006.01)  *G03B 21/16* (2006.01)
*G09G 3/02* (2006.01)

(21) Application number: **07750816.6**

(22) Date of filing: **15.02.2007**

(86) International application number:
**PCT/US2007/004004**

(87) International publication number:
**WO 2007/095329 (23.08.2007 Gazette 2007/34)**

(54) **SERVO-ASSISTED SCANNING BEAM DISPLAY SYSTEMS USING FLUORESCENT SCREENS**

SERVOGESTEUERTE ABTASTSTRAHLANZEIGESYSTEME MIT FLUORESZENZSCHIRMEN

SYSTEMES D'AFFICHAGE SERVO-ASSISTES A FAISCEAU DE BALAYAGE UTILISANT DES ECRANS FLUORESCENTS

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.02.2006 US 773993 P**
**24.02.2006 US 776553 P**
**03.03.2006 US 779261 P**
**31.03.2006 PCT/US2006/011757**
**15.05.2006 US 800870 P**
**01.09.2006 US 515420**
**13.12.2006 US 610479**

(43) Date of publication of application:
**12.11.2008 Bulletin 2008/46**

(73) Proprietor: **Prysm, Inc.**
**San Jose CA 95134 (US)**

(72) Inventors:
• **HAJJAR, Roger A.**
**San Jose, California 95125 (US)**
• **BURROUGHS, Alan C.**
**San Jose, California 95128 (US)**

• **PAJDOWSKI, Mark A.**
**Los Gatos, California 95032 (US)**
• **KENT, David L.**
**Framingham, Massachusetts 01701 (US)**
• **UEBBING, John**
**Palo Alto, California 94306 (US)**
• **MALYAK, Phillip H.**
**Canton, Massachusetts 02021 (US)**
• **KRALL, Donald**
**San Jose, California 95136 (US)**

(74) Representative: **Lloyd, Patrick Alexander Desmond**
**Reddie & Grose LLP**
**16 Theobalds Road**
**London WC1X 8PL (GB)**

(56) References cited:
**EP-A2- 0 618 472    US-A- 5 138 441**
**US-A- 5 473 396    US-A- 5 715 021**
**US-A- 6 118 516    US-B1- 6 224 216**
**US-B1- 6 329 966    US-B2- 6 628 248**
**US-B2- 6 900 916**

EP 1 989 699 B1

**Description**

**Background**

This application relates to scanning-beam display systems.

In a scanning-beam display system, an optical beam can be scanned over a screen to form images on the screen. Many display systems such as laser display systems use a polygon scanner with multiple reflective facets to provide horizontal scanning and a vertical scanning mirror such as a galvo-driven mirror to provide vertical scanning. In operation, one facet of the polygon scanner scans one horizontal line as the polygon scanner spins to change the orientation and position of the facet and the next facet scans the next horizontal line. The horizontal scanning and the vertical scanning are synchronised to each other to project images on the screen.

Such scanning-beam display systems can be in various configurations. For example, scanning-beam display systems may use passive screens that do not emit light but make light of the scanning beam visible to a viewer by one or a combination of mechanism, such as optical reflection, optical diffusion, optical scattering and optical diffraction. Various front and rear projection displays use passive screens. Scanning-beam display systems can also use active screens such as fluorescent screens that include fluorescent materials to emit coloured light under optical ex118citation where the emitted light forms the images visible to viewers. US 5,138,441 discloses a beam-index type colour display apparatus. The apparatus includes an A/O modulator for emitting a first-order beam for use as an image projecting light beam and a zero order beam for use as an index beam.

**Summary**

The specification of this application describes, among others, display systems and devices based on scanning light on a screen. Servo control mechanisms for such display systems are described.

The invention is defined in the independent claim to which reference is now directed. Preferred features are set out in the dependent claims.

In some implementations, multiple lasers can be used to simultaneously scan multiple laser beams to illuminate one screen. For example, the multiple laser beams can illuminate one screen segment at a time'and sequentially scan multiple screen segments to complete a full screen. The screen can include fluorescent materials which emit visible light under excitation of the scanning light to form images with the emitted visible light.

In one example, a scanning beam display system is described to include an optical module operable to produce a scanning beam of excitation light having optical pulses that can carry image information; a fluorescent screen which absorbs the excitation light and emits visible fluorescent light to produce images carried by the scanning beam; and an optical sensor positioned to receive a feedback optical signal from the fluorescent screen under illumination of the scanning beam and to produce a monitor signal indicating a spatial alignment of the optical pulses on the fluorescent screen. The optical module comprises a feedback control unit operable to adjust timing of the optical pulses carried by the scanning beam in response to the monitor signal to control the spatial alignment of spatial positions of the optical pulses on the fluorescent screen.

In the above scanning beam display system, the screen can include parallel fluorescent stripes which produce the images carried by the scanning beam, and servo reference marks respectively located at boundaries of the fluorescent stripes to produce the feedback optical signal under illumination of the scanning beam. The feedback optical signal varies in amplitude with a position of the scanning beam across each fluorescent stripe, and the optical module is operable to create a temporal variation in timing of the optical pulses in the scanning beam to shift positions of the optical pulses on the screen along a beam scanning direction perpendicular to the fluorescent stripes. In addition, the feedback control unit is operable to adjust timing of the optical pulses in response to information in the monitor signal to direct a position of each optical pulse towards a center of a fluorescent stripe along the beam scanning direction.

In another example, a method for controlling a scanning beam display system is described. In this method, a beam of excitation light modulated with optical pulses is scanned on a screen with parallel fluorescent stripes in a beam scanning direction perpendicular to the fluorescent stripes to excite the fluorescent strips to emit visible fluorescent light which forms images. A temporal variation in timing of the optical pulses in the beam of excitation light is provided to advance or delay a spatial position of each optical pulse along the beam scanning direction on the screen. A monitor signal generated from the screen under illumination by the beam of excitation light is detected and the monitor signal has an amplitude that varies with a position of the beam relative to a fluorescent stripe. The detected monitor signal is processed to obtain information on a spatial offset of a position of an optical pulse on the screen relative to a center of a fluorescent stripe and the timing of the optical pulses in the beam of excitation light is adjusted to reduce the spatial offset.

In the above method, the following operations may be conducted to control the system. A peripheral servo reference mark can be provided outside the fluorescent stripes in the beam scanning direction to produce a feedback light when illuminated by the scanning beam. The scanning beam is then controlled to scan over the peripheral servo reference mark during a scan over the fluorescent area. The scanning beam is controlled to be in a CW mode when the scanning beam is scanning over the peripheral servo reference mark and to be in a pulsed mode to carry the optical pulses when the scanning beam is scanning over the fluorescent stripes. The feedback light from the peripheral servo reference mark is used to detect a beam parameter of the scanning beam and the detected beam parameter is used to adjust the scanning beam. The peripheral servo reference mark may be used to achieve various controls, such as beam focusing, vertical beam position on the screen, and the beam power on the screen.

In yet another example, a scanning beam display system can include an optical module operable to produce a scanning beam of excitation light having optical pulses that can carry image information, and a fluorescent screen that includes a fluorescent area and a peripheral servo reference mark area outside the fluorescent area. The fluorescent area absorbs the excitation light and emits visible fluorescent light to produce images carried by the scanning beam. The fluorescent area includes first servo reference marks which produce a first feedback optical signal under illumination of the scanning beam. The peripheral servo reference mark area includes at least one second servo reference mark that produces a second feedback optical signal under illumination of the scanning beam. This system also includes a first optical sensor positioned to receive the first feedback optical signal and to produce a first monitor signal indicating a spatial alignment of the optical pulses on the fluorescent screen, and a second optical sensor positioned to receive the second feedback optical signal and to produce a second monitor signal indicating an optical property of the scanning beam on the fluorescent screen. The optical module includes a feedback control unit to adjust the scanning beam in response to the first and second monitor signals to control at least the spatial alignment of spatial positions of the optical pulses on the fluorescent screen.

The screen in the above system may further include a light pipe formed in the peripheral servo reference mark area of the screen. This light pipe has an input portion that is coupled to receive the second feedback optical signal generated by the second servo reference mark and an output portion that is coupled to the second optical sensor to direct the received second feedback optical signal to the second optical sensor. The second servo reference mark may be optically transmissive to direct a transmitted portion of the scanning beam to the light pipe as the second feedback optical signal.

Examples of scanning beam display systems with a first scanner and a second polygon scanner are described. In one example, such a system can include an optical module and a .screen. The optical module includes a first scanner to scan along a first direction at least one scanning beam having optical pulses that are sequential in time and carry image information, and a second scanner having a polygon with reflective facets. The polygon is operable to rotate around a rotation axis that is along the first direction to scan the at least one scanning beam along a second direction perpendicular to the first direction. The screen is positioned to receive the at least one scanning beam from the optical module and configured to include (1) a display region which displays images carried by the at least one scanning beam, and (2) reference marks positioned in paths along the second direction of the least one scanning beam on the screen and displaced from one another along the first direction. Each reference mark is operable to produce an optical monitor signal when illuminated by the at least one scanning beam. The system also includes an optical detector positioned to receive the optical monitor signal from the screen and to produce a detector signal containing information on a position offset of the least one scanning beam relative to a respective reference mark on the screen, and a first scanner control that measures a pyramidal error of the polygon from the detector signal and controls scanning of the second scanner to correct the position offset caused by the pyramidal error.

A method for operating a scanning beam display system with two scanners for scanning along two directions is also described. This method includes using a first scanner to scan at least one beam of light modulated with optical pulses to carry images along a first direction on a screen and a second polygon scanner with reflective facets to scan the at least one beam along a second, perpendicular direction on the screen to display the images. Reference marks on the screen at positions that are respectively in beam scanning paths of the at least one beam by the reflective facets, respectively, are used to produce optical monitor signals when illuminated by the at least one beam during scanning. Each optical monitor signal has information on a position offset of the least one beam relative to a respective reference mark on the screen caused by a pyramidal error of a respective reflective facet in the polygon scanner. This method further includes detecting the optical monitor signals from the screen to produce a detector signal containing the information on the position offset; and adjusting the scanning of the first scanner along the first direction to reduce the position offset of the at least one beam on the screen in response to the position offset in the detector signal.

Another example of a scanning beam display system with two scanners includes an optical module operable to produce a scanning beam of excitation light having optical pulses that can carry image information, a first scanner to scan the scanning beam along a first direction, a second scanner comprising a polygon having reflective facets and operable to spin around an axis parallel to the first direction and to use the reflective facets to scan the scanning beam along a second, perpendicular direction, and a fluorescent screen comprising a fluorescent area having parallel fluorescent stripes each long the first direction and spatially displaced from one another along the second direction and a peripheral servo reference mark area outside the fluorescent area. The fluorescent stripes absorb the excitation light and emit visible fluorescent light to produce images carried by the scanning beam. The fluorescent area also includes first servo reference marks producing a first feedback optical signal under illumination of the scanning beam to indicate a spatial alignment of the optical pulses to the fluorescent stripes along the second direction. The peripheral servo reference mark area includes second servo reference marks each producing a second feedback optical signal under illumination of the scanning beam indicating a position offset of the scanning beam along the first direction. This system also includes a first optical sensor positioned to receive the first feedback optical signal and to produce a first monitor signal indicating the spatial alignment of the optical pulses relative to the fluorescent stripes, a second optical sensor positioned to receive the second feedback optical signal and to produce a second monitor signal indicating the position offset of the scanning beam along the first direction when scanned by a respective reflective facet, and a control unit operable to adjust the scanning beam in response to the first and second monitor signals to control at least the spatial alignment of spatial positions of the optical pulses relative to the fluorescent stripes and to reduce the position offset of the scanning beam along the first direction.

This application also describes an example of a scanning beam display system with two scanners that includes a polygon scanner having reflector facets and operable to rotate to scan an optical beam along a first direction, a second scanner having a reflector to cause the optical beam to scan in a second direction perpendicular to the first direction, and a control unit in communication with the second scanner to control scanning of the second scanner. The control unit is operable to dither the second scanner to cause the optical beam to change its direction back and forth along the second direction during each scanning at a dither frequency higher than a frame rate of an image carried by the optical beam.

In addition, this application describes an example of a method for displaying images with two scanners that uses a polygon scanner having reflector facets to scan an optical beam along a first direction and uses a second scanner having a reflector to scan the optical beam in a second direction perpendicular to the first direction. This method includes controlling the scanning of the optical beam to scan the optical beam with different facets of the polygon scanner at each horizontal scanning line in successive frames.

Various servo control techniques based on feedback light from the screen are described for scanning display systems with fluorescent screens. Light from a fluorescent screen is detected to monitor an error in timing of optical pulses in a scanning beam of excitation light on the screen. Such light can be, for example, reflected or scattered light of the excitation light, or fluorescent light emitted by the screen under illumination of the excitation light. Examples of both static servo control and dynamic servo control are described. The static servo control is performed during the power-on stage of the system when the screen does not display images and the dynamic servo control is performed during the normal operation of the system when images are displayed on the screen.

These and other examples are described in detail in the drawings, the detailed description and the claims.

## Brief Description of the Drawings

FIG. 1 shows an example scanning laser display system having a fluorescent screen made of laser-excitable fluorescent materials (e.g., phosphors) emitting colored lights under excitation of a scanning laser beam that carries the image information to be displayed.

FIGS. 2A and 2B show one example screen structure with parallel fluorescent stripes and the structure of color pixels on the screen in FIG. 1.

FIG. 2C shows another example for a fluorescent screen with fluorescent stripes formed by placing parallel optical filters over the layer of a uniform fluorescent layer which emits white light under optical excitation.

FIGS. 3 and 4 show two different scanning beam displays.

FIG. 5 shows an example implementation of the laser module in FIG. 3 having multiple lasers that direct multiple laser beams on the screen.

FIG. 6 shows one example for time division on each modulated laser beam 120 where each color pixel time is equally divided into three sequential time slots for the three color channels.

FIG. 7 shows one example for simultaneously scanning consecutive scan lines with multiple excitation laser beams.

FIG. 8 shows one example of a scanning display system using a servo feedback control and an on-screen optical sensing unit.

FIG. 9 shows one example of a fluorescent screen with on-screen optical servo detectors.

FIG. 10 shows one example of a scanning display system using a servo feedback control and an off-screen optical sensing unit.

FIG. 11 shows an example of a fluorescent screen having peripheral reference mark regions that include servo reference marks that produce feedback light for various servo control functions.

FIG. 12 shows a start of line reference mark in a peripheral reference mark region to provide a reference for the beginning of the active fluorescent area on the screen.

FIG. 13 shows an example of a vertical beam position reference mark for the screen in FIG. 11.

FIGS. 14A and 14B show a servo feedback control circuit and its operation in using the vertical beam position reference mark in FIG. 13 to control the vertical beam position on the screen.

FIGS. 15 and 16 show another example of a vertical beam position reference mark for the screen in FIG. 11 and a corresponding servo feedback control circuit.

FIG. 17 shows an example of a laser actuator that controls the vertical direction of the laser beam for the servo control of the vertical beam position on the screen.

FIG. 18 shows an example of a beam focus sensing mark for the screen in FIG. 11 to provide a servo feedback for controlling the beam focus on the screen.

FIG. 19 shows one implementation of the screen in FIG. 11 that includes various reference marks including a power sensing mark for monitoring the optical power of the excitation beam on the screen

FIGS. 20A, 20B, 20C and 20D illustrate an operation of the servo feedback control in scanning display system in FIG. 8 based on detecting a test pattern for red, green and blue colors.

FIG. 21 shows one example of a scanning display system with servo feedback control based on servo reference marks on the screen and a temporal variation on the timing of the optical pulses in the excitation beam.

FIGS. 22, 23 and 24 show examples of fluorescent screens having servo reference marks that produce feedback light for the servo control.

FIG. 25 shows timing of optical pulses and beam positions on a fluorescent screen with fluorescent stripes.

FIGS. 26A, 26B and 26C illustrate operations of servo reference marks on stripe dividers in a fluorescent screen when the pulse is turned on at different beam positions along the horizontal scan direction perpendicular to the fluorescent stripes.

FIG. 27 shows spatial dependency of reflected excitation signals by servo reference marks on stripe dividers in a fluorescent screen.

FIG. 28 illustrates three regions within a subpixel that have three different power levels for the reflected excitation signals, where servo reference marks are formed on stripe dividers.

FIGS. 29, 30, 31 and 32 illustrate operations of the servo reference marks formed on stripe dividers in response to a periodic temporal delay signal on the timing of the optical pulses in the excitation beam.

FIG. 33 illustrates generation of error signals from the reflected signals from the servo reference marks on stripe dividers based on the periodic temporal delay signal on the timing of the optical pulses in the excitation beam shown in FIGS. 20, 30, 31 and 32.

FIGS. 34, 35 and 36 illustrate examples of calibrating a fluorescent screen by scanning the screen in a CW mode to obtain measurements of a detected reflected feedback light as a function of the scan time for a portion of one horizontal scan, the respective output of the peak detector and the sampling clock signal.

FIG. 37 illustrates scanning of the vertical scanner (e.g., the galvo mirror) in the scanning display shown in FIG. 5.

FIGS. 38, 39A and 39B illustrates an effect of a pyramidal error of the polygon scanner on the beam position on the screen.

FIG. 40 illustrates a dithering operation of the vertical scanner in the scanning display in FIG. 5.

FIGS. 41 and 42 illustrate use of vertical reference marks in a peripheral region of the screen to detect pyramidal errors of facets of the polygon scanner in a scanning display system.

FIG. 43 shows an example of a scanning beam display system that implements a pyramidal error monitor mechanism and a pyramidal error correction mechanism.

FIG. 44 shows correction of pyramidal errors in display one video frame in an example system based on the design in FIG. 43.

FIG. 45 illustrates an example of a servo detection design for a servo feedback control where three optical detectors are used to collect and detector light of three different colors from the fluorescent screen.

FIGS. 46 and 47 illustrate a use of a differential signal based on a difference in two detectors in FIG. 45 to provide static servo feedback signal for correcting a timing error in laser pulses when the screen does not display images, e.g., during the power-on stage of the display system.

FIG. 48 illustrates generation of dynamic servo control signals during normal operation of the display system.

## Detailed Description

Examples of scanning-beam display systems described in this application use a vertical scanning mirror and a rotating polygon mirror to provide the 2-dimensional scanning of one or more scanning beams on the screen to form images. A beam may be first directed to the vertical scanning mirror and then to the horizontal polygon mirror or in a reverse order. In operation, in tracing a horizontal line by scanning the polygon scanner, the vertical scanning mirror operates to displace the horizontal lines vertically. The vertical scanning mirror can be implemented by, e.g., using a mirror engaged to a galvanometer as the vertical scanner.

Different mirror facets on the polygon mirror may not be exactly at the same orientation with respect to the rotation axis of the polygon scanner (e.g., the vertical direction) and thus different facets may direct the same beam at different vertical directions. This deviation from one facet to another facet is known as the pyramidal error and can cause errors in vertical positions of different horizontal lines scanned by different facets of the polygon scanner. This pyramidal error can degrade the image quality on the screen. When a polygon is free of the pyramidal error, multiple horizontal lines on the screen scanned by different facets are equally spaced if the vertical scanning mirror operates at a constant scanning speed in the vertical direction. If the polygon scanner, however, has the pyramidal error, the horizontal lines on the screen from different facets are not equally spaced when the vertical scanner operates at a constant scanning speed in the vertical direction. The variation in the line spacing between two adjacent horizontal scan lines depends on the difference in orientations of the respective adjacent facets of the polygon scanner. Such uneven line spacing can distort the displayed images, and degrade the image quality such as colors, resolution, and other quality factors of the images displayed on the screen.

A polygon scanner can be designed and manufactured with a high precision to minimize the pyramidal error. Polygons with low pyramidal errors, however, can be expensive. To reduce the cost, a pyramidal error correction mechanism can be implemented in such a system to correct the known pyramidal errors of an installed polygon scanner. Implementation of this correction mechanism allows the use of relatively inexpensive polygons with pyramidal errors without compromising the display performance. In addition, the orientations of facets of a polygon scanner may change with time due to various factors, such as a change in temperature and other environmental factors (e.g., humidity), aging of the materials used in a polygon scanner over time, and others. Furthermore, a polygon scanner in a system may be replaced by a different polygon scanner due to malfunction or failure of the original polygon and such replacement can change the pyramidal errors because two different polygons tend to have different pyramidal errors. Hence, to maintain a high image quality in presence of variations of pyramidal errors, the pyramidal error correction mechanism can be designed to provide adjustable corrections to the pyramidal errors as the pyramidal errors of facets change.

This application describes examples of techniques and correction mechanisms for pyramidal error correction and other aspects of scanning-beam displays. The described techniques and correction mechanisms for pyramidal error correction can be implemented in scanning-beam displays with both "passive" screens and active screens. A passive screen does not emit light but makes light of the one or more scanning beams visible to a viewer by one or a combination of mechanisms, such as optical reflection, optical diffusion, optical scattering and optical diffraction. For example, a passive screen can reflect or scatter received scanning beam(s) to show images. An active screen emits light by absorbing the one or more scanning beams and the emitted light forms part of or all of the light that forms the displayed images. Such an active screen may include one or more fluorescent materials to emit light under optical excitation of the one or more scanning beams received by the screen to produce images. Screens with phosphor materials under excitation of one or more scanning excitation laser beams are described here as specific implementation examples of optically excited fluorescent materials in various system.

The following sections first describe examples of scanning beam display systems and devices that use fluorescent screens with fluorescent materials to emit light under optical excitation to produce images and then describe techniques and mechanisms for pyramidal error correction used in scanning-beam display systems using either passive screens or active screens.

Scanning-beam display systems using fluorescent screens can include laser vector scanner display devices and laser video display devices that use laser excitable fluorescent screens to produce images by absorbing excitation laser light and emitting colored light. Various examples of screen designs with fluorescent materials are described. Screens with phosphor materials under excitation of one or more scanning excitation laser beams are described in detail and are used as specific implementation examples of optically excited fluorescent materials in various system and device examples in this application. In one implementation, for example, three different color phosphors that are optically excitable by the laser beam to respectively produce light in red, green, and blue colors suitable for forming color images can be formed on the screen as repetitive red, green and blue phosphor stripes in parallel. Various examples described in this application use screens with parallel color phosphor stripes for emitting light in red, green, and blue to illustrate various features of the laser-based displays. Phosphor materials are one type of fluorescent materials. Various described systems, devices and features in the examples that use phosphors as the fluorescent materials are applicable to displays with screens made of other optically excitable, light-emitting, non-phosphor fluorescent materials.

For example, quantum dot materials emit light under proper optical excitation and thus can be used as the fluorescent materials for systems and devices in this application. More specifically, semiconductor compounds such as, among others, CdSe and PbS, can be fabricated in form of particles with a diameter on the order of the exciton Bohr radius of the compounds as quantum dot materials to emit light. To produce light of different colors, different quantum dot materials with different energy band gap structures may be used to emit different colors under the same excitation light. Some quantum dots are between 2 and 10 nanometers in size and include approximately tens of atoms such between 10 to 50 atoms. Quantum dots may be dispersed and mixed in various materials to form liquid solutions, powders, jelly-like matrix materials and solids (e.g., solid solutions). Quantum dot films or film stripes may be formed on a substrate as a screen for a system or device in this application. In one implementation, for example, three different quantum dot materials can be designed and engineered to be optically excited by the scanning laser beam as the optical pump to produce light in red, green, and blue colors suitable for forming color images. Such quantum dots may be formed on the screen as pixel dots arranged in parallel lines (e.g., repetitive sequential red pixel dot line, green pixel dot line and blue pixel dot line).

Some implementations of laser-based display techniques and systems described here use at least one scanning laser beam to excite color light-emitting materials deposited on a screen to produce color images. The scanning laser beam is modulated to carry images in red, green and blue colors or in other visible colors and is controlled in such a way that the laser beam excites the color light-emitting materials in red, green and blue colors with images in red, green and blue colors, respectively. Hence, the scanning laser beam carries the images but does not directly produce the visible light seen by a viewer. Instead, the color light-emitting fluorescent materials on the screen absorb the energy of the scanning laser beam and emit visible light in red, green and blue or other colors to generate actual color images seen by the viewer.

Laser excitation of the fluorescent materials using one or more laser beams with energy sufficient to cause the fluorescent materials to emit light or to luminesce is one of various forms of optical excitation. In other implementations, the optical excitation may be generated by a non-laser light source that is sufficiently energetic to excite the fluorescent materials used in the screen. Examples of non-laser excitation light sources include various light-emitting diodes (LEDs), light lamps and other light sources that produce light at a wavelength or a spectral band to excite a fluorescent material that converts the light of a higher energy into light of lower energy in the visible range. The excitation optical beam that excites a fluorescent material on the screen can be at a frequency or in a spectral range that is higher in frequency than the frequency of the emitted visible light by the fluorescent material. Accordingly, the excitation optical beam may be in the violet spectral range and the ultra violet (UV) spectral range, e.g., wavelengths under 420 nm. In the examples described below, UV light or a UV laser beam is used as an example of the excitation light for a phosphor material or other fluorescent material and may be light at other wavelength.

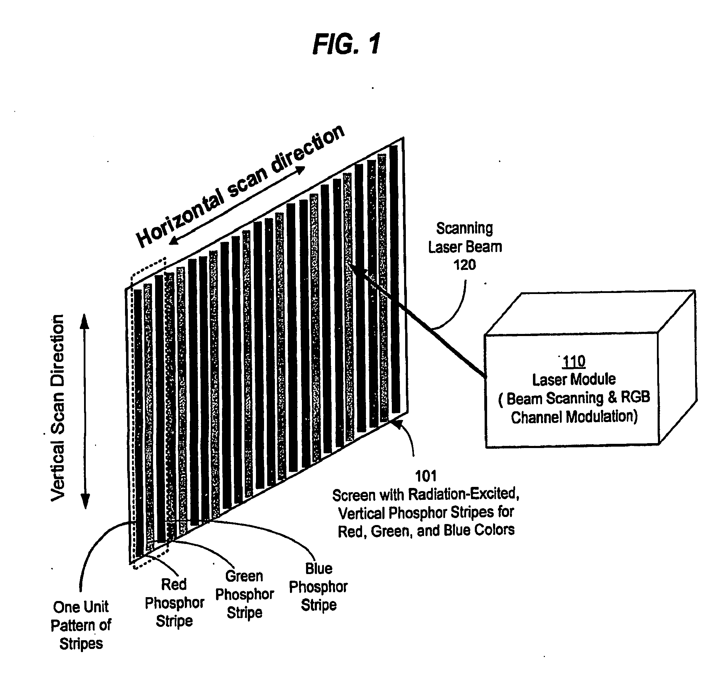

FIG. 1 illustrates an example of a laser-based display system using a screen having color phosphor stripes. Alternatively, color phosphor dots may also be used to define the image pixels on the screen. The system includes a laser module 110 to produce and project at least one scanning laser beam 120 onto a screen 101. The screen 101 has parallel color phosphor stripes in the vertical direction where red phosphor absorbs the laser light to emit light in red, green phosphor absorbs the laser light to emit light in green and blue phosphor absorbs the laser light to emit light in blue. Adjacent three color phosphor stripes are in three different colors. One particular spatial color sequence of the stripes is shown in FIG. 1 as red, green and blue. Other color sequences may also be used. The laser beam 120 is at the wavelength within the optical absorption bandwidth of the color phosphors and is usually at a wavelength shorter than the visible blue and the green and red colors for the color images. As an example, the color phosphors may be phosphors that absorb UV light in the spectral range from about 380 nm to about 420 nm to produce desired red, green and blue light. The laser module 110 can include one or more lasers such as UV diode lasers to produce the beam 120, a beam scanning mechanism to scan the beam 120 horizontally and vertically to render one image frame at a time on the screen 101, and a signal modulation mechanism to modulate the beam 120 to carry the information for image channels for red, green and blue colors. Such display systems may be configured as rear scanner systems where the viewer and the laser module 110 are on the opposite sides of the screen 101. Alternatively, such display systems may be configured as front scanner systems where the viewer and laser module 110 are on the same side of the screen 101.

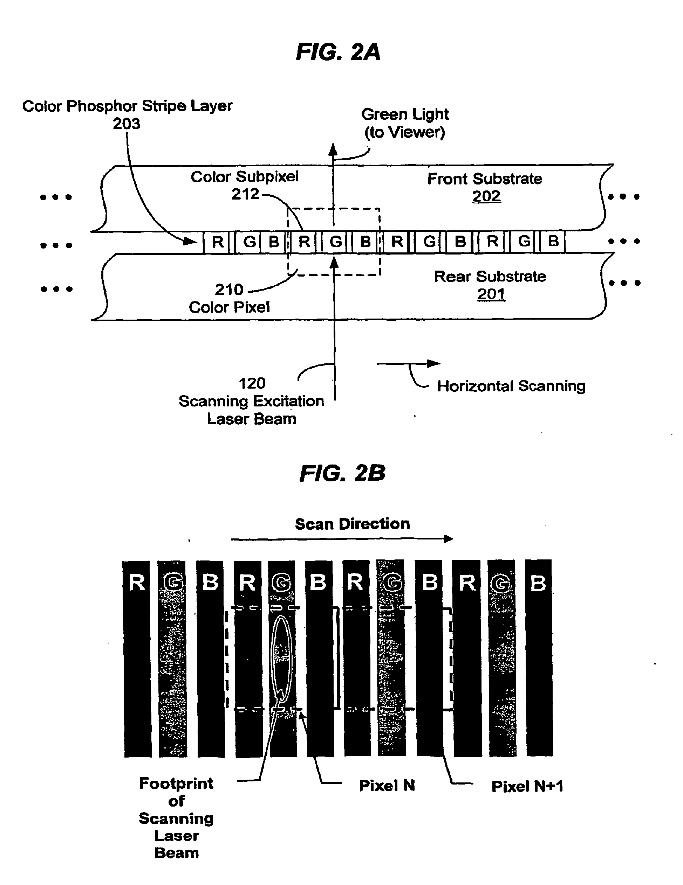

FIG. 2A shows an exemplary design of the screen 101 in FIG. 1. The screen 101 in this particular example includes a rear substrate 201 which is transparent to the scanning laser beam 120 and faces the laser module 110 to receive the scanning laser beam 120. A second front substrate 202 is fixed relative to the rear substrate 201 and faces the viewer so that the fluorescent light transmits through the substrate 202 towards the viewer. A color phosphor stripe layer 203 is placed between the substrates 201 and 202 and includes phosphor stripes. The color phosphor stripes for emitting red, green and blue colors are represented by "R", "G" and "B," respectively. The front substrate 202 is transparent to the red, green and blue colors emitted by the phosphor stripes. The substrates 201 and 202 may be made of various materials, including glass or plastic panels. Each color pixel includes portions of three adjacent color phosphor stripes in the horizontal direction and its vertical dimension is defined by the beam spread of the laser beam 120 in the vertical direction. As such, each color pixel includes three subpixels of three different colors (e.g., the red, green and blue). The laser module 110 scans the laser beam 120 one horizontal line at a time, e.g., from left to right and from top to bottom to fill the screen 101. The laser module 110 is fixed in position relative to the screen 101 so that the scanning of the beam 120 can be controlled in a predetermined manner to ensure proper alignment between the laser beam 120 and each pixel position on the screen 101.

In FIG. 2A, the scanning laser beam 120 is directed at the green phosphor stripe within a pixel to produce green light for that pixel. FIG. 2B further shows the operation of the screen 101 in a view along the direction perpendicular to the surface of the screen 101. Since each color stripe is longitudinal in shape, the cross section of the beam 120 may be shaped to be elongated along the direction of the stripe to maximize the fill factor of the beam within each color stripe for a pixel. This may be achieved by using a beam shaping optical element in the laser module 110. A laser source that is used to produce a scanning laser beam that excites a phosphor material on the screen may be a single mode laser or a multimode laser. The laser may also be a single mode along the direction perpendicular to the elongated direction phosphor stripes to have a small beam spread that is confined by the width of each phosphor stripe. Along the elongated direction of the phosphor stripes, this laser beam may have multiple modes to spread over a larger area than the beam spread in the direction across the phosphor stripe. This use of a laser beam with a single mode in one direction to have a small beam footprint on the screen and multiple modes in the perpendicular direction to have a larger footprint on the screen allows the beam to be shaped to fit the elongated color subpixel on the screen and to provide sufficient laser power in the beam via the multimodes to ensure sufficient brightness of the screen.

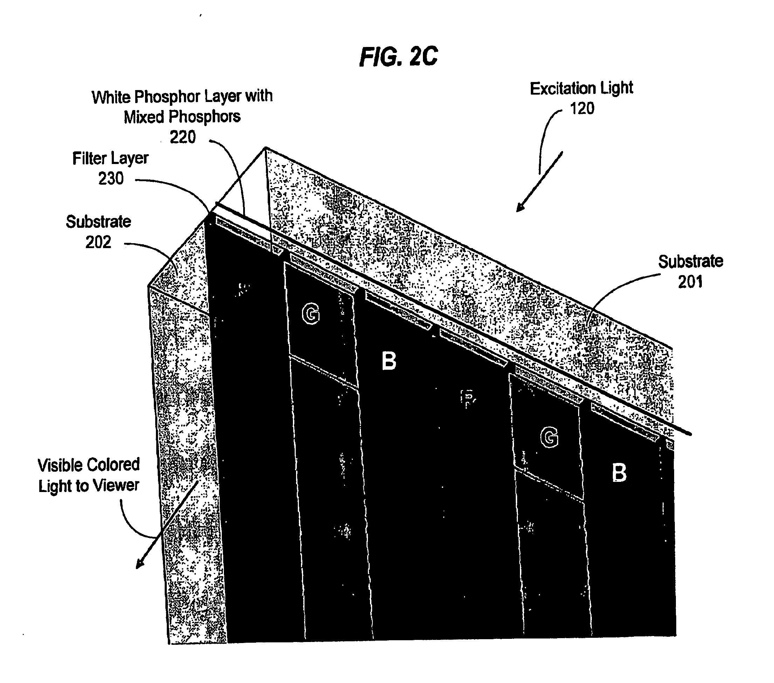

Alternatively, FIG. 2C illustrates an example of a fluorescent screen design that has a contiguous and uniform layer 220 of mixed phosphors. This mixed phosphor layer 220 is designed and constructed to emit white light under optical excitation of the excitation light 120. The mixed phosphors in the mixed phosphor layer 220 can be designed in various ways and a number of compositions for the mixed phosphors that emit white light are known and documented. Notably, a layer 210 of color filters, such as stripes of red-transmitting, green-transmitting and blue-transmitting filters, is placed on the viewer side of the mixed phosphor layer 220 to filter the white light and to produce colored output light. The layers 210 and 220 can be sandwiched between substrates 201 and 202. The color filters may be implemented in various configurations, including in designs similar to the color filters used in color LCD panels. In each color filter region e.g., a red-transmitting filter, the filter transmits the red light and absorbs light of other colors including green light and blue light. Each filter in the layer 210 may be a multi-layer structure that effectuates a band-pass interference filter with a desired transmission band. Various designs and techniques may be used for designing and constructing such filters. U.S. Patent No. 5,587,818 entitled "Three color LCD with a black matrix and red and/or blue filters on one substrate and with green filters and red and/or blue filters on the opposite substrate," and U.S. Patent No. 5,684,552 entitled "Color liquid crystal display having a color filter composed of multilayer thin films," for example, describe red, green and blue filters that may be used in the screen design in FIG. 2C. Hence, a fluorescent stripe in the fluorescent screen 101 in various examples described in this application is a fluorescent stripe that emits a designated color under optical excitation and can be either a fluorescent stripe formed of a particular fluorescent material that emits the designed color in FIG. 2A or a combination of a stripe color filter and a white fluorescent layer in FIG. 2C.

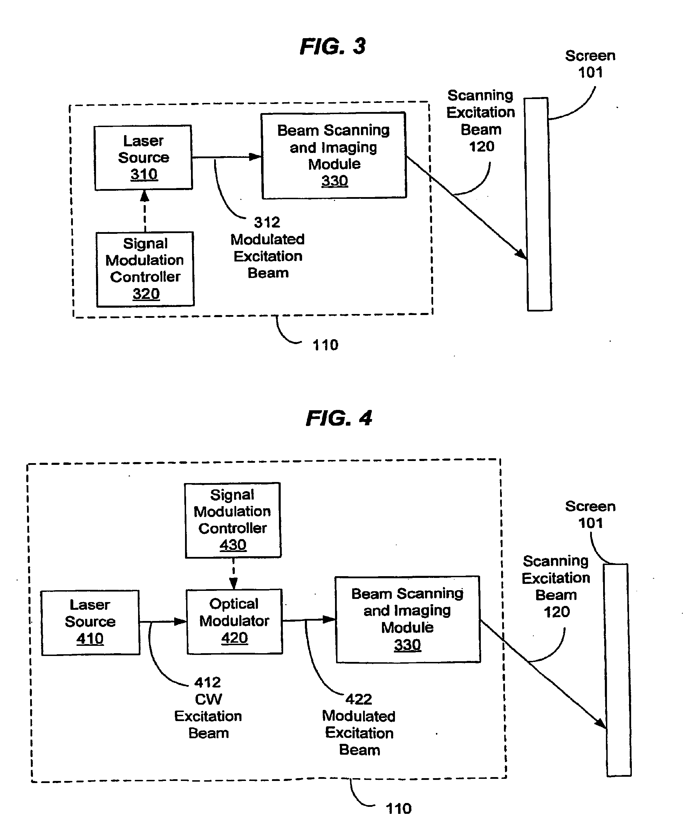

The optical modulation in the laser module 110 in FIG. 1 can be implemented in two different configurations. FIG. 3 shows an implementation of the display in FIG. 1 where a laser source 310 such as a diode laser is directly modulated to produce a modulated excitation beam 312 that carries the image signals in red, green and blue. The laser module 110 in this implementation includes a signal modulation controller 320 which modulates the laser source 310 directly. For example, the signal modulation controller 320 can control the driving current of a laser diode as the laser source 310. A beam scanning and imaging module 330 then scans and projects the modulated excitation beam 312 as the scanning excitation beam 120 to the screen 101 to excite the color phosphors.

Alternatively, FIG. 4 shows another implementation of the display in FIG. 1 where a laser source 410 is used to generate a CW unmodulated excitation laser beam 412 and an optical modulator 420 is used to modulate the CW excitation laser beam 412 with the image signals in red, green and blue and to produce a modulated excitation beam 422. A signal modulation controller 430 is used to control the optical modulator 420. For example, an acousto-optic modulator or an electro-optic modulator may be used as the optical modulator 420. The modulated beam 422 from the optical modulator 420 is then scanned and projected onto the screen 101 by the beam scanning and imaging module 330 as the scanning excitation beam 120.

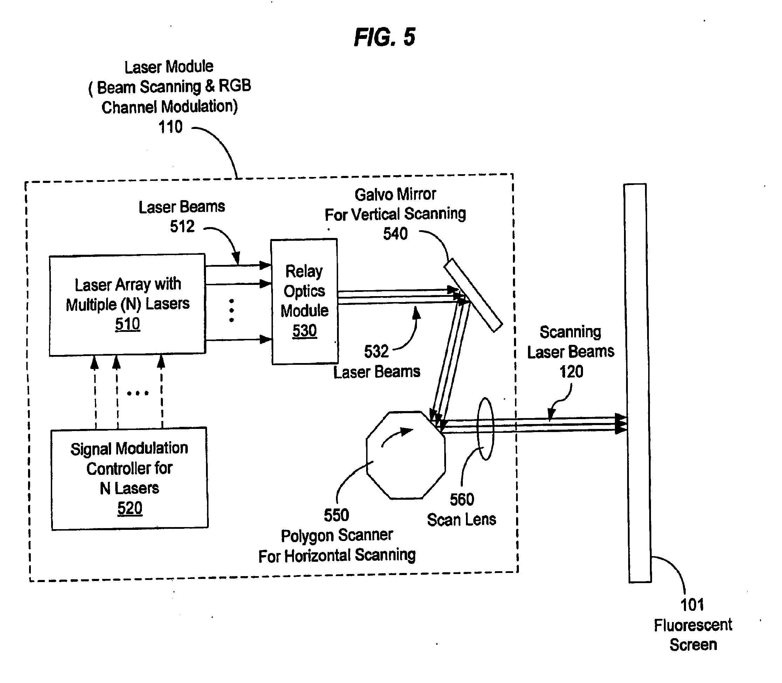

FIG. 5 shows an example implementation of the laser module 110 in FIG. 1. A laser array 510 with multiple lasers is used to generate multiple laser beams 512 to simultaneously scan the screen 101 for enhanced display brightness. The laser array 510 can be implemented in various configurations, such as discrete laser diodes on separate chips arranged in an array and a monolithic laser array chip having integrated laser diodes arranged in an array. A signal modulation controller 520 is provided to control and modulate the lasers in the laser array 510 so that the laser beams 512 are modulated to carry the image to be displayed on the screen 101. The signal modulation controller 520 can include a digital image processor which generate the digital image signals for the three different color channels and laser driver circuits that produce laser control signals carrying the digital image signals. The laser control signals are then applied to modulate the lasers in the laser array 510, e.g., the currents for laser diodes.

The beam scanning is achieved by using a scanning mirror 540 such as a galvo mirror for the vertical scanning and a multi-facet polygon scanner 550 for the horizontal scanning. A scan lens 560 is used to project the scanning beams form the polygon scanner 550 onto the screen 101. The scan lens 560 is designed to image each laser in the laser array 510 onto the screen 101. Each of the different reflective facets of the polygon scanner 550 simultaneously scans N horizontal lines where N is the number of lasers. In the illustrated example, the laser beams are first directed to the galvo mirror 540 and then from the galvo mirror 540 to the polygon scanner 550. The output scanning beams 120 are then projected onto the screen 101. A relay optics module 530 is placed in the optical path of the laser beams 512 to modify the spatial property of the laser beams 512 and to produce a closely packed bundle of beams 532 for scanning by the galvo mirror 540 and the polygon scanner 550 as the scanning beams 520 projected onto the screen 101 to excite the phosphors and to generate the images by colored light emitted by the phosphors.

The laser beams 120 are scanned spatially across the screen 101 to hit different color pixels at different times. Accordingly, each of the modulated beams 120 carries the image signals for the red, green and blue colors for each pixel at different times and for different pixels at different times. Hence, the beams 120 are coded with image information for different pixels at different times by the signal modulation controller 520. The beam scanning thus maps the timely coded image signals in the beams 120 onto the spatial pixels on the screen 101.

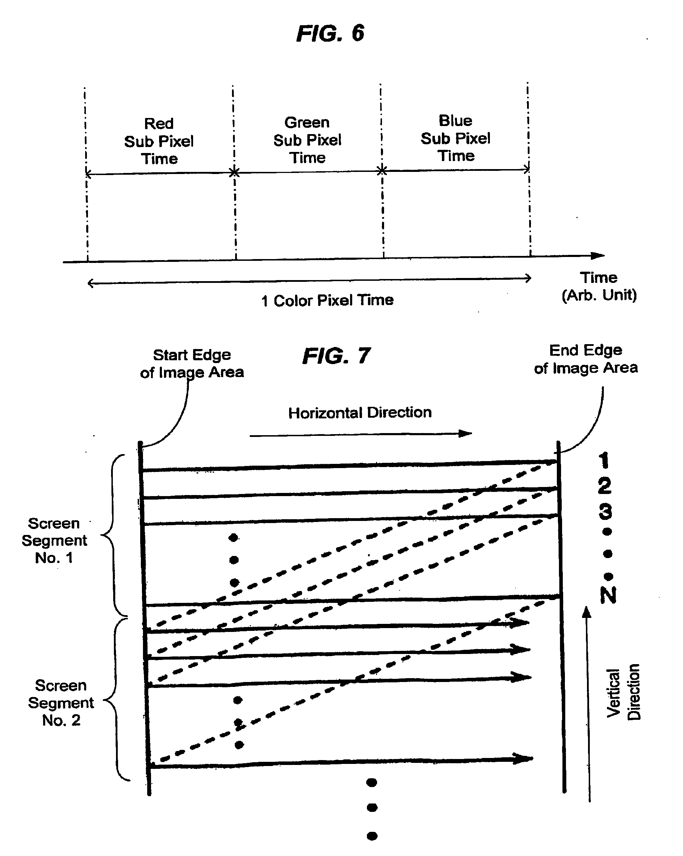

For example, FIG. 6 shows one example for time division on each modulated laser beam 120 where each color pixel time is equally divided into three sequential time slots for the three color channels. The modulation of the beam 120 may use pulse modulation techniques, such as pulse width modulation, pulse amplitude modulation or a combination of pulse width modulation and pulse amplitude modulation, to produce desired grey scales in each color, proper color combination in each pixel, and desired image brightness.

The beams 120 on the screen 101 are located at different and adjacent vertical positions with two adjacent beams being spaced from each other on the screen 101 by one horizontal line of the screen 101 along the vertical direction. For a given position of the galvo mirror 540 and a given position of the .polygon scanner 550, the beams 120 may not be aligned with each other along the vertical direction on the screen 101 and may be at different positions on the screen 101 along the horizontal direction. The beams 120 can cover one portion of the screen 101. At a fixed angular position of the galvo mirror 540, the spinning of the polygon scanner 550 causes the beams 120 from N lasers in the laser array 510 to scan one screen segment of N adjacent horizontal lines on the screen 101. At the end of each horizontal scan, the galvo mirror 540 is adjusted to a different fixed angular position so that the vertical positions of all N beams 120 are adjusted to scan the next adjacent screen segment of N horizontal lines. This process iterates until the entire screen 101 is scanned to produce a full screen display.

FIG. 7 illustrates the above simultaneous scanning of one screen segment with multiple scanning laser beams 120 at a time. Visually, the beams 120 behaves like a paint brush to "paint" one thick horizontal stroke across the screen 101 at a time to cover one screen segment between the start edge and the end edge of the image area of the screen 101 and then subsequently to "paint" another thick horizontal stroke to cover an adjacent vertically shifted screen segment. Assuming the laser array 310 has 36 lasers, a 1080-line progressive scan of the screen 101 would require scanning 30 vertical screen segments for a full scan. Hence, this configuration in an effect divides the screen 101 along the vertical direction into multiple screen segments so that the N scanning beams scan one screen segment at a time with each scanning beam scanning only one line in the screen segment and different beams scanning different sequential lines in that screen segment. After one screen segment is scanned, the N scanning beams are moved at the same time to scan the next adjacent screen segment.

In the above design with multiple laser beams, each scanning laser beam 120 scans only a number of lines across the entire screen along the vertical direction that is equal to the number of screen segments. Hence, the polygon scanner 550 for the horizontal scanning can operate at slower speeds than scanning speeds required for a single beam design where the single beam scans every line of the entire screen. For a given number of total horizontal lines on the screen (e.g., 1080 lines in HDTV), the number of screen segments decreases as the number of the lasers increases. Hence, with 36 lasers, the galvo mirror and the polygon scanner scan 30 lines per frame while a total of 108 lines per frame are scanned when there are only 10 lasers. Therefore, the use of the multiple lasers can increase the image brightness which is approximately proportional to the number of lasers used, and, at the same time, can also advantageously reduce the response speeds of the scanning system.

A scanning display system described in this specification can be calibrated during the manufacture process so that the laser beam on-off timing and position of the laser beam relative to the fluorescent stripes in the screen 101 are known and are controlled within a permissible tolerance margin in order for the system to properly operate with specified image quality. However, the screen 101 and components in the laser module 101 of the system can change over time due to various factors, such as scanning device jitter, changes in temperature or humidity, changes in orientation of the system relative to gravity, settling due to vibration, aging and others. Such changes can affect the positioning of the laser source relative to the screen 101 over time and thus the factory-set alignment can be altered due to such changes. Notably, such changes can produce visible and, often undesirable, effects on the displayed images. For example, a laser pulse in the scanning excitation beam 120 may hit a subpixel that is adjacent to an intended target subpixel for that laser pulse due to a misalignment of the scanning beam 120 relative to the screen along the horizontal scanning direction. When this occurs, the coloring of the displayed image is changed from the intended coloring of the image. Hence, a red flag in the intended image may be displayed as a green flag on the screen. For another example, a laser pulse in the scanning excitation beam 120 may hit both the intended target subpixel and an adjacent subpixel next to the intended target subpixel due to a misalignment of the scanning beam 120 relative to the screen along the horizontal scanning direction. When this occurs, the coloring of the displayed image is changed from the intended coloring of the image and the image resolution deteriorates. The visible effects of these changes can increase as the screen display resolution increases because a smaller pixel means a smaller tolerance for a change in position. In addition, as the size of the screen increases, the effect of a change that can affect the alignment can be more pronounced because a large moment arm associated with a large screen means that an angular error can lead to a large position error on the screen. For example, if the laser beam position on the screen for a known beam angle changes over time, the result is a color shift in the image. This effect can be noticeable and thus undesirable to the viewer.

Implementations of various alignment mechanisms are provided in this specification to maintain proper alignment of the scanning beam 120 on the desired sub-pixel to achieved desired image quality. These alignment mechanisms include reference marks on the screen, both in the fluorescent area and in one or more peripheral area outside the fluorescent area, to provide feedback light that is caused by the excitation beam 120 and represents the position and other properties of the scanning beam on the screen. The feedback light can be measured by using one or more optical servo sensors to produce a feedback servo signal. A servo control in the laser module 110 processes this feedback servo signal to extract the information on the beam positioning and other properties of the beam on the screen and, in response, adjust the direction and other properties of the scanning beam 120 to ensure the proper operation of the display system.

For example, a feedback servo control system can be provided to use peripheral servo reference marks positioned outside the display area unobservable by the viewer to provide control over various beam properties, such as the horizontal positioning along the horizontal scanning direction perpendicular to the fluorescent stripes, the vertical positioning along the longitudinal direction of the fluorescent stripes, the beam focusing on the screen for control the image sharpness, and the beam power on the screen for control the image brightness. For another example, a screen calibration procedure can be performed at the startup of the display system to measure the beam position information as a calibration map so having the exact positions of sub-pixels on the screen in the time domain. This calibration map is then used by the laser module 110 to control the timing and positioning of the scanning beam 120 to achieve the desired color purity. For yet another example, a dynamic servo control system can be provided to regularly update the calibration map during the normal operation of the display system by using servo reference marks in the fluorescent area of the screen to provide the feedback light without affecting the viewing experience of a viewer.

The following sections first describe examples of screen detection techniques and servo feedback implementations..

Two optical detection methods can be used to detect the location of a beam relative to a target feature on the screen, which may be a subpixel or a selected position on the screen such as the beginning edge of the fluorescent area. In the first optical detection method, the light impinging on a servo reference mark for the target feature can be guided as the feedback light through air or other medium to reach one or more respective optical servo sensing detectors which convert the optical light levels of the feedback light into electrical amplitude signals. The second optical detection method uses one or more optical servo sensing detectors placed in air to collect diffused light from a servo reference mark on the screen as the feedback light for the servo control. In detecting diffused light, an optical servo sensing detector can be placed behind a collection lens such as a hemispherical lens. Radiation detectors can be used to detect feedback light from diffusive type targets, e.g., targets that allow the light to diffuse in a wide angular spectrum. An example of a diffuse target is a rough surface such as a surface with a white paint. Both techniques can be used with reflective or transmissive servo reference marks.

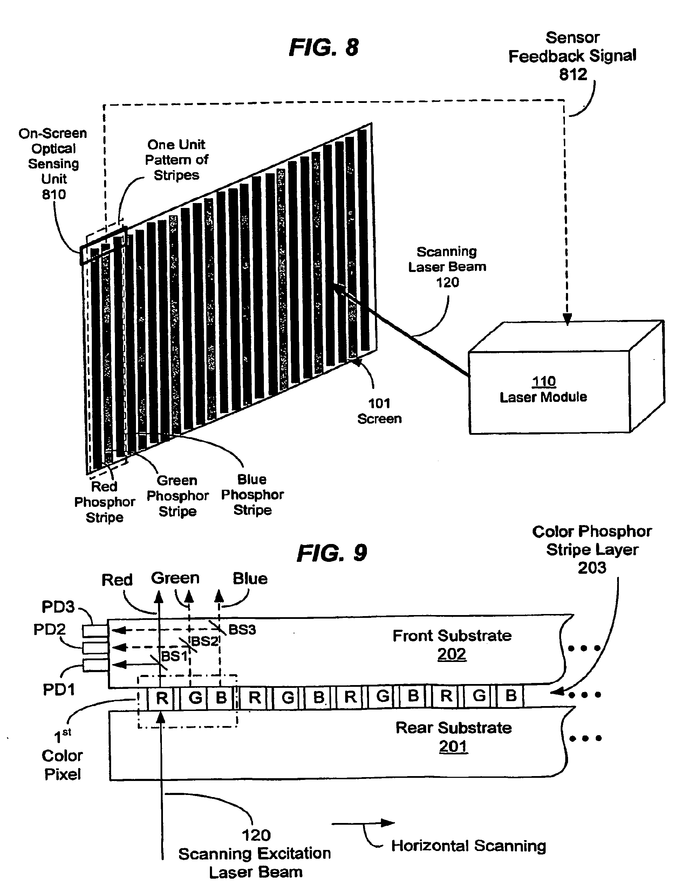

FIG. 8 shows an exemplary scanning beam display system with an on-screen optical sensing unit and a feedback control to allow the laser module 110 to correct the horizontal misalignment. The screen 101 includes an on-screen optical sensing unit 810 for optically measuring the responses of color subpixels on the screen 101 to produce a sensor feedback signal 812. The laser module 110 has a feedback control to allow the laser module 110 to correct the misalignment in response to the feedback signal 812 from the screen 101.

FIG. 9 shows one example of the on-screen optical sensing unit 810 which includes three optical "direct" detectors PD1, PD2 and PD3 that are respectively configured to respond to red, green and blue light. In this specific example, three beam splitters BS1, BS2 and BS3 are placed behind red, green and blue subpixels of a color pixel, respectively and are used to split small fractions of red, green, and blue light beams emitted from the color sub pixels of the color pixel to the three detectors PD1, PD2 and PD3 formed on the front substrate of the screen 101. Alternatively, the above red, green and blue optical detectors PD1, PD2 and PD3 may also be positioned on the screen 101 to allow each detector to receive light from multiple pixels on the screen 101. Each optical detector is only responsive to its designated color to produce a corresponding detector output and does not produce a detector output when receiving light of other colors. Hence, the red optical detector PD1 detects only the red light and is not responsive to green and blue light; the green optical detector PD 2 detects only green light and is not responsive to red and blue light; and the blue optical detector PD3 detects only the blue light and is not responsive to red and green light. This color selective response of the one-screen optical sensing unit 810 may be achieved by, e.g., using red, green and blue optical bandpass filters in front of the optical detectors PD1, PD2 and PD3, respectively, when each detector is exposed to light of different colors from the screen 101, or placing the optical detectors PD1, PD2 and PD3 in a way that only light of a designated color can enter a respective optical detector for the designated color. Assume the adjacent color phosphor stripes are arranged in the order of red, green and blue from the left to the right in the horizontal direction of the screen 101. Consider a situation where a red image is generated by the display processor in the laser module 110. When the horizontal alignment is out of order or misaligned by one sub pixel, the red detector does not respond while either the blue detector or the green detector produces an output.

Such detector outputs can be processed by the feedback control in the laser module 110 to detect the horizontal misalignment and, accordingly, can adjust the timing of the optical pulses in the scanning beam to correct misalignment.

Alternative to the beam splitter in Fig. 9 a light guide or light pipe can be used. Light guides are structures that guide a portion of the light to an optical servo sensing detector. A light guide can be formed on the screen to direct feedback light via total internal reflection (TIR) in the light guide to the detector.

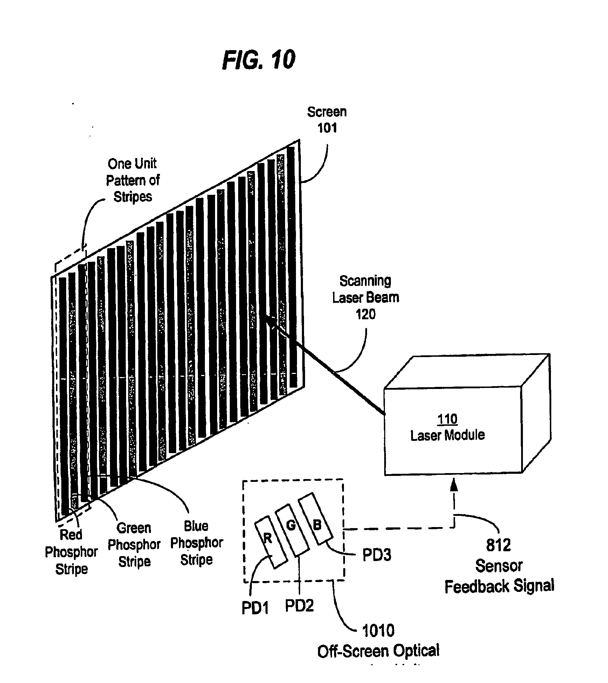

FIG. 10 shows another scanning beam display system with a servo feedback control using a radiation style detector. In this system, an off-screen optical sensing unit 1010 is used to detect the red, green and blue light emitted from the screen. Three optical detectors PD1, PD2 and PD3 are provided in the sensing unit 1010 to detect the red, green and blue fluorescent light, respectively. Each optical detector is designed to receive light from a part of or the entire screen. A bandpass optical filter can be placed in front of each optical detector to select a designated color while rejecting light of other colors.

For the screen 101, additional alignment reference marks can be used to determine the relative position of the beam and the screen and other parameters of the excitation beam on the screen. For example, during a horizontal scan of the excitation beam 120 across the fluorescent stripes, a start of line mark can be provided for the system to determine the beginning of the active fluorescent display area of the screen 101 so that the signal modulation controller of the system can begin deliver optical pulses to the targeted pixels. An end of line mark can also be provided for the system to determine the end of the active fluorescent display area of the screen 101 during a horizontal scan. For another example, a vertical alignment referenced mark can be provided for the system to determine whether the beam 120 is pointed to a proper vertical location on the screen. Other examples for reference marks may be one or more reference marks for measuring the beam spot size on the screen and one or more reference marks on the screen to measure the optical power of the excitation beam 120. Such reference marks can be placed a region outside the active fluorescent area of the screen 101, e.g., in one or more peripheral regions of the active fluorescent screen area.

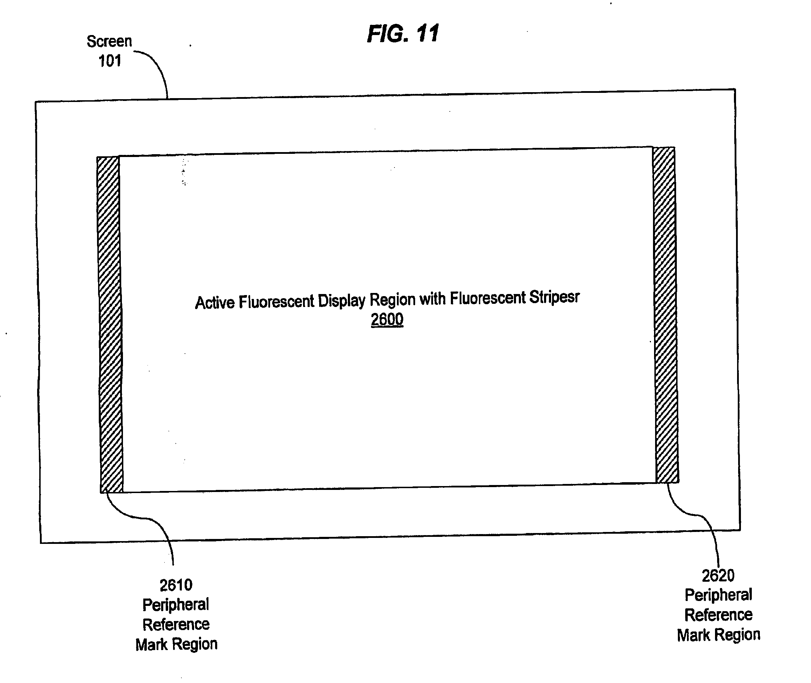

FIG. 11 illustrates one example of a fluorescent screen 101 having peripheral reference mark regions. The screen 101 includes a central active fluorescent area 2600 with parallel fluorescent stripes for displaying images, two stripe peripheral reference mark regions 2610 and 2620 that are parallel to the fluorescent stripes. Each peripheral reference mark region can be used to provide various reference marks for the screen 101. In some implementations, only the left peripheral reference mark region 2610 is provided without the second region 2620 when the horizontal scan across the fluorescent stripes is directed from the left to the right of the area 2600.

Such a peripheral reference mark region on the screen 101 allows the scanning display system to monitor certain operating parameters of the system. Notably, because a reference mark in the peripheral reference mark region is outside the active fluorescent display area 2600 of the screen 101, a corresponding servo feedback control function can be performed outside the duration during the display operation when the excitation beam is scanning through the active fluorescent display area 2600 to display image. Therefore, a dynamic servo operation can be implemented without interfering the display of the images to the viewer. In this regard, each scan can include a CW mode period when an excitation beam sans through the peripheral referenced mark region for the dynamic servo sensing and control and a display mode period when the modulation of the excitation beam is turned on to produce image-carrying optical pulses as the excitation beam sans through the active fluorescent display area 2600.

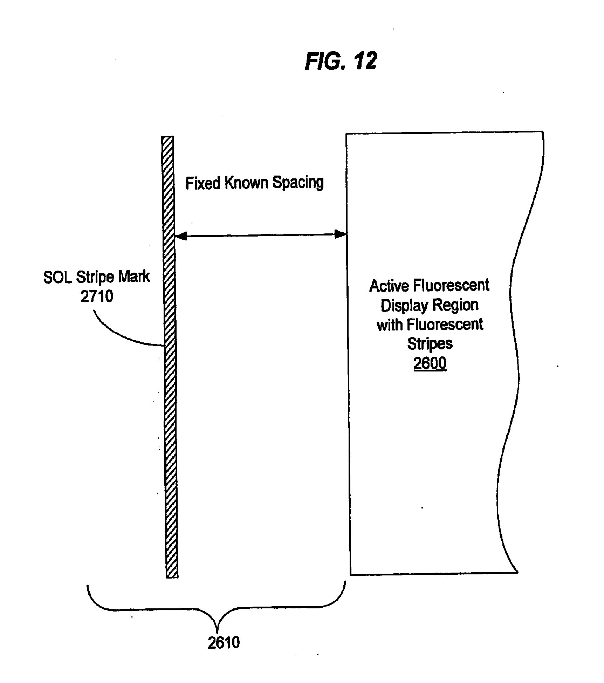

FIG. 12 shows an example of a start of line (SOL) reference mark 2710 in the left peripheral region 2610 in the screen 101. The SOL reference mark 2710 can be an optically reflective, diffusive or fluorescent stripe parallel to the fluorescent stripes in the active fluorescent region 2600 of the screen 101. The SOL reference mark 2710 is fixed at a position with a known distance from the first fluorescent stripe in the region 2600. SOL patterns may include multiple vertical lines with uniform or variable spacing. Multiple lines are selected for redundancy, increasing signal to noise, accuracy of position (time) measurement, and providing missing pulse detection.

In operation, the scanning excitation beam 120 is scanned from the left to the right in the screen 101 by first scanning through the peripheral reference mark region 2610 and then through the active fluorescent region 2600. When the beam 120 is in the peripheral reference mark region 2610, the signal modulation controller in the laser module 110 of the system sets the beam 120 in a CW mode without the modulated optical pulses that carry the image data. When the scanning excitation beam 120 scans through the SOL reference mark 2710, the light reflected, scattered or emitted by the SOL reference mark 2710 due to the illumination by the excitation beam 2710 can be measured at an SOL optical detector located near the SOL reference mark 2710. The presence of this signal indicates the location of the beam 120. The SOL optical detector can be fixed at a location in the region 2610 on the screen 101 or off the screen 101. Therefore, the SOL reference mark 2710 can be used to allow for periodic alignment adjustment during the lifetime of the system.

The laser beam is turned on continuously as a CW beam before the beam reaches the SOL mark 2710 in a scan. When the pulse from the SOL detected is detected, the laser can be controlled to operate in the image mode and carry optical pulses with imaging data. The system then recalls a previously measured value for the delay from SOL pulse to beginning of the image area. This process can be implemented in each horizontal scan to ensure that each line starts the image area properly aligned to the color stripes. The correction is made prior to painting the image for that line, so there is no lag in correction allowing for both high frequency (up to line scan rate) and low frequency errors to be corrected.

Physical implementation of the SOL sensor may be a reflective (specular or diffuse) pattern with an area detector (s), an aperture mask with light pipe to collect the transmitted light into a single detector or multiple detectors.

With reflective method, multiple lasers on and passing over reflective areas simultaneously may create self interference. A method to prevent this is to space the laser beams such that only one active beam passes over the reflective area at a time. It is likely that some reflection will come from the image area of the screen. To prevent this from interfering with the SOL sensor signal, the active laser beams may be spaced such that no other laser beams are active over any reflective area when the desired active laser beam is passing over the reflective SOL sensor area. The transmission method is not affected by reflections from the image area.

Similar to the SOL mark 2710, an end-of-line (EOL) reference mark can be implemented on the opposite side of the screen 101, e.g., in the peripheral reference mark region 2620 in FIG. 11. The SOL mark is used to ensure the proper alignment of the laser beam with the beginning of the image area. This does not ensure the proper alignment during the entire horizontal scan because the position errors can be present across the screen. Implementing the EOL reference mark and an end-of-line optical detector in the region 2620 can be used to provide a linear, two point correction of laser beam position across the image area.

When both SOL and EOL marks are implemented, the laser is turned on continuously in a continuous wave (CW) mode prior to reaching the EOL sensor area. Once the EOL signal is detected, the laser can be returned to image mode and timing (or scan speed) correction calculations are made based on the time difference between the SOL and EOL pulses. These corrections are applied to the next one or more lines. Multiple lines of SOL to EOL time measurements can be averaged to reduce noise.

In addition to control of the horizontal beam position along the scan direction perpendicular to the fluorescent stripes, the beam position along the vertical position parallel to the fluorescent stripes can also be monitored and controlled to ensure the image quality. Referring to FIG. 2B, each fluorescent stripe may not have any physical boundaries between two pixels along the vertical direction. This is different from the pixilation along the horizontal scan direction perpendicular to the fluorescent stripes. The pixel positions along the fluorescent stripes are controlled by the vertical beam position on the screen to ensure a constant and uniform vertical pixel positions without overlapping and gap between two different horizontal scan lines. Referring to the multi-beam scanning configuration in FIG. 7, when multiple excitation beams are used to simultaneously scan consecutive horizontal scan within one screen segment on the screen, the proper vertical alignment of the lasers to one another are important to ensure a uniform vertical spacing between two adjacent laser beams on the screen and to ensure a proper vertical alignment between two adjacent screen segments along the vertical direction. In addition, the vertical positioning information on the screen can be used to provide feedback to control the vertical scanner amplitude and measure the linearity of the vertical scanner.

Vertical position of each laser can be adjusted by using an actuator, a vertical scanner such as the galvo mirror 540 in FIG. 5, an adjustable lens in the optical path of each laser beam or a combination of these and other mechanisms. Vertical reference marks can be provided on the screen to allow for a vertical servo feedback from the screen to the laser module. One or more reflective, fluorescent or transmissive vertical reference marks can be provided adjacent to the image area of the screen 101 to measure the vertical position of each excitation beam 120. Referring to FIG. 11, such vertical reference marks can be placed in a peripheral reference mark region. One or more vertical mark optical detectors can be used to measure the reflected, fluorescent or transmitted light from a vertical reference mark when illuminated by the excitation beam 120. The output of each vertical mark optical detector is processed and the information on the beam vertical position is used to control an actuator to adjust the vertical beam position on the screen 101.

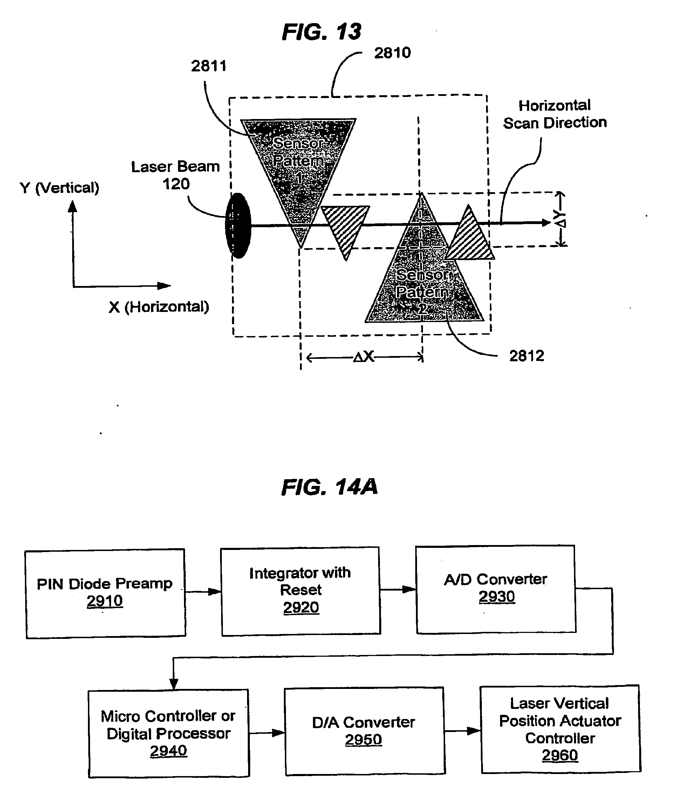

FIG. 13 shows an example of a vertical reference mark 2810. The mark 2810 includes is a pair of identical triangle reference marks 2811 and 2812 that are separated and spaced from each other in both vertical and horizontal directions to maintain an overlap along the horizontal direction. Each triangle reference mark 2811 or 2812 is oriented to create a variation in the area along the vertical direction so that the beam 120 partially overlaps with each mark when scanning through the mark along the horizontal direction. As the vertical position of the beam 120 changes, the overlapping area on the mark with the beam 120 changes in size. The relative positions of the two marks 2811 and 2812 defines a predetermined vertical beam position and the scanning beam along a horizontal line across this predetermined vertical position scans through the equal areas as indicated by the shadowed areas in the two marks 2811 and 2812. When the beam position is above this predetermined vertical beam position, the beam sees a bigger mark area in the first mark 2811 than the mark area in the second mark 2812 and this difference in the mark areas seen by the beam increases as the beam position moves further up along the vertical direction. Conversely, when the beam position is below this predetermined vertical beam position, the beam sees a bigger mark area in the second mark 2812 than the mark area in the first mark 2811 and this difference in the mark areas seen by the beam increases as the beam position moves further down along the vertical direction.

The feedback light from each triangle mark is integrated over the mark and the integrated signals of the two marks are compared to produce a differential signal. The sign of the differential signal indicated the direction of the offset from the predetermined vertical beam position and the magnitude of the differential signal indicates the amount of the offset. The excitation beam is at the proper vertical position when the integrated light from each triangle is equal, i.e., the differential signal is zero.

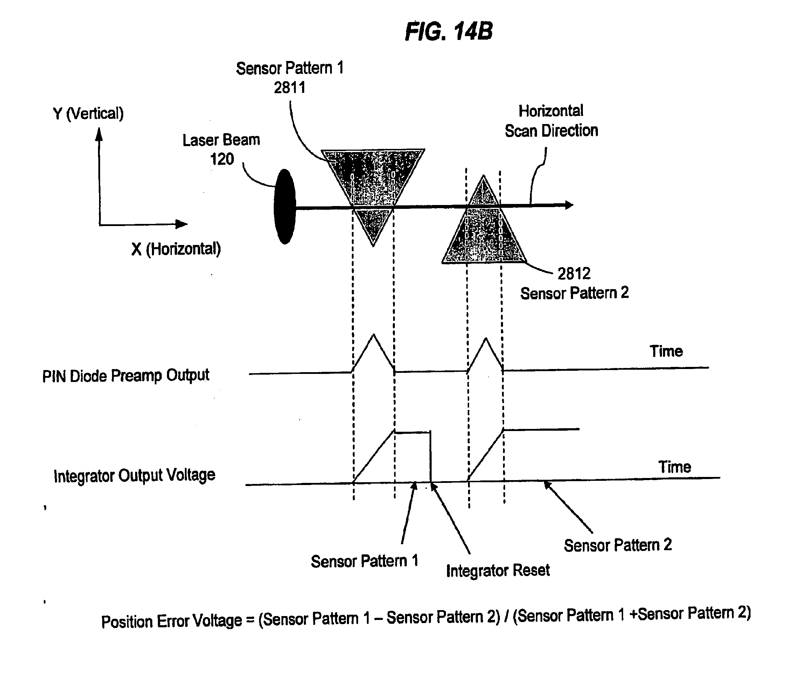

FIG. 14A shows a portion of the signal processing circuit as part of the vertical beam position servo feedback control in the laser module 110 for the vertical reference mark in FIG. 13. A PIN diode preamplifier 2910 receives and amplifies the differential signal for the two reflected signals from the two marks 2811 and 2812 and directs the amplified differential signal to an integrator 2920. An analog-to-digital converter 2930 is provided to convert the differential signal into a digital signal. A digital processor 2940 processes the differential signal to determine the amount and direction of the adjustment in the vertical beam position and accordingly produces a vertical actuator control signal. This control signal is converted into an analog control signal by a digital to analog converter 2950 and is applied to a vertical actuator controller 2960 which adjusts the actuator. FIG. 14B further shows generation of the differential signal by using a single optical detector.

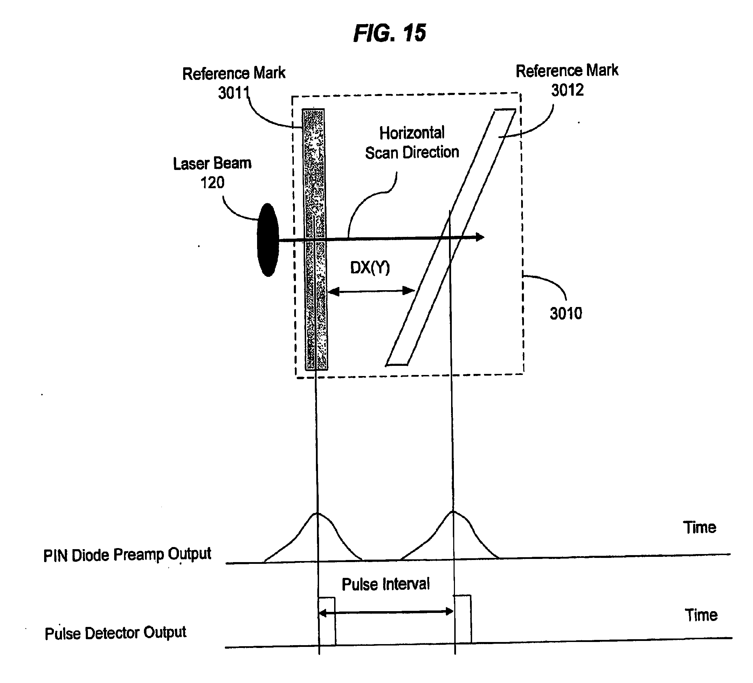

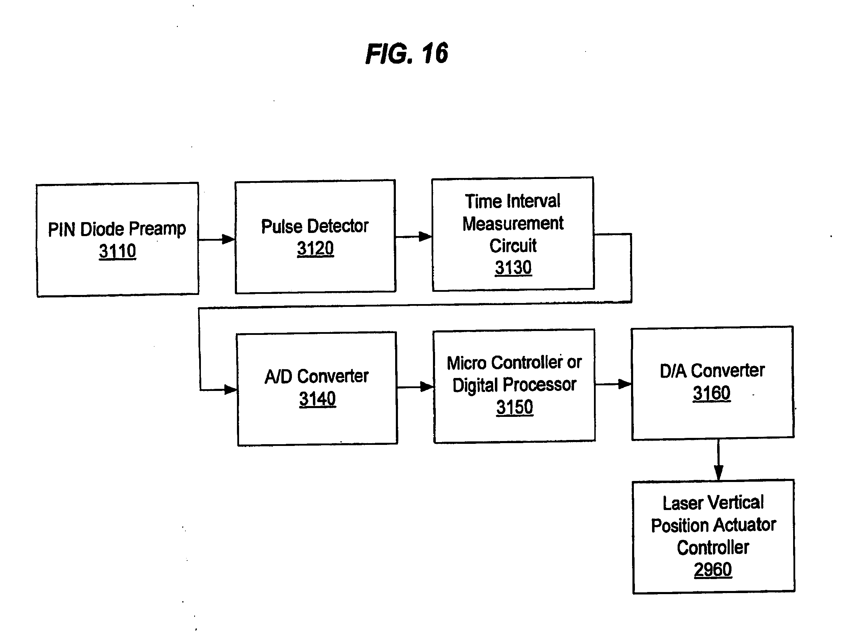

FIG. 15 shows another example of a vertical reference mark 3010 and a portion of the signal processing in a servo control circuit in FIG. 16. The mark 3010 includes a pair of reference marks 3011 and 3012 that are separated and spaced from each other in the horizontal scan direction and the horizontal distance DX(Y) between the two marks 3011 and 3012 is a monotonic function of the vertical beam position Y. The first mark 3011 can be a vertical stripe and the second mark 3012 can be a stripe at a slanted angle from the vertical direction. For a given horizontal scanning speed on the screen, the time for the beam to scan from the first mark 3011 to the second mark 3022 is a function of the vertical beam position. For a predetermined vertical beam position, the corresponding scan time for the beam to scan through the two marks 3011 and 3012 is a fixed scan time. One or two optical detectors can be used to detect the reflected light from the two marks 3011 and 3012 and the two optical pulses or peaks reflected by the two marks for the excitation beam 120 in the CW mode can be measured to determine the time interval between the two optical pulses. The difference between the measured scan time and the fixed scan time for the predetermined vertical beam position can be used to determine the offset and the direction of the offset in the vertical beam position. A feedback control signal is then applied to the vertical actuator to reduce the vertical offset.

FIG. 16 shows a portion of the signal processing circuit as part of the vertical beam position servo feedback control in the laser module 110 for the vertical reference mark in FIG. 15. A PIN diode preamplifier 3110 receives and amplifies the detector output signal from an optical detector that detects the reflected light from the two marks 3011 and 3012 during a horizontal scan. The amplified signal is processed by a pulse detector 3120 to produce corresponding pulses corresponding to the two optical pulses at different times in the reflected light. A time interval measurement circuit 3130 is used to measure the time between the two pulses and this time measurement is converted into a digital signal in a analog to digital converter 3140 for processing by a digital processor 3150. The digital processor 3150 determines the amount and direction of the an adjustment in the vertical beam position based on the measured time and accordingly produces a vertical actuator control signal. This control signal is converted into an analog control signal by a digital to analog converter 3160 and is applied to a vertical actuator controller 2960 which adjusts the actuator.

A vertical reference mark may also be implemented by using a single triangular reference mark shown in FIG. 13 where the single triangle reference mark 2811 or 2812 is oriented to create a variation in the horizontal dimension of the mark along the vertical direction so that the beam 120 partially overlaps with the mark when scanning through the mark along the horizontal direction. When the vertical position of the beam 120 changes, the horizontal width of the mark scanned by the beam 120 changes. Hence, when the beam 120 scans over the mark, an optical pulse is generated in the reflected or fluorescent light generated by the mark and the width of the generated optical pulse is proportional to the horizontal width of the mark which is a function of the vertical beam position. At a predetermined vertical beam position, the optical pulse width is a fixed value. Therefore, this fixed optical pulse width can be used as a reference to determine the vertical position of the beam 120 relative to the predetermined vertical beam position based on the difference between the optical pulse width associated with the scanning of the beam 120 across the mark. An optical detector can be placed near the mark to detector the reflected or fluorescent light from the mark and the difference in the width of the pulse from the fixed value can be used to as a feedback control to adjust the vertical actuator for the beam 120 to reduce the offset of the vertical beam position.

In implementing multiple lasers for simultaneously scanning consecutive lines within one of multiple screen segments as shown in FIG. 7, two separate vertical positioning servo control mechanisms can be implemented. The first vertical positioning servo control is to control the line to line spacing of different horizontal lines scanned by different lasers at the same time within each screen segment. Accordingly, at each line, a vertical reference mark and an associated optical detector are needed to provide servo feedback to control the vertical beam position of each laser beam. Hence, this first vertical servo control mechanism includes N vertical servo feedback controls for the N lasers, respectively.

The second vertical positioning servo control is to control the vertical alignment between two adjacent screen segments by using the galvo mirror 540 in FIG. 5 to vertically move all N laser beams, after completion of scanning one screen segment, to an adjacent screen segment. This can be achieved by controlling the galvo mirror 540 to make a common adjustment in the vertical direction for all N laser beams. The vertical reference mark in the peripheral reference mark region 2610 in FIG. 11 and the associated optical detector for the top line in each screen segment can be used to measure the vertical position of the first of the N laser beams when the beams are still scanning through the peripheral reference mark region 2610 in FIG. 11. This vertical information obtained in this measurement is used as a feedback signal to control the vertical angle of the galvo mirror 540 to correct any vertical error indicated in the measurement. In implementations, this correction can lead to a small amplitude (micro-jog) correction signal to the vertical galvo 540 for that scan line.

The vertical alignment between two adjacent screen segments is determined by a number of factors, including the galvo linearity at different galvo angles of the galvo mirror 540, the polygon pyramidal errors of the polygon scanner 550, and optical system distortions caused by various reflective and refractive optical elements such as mirrors and lenses. The polygon pyramidal errors are errors in the vertical beam positions caused by different tilting angles in the vertical direction at different polygon facets of the polygon 550 due to the manufacturing tolerance. One manufacturing tolerance on the polygon mirror is the pyramidal error of the facets. The implementation of the second vertical positioning servo control can compensate for the polygon pyramidal errors and thus a relatively inexpensive polygon scanner can be used in the present scanning display systems without significantly compromising the display quality.

The second vertical servo control based on the galvo micro-jog correction signal can also use a look-up table of pyramidal error values of the polygon 550. The pyramidal errors in this look-up table can be obtained from prior measurements. When a pyramidal error does not change significantly with temperature, humidity and others, this look-up table method may be sufficient without using the servo feedback based on a measured vertical beam position using the vertical reference mark described above. In implementation, the feedback control needs the identification of the polygon facet that is currently scanning a line and thus can retrieve the corresponding pyramidal error value for that polygon facet from the look-up table. The identification of the current polygon facet can be determined from a facet number sensor on the polygon 550.

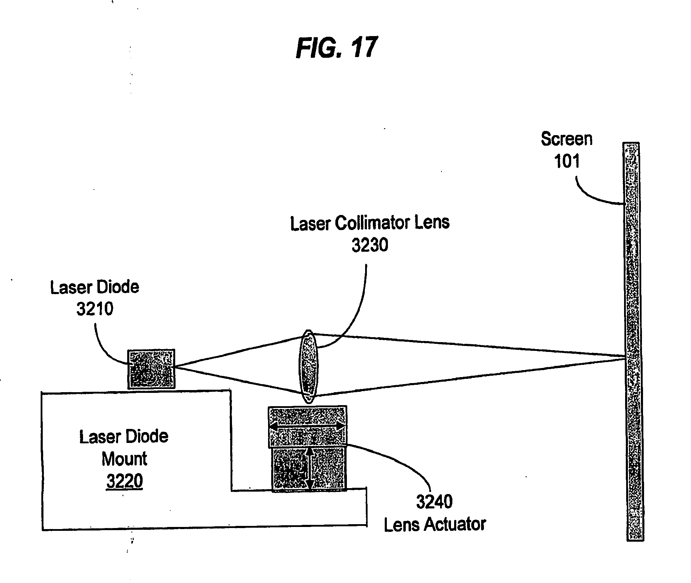

In the above vertical servo feedback control for each individual laser, a laser actuator is used to adjust the vertical direction of the laser beam in response to the servo feedback and to place the beam at a desired vertical beam position along a fluorescent stripe on the screen. FIG. 17 shows one example of a laser actuator 3240 engaged to a collimator lens 3230 which is placed in front of a laser diode 3210 to collimate the laser beam produced by the laser 3210. The collimated beam out of the collimator lens 3230 is scanned by the galvo mirror 540 and the polygon scanner 550 and is projected on the screen 101 by the scan lens 560. The laser diode 3210, the collimator lens 3230 and the lens actuator 3240 are mounted on a laser mount 3220. The lens actuator 3240 can adjust the vertical position of the collimator lens 3230 along the vertical direction that is substantially perpendicular to the laser beam. This adjustment of the collimator lens 3230 changes the vertical direction of the laser beam and thus the vertical beam position on the screen 101. The lens actuator 3240 may also move the position of the collimator lens 3230 along the propagation direction of the laser beam and thus the focusing of the collimator lens 3230 on the laser beam. This adjustment can change the beam spot size on the screen 101.

The beam spot size for each excitation beam 120 on the screen 101 needs to be controlled to be less than each subpixel size to achieve the desired display resolution and color purity. If the beam spot size is larger than each subpixel, a portion of the beam can spill over into an adjacent fluorescent stripe to excite one or two wrong colors and reduce the amount of fluorescent light emitted in that subpixel. These effects can degrade the image quality such as the image resolution and color saturation. The focusing of a scanning excitation beam in a scanning display system can set an optimal focusing condition at the factory. This factory focusing setting, however, can change due to variations in temperature and other factors. Therefore, a beam focusing servo control can be implemented to maintain the proper beam focusing.

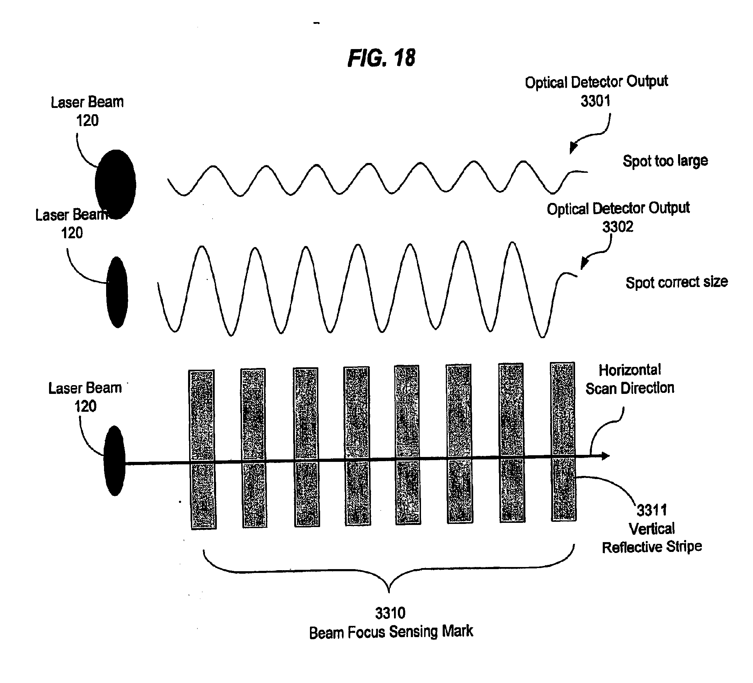

FIG. 18 illustrate a focus sensing mark 3310 located in a peripheral reference mark region 2610 or 2620 on the screen 101. The focus sensing mark 3310 can be optically reflective, fluorescent or transmissive to measure the beam spot size. An optical detector can be placed near the focus sensing mark 3310 to produce a detector signal that carries the beam spot size information. A servo feedback control can be used to adjust the focusing of the laser beam on the screen 101. For example, the collimator lens 3230 can be adjusted by using the lens actuator 3240 in FIG. 17 along the beam propagation direction to alter the focusing of the beam on the screen 101.

In the example in FIG. 18, the focus sensing mark 3310 includes multiple vertical stripe marks 3311 parallel to the fluorescent stripes and arranged in a periodic array along the horizontal scan direction. The stripe width and the spacing between two adjacent stripes are equal to the desired spot width. In operation, the laser beam is turned on continuously in a continuous wave (CW) mode while passing over the focus sensing mark 3310. A detector monitors the reflected (or transmitted) light from the focus sensing mark 3310 as the laser beam scans across the focus sensing mark 3310. If the beam spot size is of the desired size, the intensity of the feedback light generated by the focus sensing mark 3310 is a sine wave with 100% modulation as shown by the trace 3302. When the beam spot size is greater than the desired in size, the modulation depth decreases. Hence, measuring the modulation of the signal can be used to infer the spot size and to control the focusing of the laser beam. In some implementations, a second focus sensing mark can be placed on the screen 101 at a different depth (optical path length from laser to screen). The signal modulations measured from the two focus sensing mark can be compared to determine which way the focusing should be adjusted to reduce beam size.

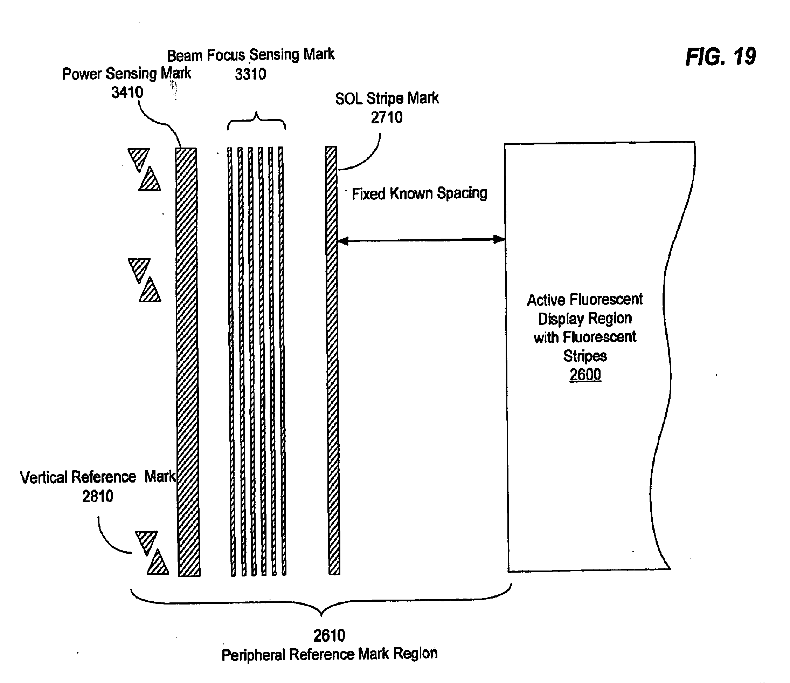

A power sensing mark may also be provided in the peripheral reference mark region on the screen 101 to direct a portion of the scanning excitation beam 120 into a detector to monitor the laser power. This feature can be used to monitor the laser power dynamically during operation. FIG. 19 shows a wide vertical stripe parallel to the fluorescent stripes as the power sensing mark 3410. FIG. 19 further shows other marks in the peripheral reference mark region 2610. Other reference marks are also shown in the region 2610. In operation, the laser is turned on in a CW mode with a predetermined drive current prior to passing over the power sensing mark 3410. The driving currents of the laser can varied when measuring the laser power in different scan lines to allow real time mapping of the power-current curve of the laser. The power measurements obtained from multiple scan lines can be averaged to reduce noise in the detection.

One way to correct the horizontal misalignment in the above display systems in FIGS. 8 and 10 is to program the display processor in the laser module 110 to delay the modulated image signal carried by the modulated laser beam 120 by one sub color pixel time slot if the green detector has an output and red and blue detectors have no output or by two sub color pixel time slots if the blue detector has an output and red and green detectors have no output. This correction of a spatial alignment error by a time delay may be achieved digitally within the display processor. No physical adjustment in the optical scanning and imaging units in the laser module 110 is needed. Alternatively, the optical imaging units and the scanning units in the laser module 110 may be adjusted to physically shift the position of the excitation beam 120 on the screen 101 so that the laser position on the screen 101 is adjusted horizontally to the left or right by one sub pixel in response to the error detected by the on-screen optical sensing unit 810. The optical alignment by physically adjusting the scanning laser beam 120 and the electronic or digital alignment by controlling the timing of optical pulses can be combined to control the proper horizontal alignment.

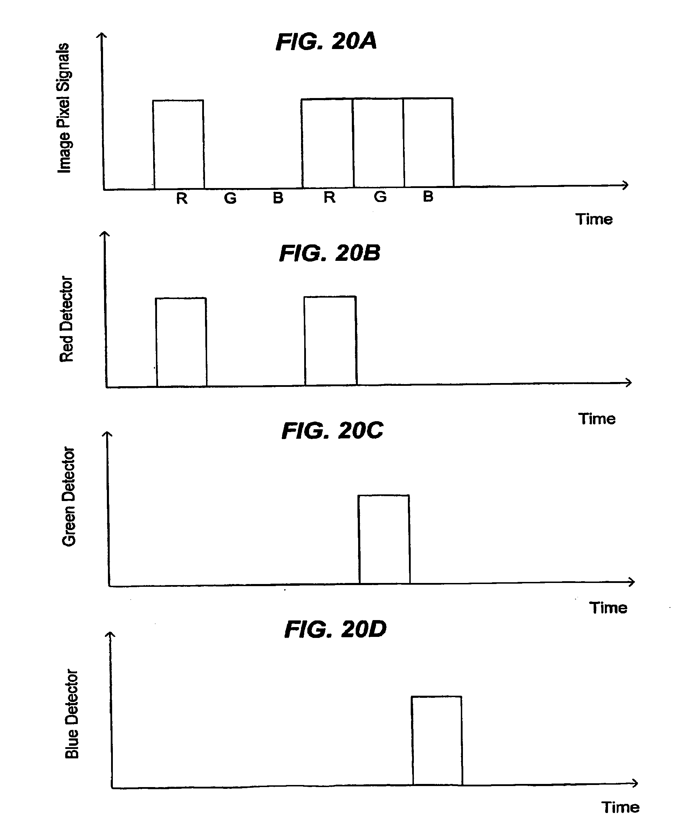

A test pattern can be used to check the horizontal alignment in the display systems in FIGS. 8 and 10. For example, a frame of one of the red, green and blue colors may be used as a test pattern to test the alignment. FIG. 20A shows a test pattern for the color pixel embedded with the detectors in FIGS. 8 and 9 and the corresponding outputs of the three detectors PD1, PD2 and PD3 when the horizontal alignment is proper without an error. This test pattern can also be used in the system in FIG. 10. FIGS. 20B, 20C and 20D show three different responses generated by the three detectors PD1, PD2 and PD3 when there is a misalignment in the horizontal direction. The detector responses are fed to the laser module 110 and are used to either use the time-delay technique or the adjustment of the beam imaging optics to correct the horizontal misalignment.

In the above servo control examples in FIGS. 8, 9 and 10, the on-screen or off-screen optical sensing unit detects the individual colored signals. In various implementations, it may be convenient to use scattered or reflected light of the scanning excitation beam 120 incident to the screen 101 to detect the alignment between the excitation beam and the fluorescent stripes of the screen 101. The above described servo reference marks are peripheral servo reference marks located outside the fluorescent area of the screen. The following sections further describe pixel-level servo reference marks in the fluorescent area of the screen that are used to determine the location of a beam relative to the center of an individual subpixel on the screen.

The periodic structure of the fluorescent stripes or periodic features formed on the periodic structures of the fluorescent stripes can be used as servo reference marks which scatter or reflect a portion of the scanning excitation beam 120 and the scattered or reflected light from such servo reference marks is detected to measure the presence of the misalignment and the direction of the misalignment. A temporal variation in timing of optical pulses is superimposed onto the scanning excitation optical beam 120 and the optical detection of the position of the beam on the screen is achieved by measuring the scattered or reflected light of the scanning excitation beam 120 by the servo reference marks. The information of the beam position on the screen 101 with respect to the periodic servo reference marks is used to control the alignment of the beam on the screen 101.

For example, a servo feedback control of a scanning beam display system can be implemented as follows. A beam of excitation light modulated with optical pulses is projected onto on a screen with parallel fluorescent stripes and is scanned in a beam scanning direction perpendicular to the fluorescent stripes to excite each fluorescent stripe to emit visible light which forms images. A temporal variation, e.g., the periodic temporal variation, is applied to the timing of the optical pulses in the beam of excitation light to advance or delay a spatial position of each optical pulse along the beam scanning direction on the screen. The reflection of the beam of excitation light from the screen is detected to produce a monitor signal which varies with a position of the beam relative to each fluorescent stripe. The information in the monitor signal is used to indicate a spatial offset of an optical pulse relative to a center of an intended or targeted fluorescent stripe along the beam scanning direction perpendicular to the fluorescent stripes. Based on the spatial offset, the timing of the optical pulses in the beam of excitation light is adjusted to reduce the spatial offset.

This servo feedback control may be implemented in various ways. A scanning beam display system with this servo feedback control can include an optical module operable to produce a scanning beam of excitation light which carries optical pulses that are sequential in time and carry image information; a screen comprising parallel fluorescent stripes which absorb the excitation light and emit visible light to produce images carried by the scanning beam; an optical sensor positioned to receive scattered or reflected excitation light by the screen and to produce a monitor signal indicating a spatial alignment of the beam relative to the screen; and a feedback control unit in communication with the optical sensor and operable to control the optical module so as to adjust timing of the optical pulses carried by the beam of excitation light in response to the monitor signal. In this system, the optical module can be used to create a temporal variation in timing of the optical pulses in the beam. The screen can include periodic spatial features that modify the portion of the scattered or reflected light of the excitation light received by the optical sensor in relation with the temporal variation in timing of the optical pulses in the beam. The feedback control unit can adjust the timing of the optical pulses in response to information in the monitor signal that is caused by the modification by the screen in the received portion of light by the optical sensor and temporal variation.

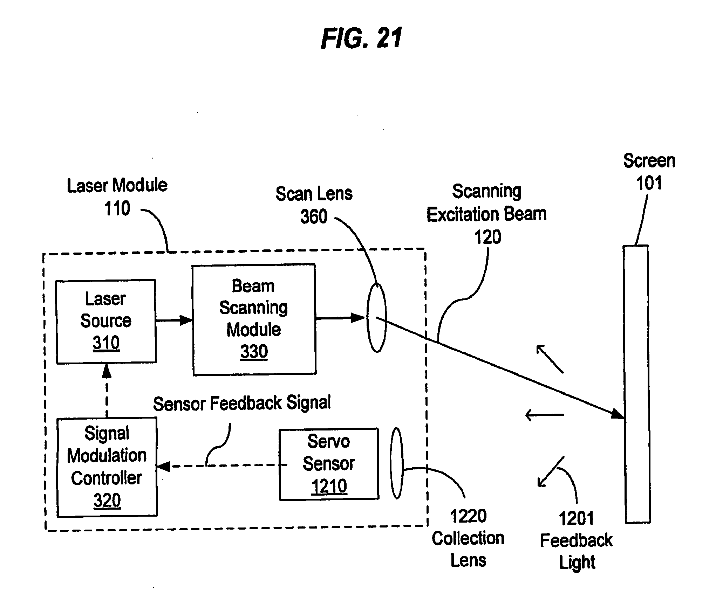

FIG. 21 shows one example of such a scanning display system with servo feedback control based on the scanning display system in FIG. 3. The scanning display system in FIG. 4 can also be implemented with this servo feedback control. In FIG. 21, the signal modulation controller 320 superimposes a temporal variation on the timing of the optical pulses in the excitation beam 120 in control the modulation of the excitation beam 120. Periodic servo reference marks are provided on the screen 101 to produce feedback light 1201 that is either the scattered or reflected light of the scanning excitation beam 120 caused by the servo reference marks or fluorescent light emitted by the servo reference marks under the optical excitation of the scanning excitation beam 120. An optical servo sensor 1210 is provided, e.g., an off-screen optical detector, to collect the feedback light 1201 from the screen 101. More than one optical servo sensor 1210 can be used. An optical servo sensor 1210 can be located at a suitable location off the screen 101 to maximize the collection of the feedback light from the screen 101, for example, a location near the scan lens 560 in the system in FIG. 5. A collection lens 1220 may be placed in front of the optical servo sensor 1210 to facilitate collection of light. The output of the optical servo sensor 1210 is used as servo feedback signal and is fed to the signal modulation controller 320. The signal modulation controller 320 processes the servo feedback signal to determine the position offset of an optical pulse from a center of a fluorescent stripe and then adjust the timing of optical pulses in the scanning excitation beam 120 to reduce the position offset.

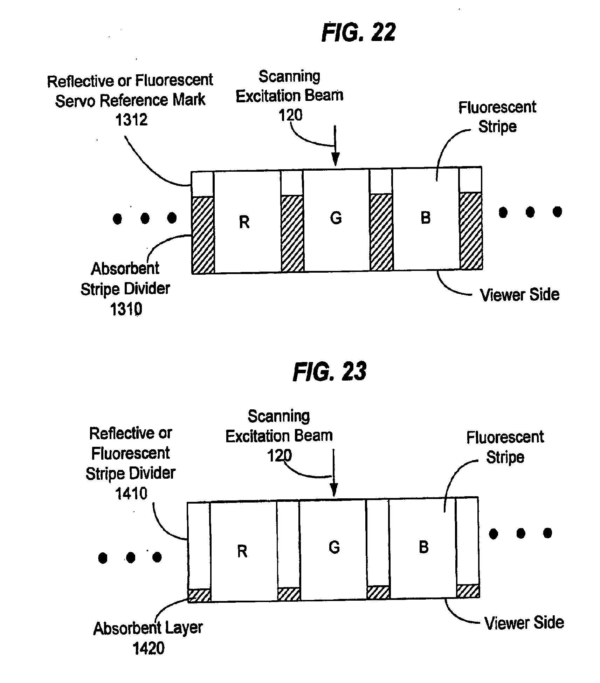

The periodic servo reference marks on the screen 101 can be in various configurations. Referring to FIGS. 2A, 2B and 2C, the stripe dividers between the fluorescent stripes can be used as the servo reference marks. Each stripe divider may include an additional structure as a servo reference mark. FIGS. 22 and 23 illustrate two examples.

In FIG. 22, each stripe divider 1310 can include a reflective or fluorescent layer 1312 as the servo reference mark located on the side of the fluorescent layer of the screen 101 that receives the scanning excitation beam 120. The reflective servo reference mark 1312 reflects the excitation beam 120 more than the fluorescent stripe which absorbs the excitation light. Hence, the reflected excitation light varies in power as the scanning excitation beam 120 scans across a fluorescent stripe. A thin reflective stripe can be coated on the end facet of each stripe divider 1310 as the servo reference mark 1312. An optically absorbent layer 1314 may be formed on the facet of the each stripe divider 1310 that faces the viewer to improve the contrast of the image. The detection sensitivity of the optical servo sensor 1210 enhances when there is a large difference in the reflection of the excitation light between the servo reference mark 1312 and the fluorescent stripes. A higher detection sensitivity can be achieved in the optical servo sensor 1210 when the servo reference mark 1312 is made of a fluorescent layer that emits fluorescent light under illumination by the scanning excitation beam 120. The fluorescent material for the mark 1312 can be different from the fluorescent stripes so that the fluorescent light emitted by the mark 1312 is at a different wavelength from the emission wavelengths of the fluorescent stripes. As an example, the mark 1312 can be an IR fluorescent material where the emitted IR light is invisible to the human eye and thus does not affect the image quality to the viewer. An optical bandpass filter can be placed in front of the optical servo senor 1210 to allow only the emitted fluorescent light by the marks 1312 to enter the optical servo sensor 1210.

FIG. 23 shows another screen design where stripe dividers 1410 between fluorescent stripes are made of an optically reflective or fluorescent material. As an option, the divider facet that faces the viewer side of the screen can be coated with a blackened absorptive layer 1420 to reduce any reflection towards the viewer side, e.g., less than 10% in reflection and greater than 80% in absorption from 400 nm to 650 nm. This feature can enhance the resolution and contrast of the screen.

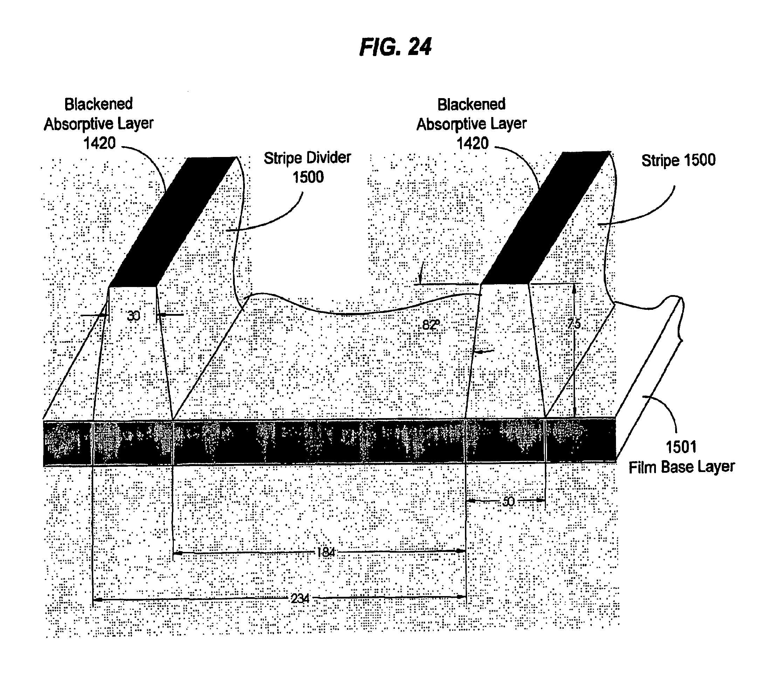

FIG. 24 further shows an implementation of the screen design in FIG. 23. All dimensions are in microns and are exemplary. Stripe dividers 1500 are formed over a dielectric layer 1501. Fluorescent materials for emitting red, green and blue colors are filled in between the stripe dividers 1500 to form the fluorescent stripes. Various optically reflective materials can be used to form the stripe dividers 1500. Metal materials such as aluminum can be used to construct the dividers 1500 or as coating materials to form a coating on a surface or facet of each divider 1500 that needs to be reflective. In addition, a white paint material can also be used to form the dividers 1500 to achieve a high reflectivity. For example, a white paint made of a TiO2-filled resin or a barium sulfate-filled resin can be formulated to achieve superior reflective properties to metal coatings, especially when reflecting back into a clear polymer. For example, the reflectivity of the white paint material can be grater than 90% from 400 nm to 650 nm. The stripe dividers 1500 can also be made to include a fluorescent material emitting light at a wavelength different from the excitation light 120 and the visible light emitted by the fluorescent stripes under the illumination of the same excitation light 120 to improve the signal to noise ratio at the optical servo sensor 1210.

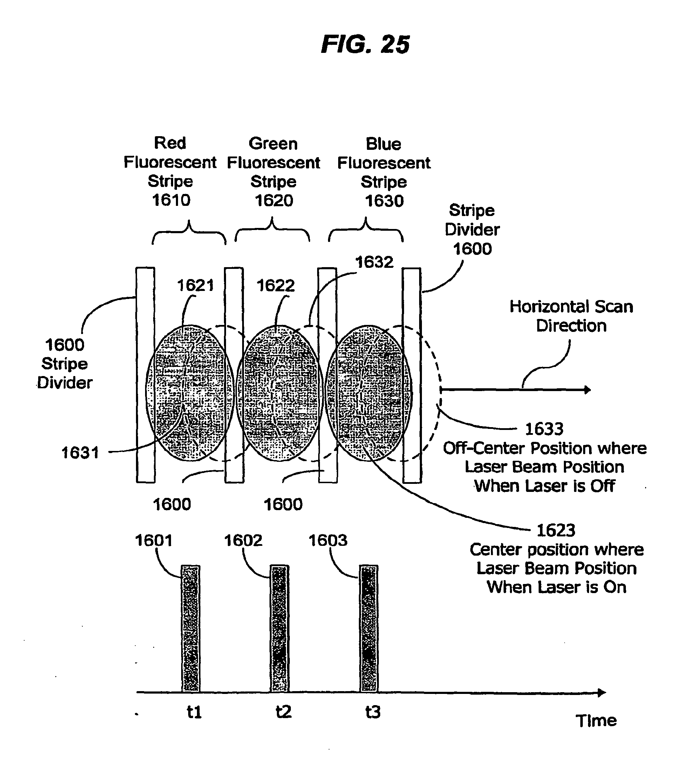

FIG. 25 shows timing of optical pulses and beam positions on the screen 101 when the excitation beam 120 scans across the fluorescent stripes along the horizontal direction. The excitation beam 120 is modulated as a train of optical pulses in the time domain. As an example, three consecutive laser pulses 1601, 1602 and 1603 in the excitation beam 120 for illuminating three consecutive fluorescent stripes 1610, 1620 and 1630 on the screen 101 are shown to be at times t1, t2 and t3 during a scan. Each fluorescent stripe in FIG. 25 can be a stripe of a particular fluorescent material with a designated color or a stripe of a uniform white phosphor layer in combination of a stripe color filter for the designated color. The excitation beam 120 is scanned in a raster format to produce a raster image made up by small dots, known as pixels with different colors. Each pixel is usually made up of three sub-pixels in three different primary colors red (R), green (G), and blue (B). The sub-pixels are patterned on the screen in the form of the fluorescent stripes. The laser beam 120 is scanned from left to right along the horizontal scan direction, one line at a time, to form the image. As the beam 120 travels from left to right in each scan, it should be accurately modulated in the time domain in order to properly address the sub-pixels. Hence, a pulse of the scanning excitation laser beam 120 is turned on at the same time when the beam 120 reaches the corresponding sub-pixel and is turned off when the beam 120 departs from the corresponding sub-pixel. As illustrated, when the excitation beam 120 is properly aligned with respect to the screen 101 along the horizontal scan direction, the pulse 1601 is on when the beam 120 is scanned to the center of the fluorescent stripe 1610, the pulse 1602 is on when the beam 120 is scanned to the center of the fluorescent stripe 1620 and the pulse 1603 is on when the beam 120 is scanned to the center of the fluorescent stripe 1630. Beam footprints 1621, 1622 and 1623 illustrate such aligned beam positions in the fluorescent stripes 1610, 1620 and 1630, respectively.

When there is misaligned along the horizontal scan direction, each pulse is on when the beam 120 is scanned to an off-center position in a fluorescent stripe. Beam footprints 1631, 1632 and 1633 illustrate such misaligned beam positions in the fluorescent stripes 1610, 1620 and 1630, respectively. Consider the fluorescent stripe 1610 where the pulse should be on when the beam 120 is at the position 1621 and off when the beam 120 is at the position 1631. If the pulse is on when the beam 120 at the position 1631 rather then the intended position 1621, the fluorescent strip 1610 is under illuminated by the beam 120 and a portion of the adjacent fluorescent strip at a different color is illuminated by the beam 120, i.e., the laser is turned on during the transition time when the beam 120 is crossing from one color sub-pixel to the next one. In other words, this misalignment occurs when the pulse modulation in time in the beam 120 is not synchronized with the sub-pixels in space. Under this condition, the color control can be adversely affected because the pulse that is supposed to turn on one particular color sub-pixel now "spills" over to the next different color pixel, either within the same color pixel or between two adjacent color pixels, to cause mis-registration of the image and to degrade the color purity of the image.

Therefore, it is desirable to accurately control the timing of the pulses of the scanning laser beam 120, i.e., the times to turn on and off optical pulses with respect to the laser position on the screen. In order to control the timing of the laser pulses in the scanning beam 120, a servo method is used to measure the beam offset based on the reflected light from the back of the sub-pixel when the laser is turned on. The signal strength of the reflected light varies with the relative position of the laser light at each sub-pixel when the laser is turned on at the center or is turned on off-center of the sub-pixel. Reflectors or reflective features at the edge of each sub-pixel are used as the servo reference marks to generate reflected light from each sub-pixel to monitor the position of the scanning laser beam 120 at each sub-pixel. As illustrated in FIG. 25, the beam 120 is least reflected by the stripe dividers 1600 when the pulse is turned on at the beam position 1621 in the center of the fluorescent stripe 1610 and the reflection by the dividers 1600 increases when the pulse is tuned on at the beam position 1631 off the center of the fluorescent stripe 1610. This difference in the power level of the reflected excitation light when the beam 120 is turned on at different positions relative to the center of fluorescent stripe and the temporal variation in the timing of the optical pulses in the beam 120 are used to measure misalignment along the scan direction.

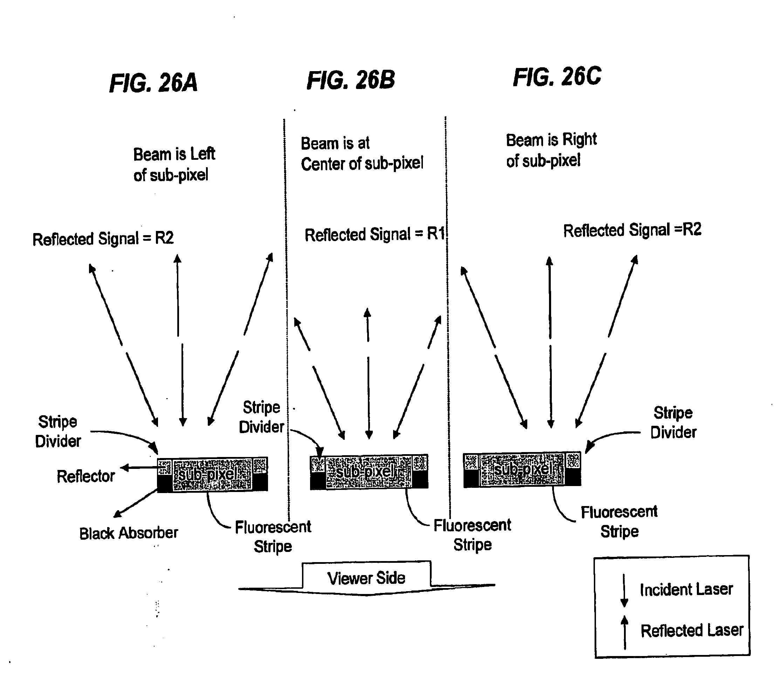

FIGS. 26A, 26B and 26C illustrates the variation of the signal strength of the reflected excitation light when the excitation beam 120 at different positions in a subpixel. In FIG. 26A, the pulse is tuned on when the beam 120 is at the left side of the subpixel. A strong reflection R1 is detected at the optical servo sensor 1210 the system in FIG. 21. When the pulse is turned on when the beam 120 is at the center of the subpixel shown in FIG. 26B, a relatively weak reflection R2 is detected at the optical servo sensor 1210. When the pulse is turned on when the beam is at the right hand side of the center of the subpixel, a higher reflection of the excitation light is detected again at the optical servo sensor 1210.

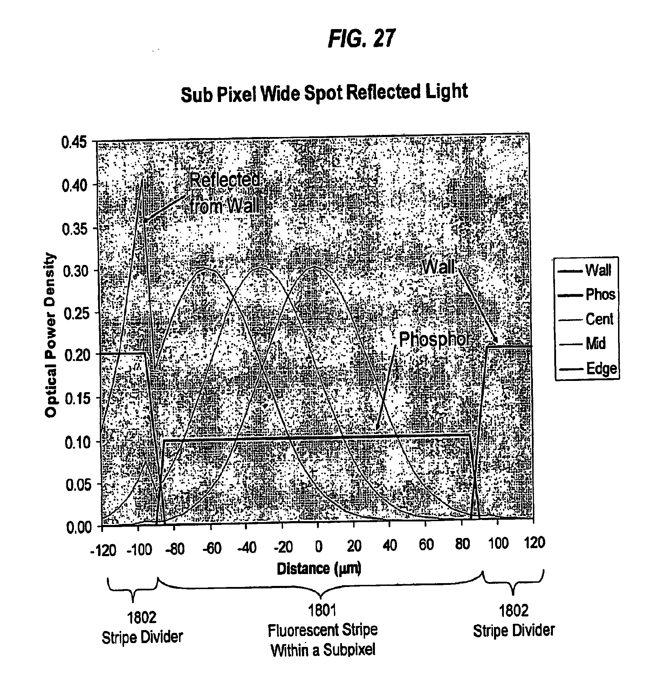

In general, the power level of the reflected excitation light varies with the position of the beam 120 in a subpixel when the pulse is on. FIG. 27 illustrates an example of the sub-pixel design and the optical power density of the reflected excitation light from the subpixel at various laser beam positions. In this example, the sub-pixel includes a central fluorescent stripe 1801 filled with an appropriate fluorescent material that emits light of a designated color for that sub-pixel under excitation of the scanning laser beam 120. Two stripe dividers 1802 are located at two opposite sides of the fluorescent stripe 1801 as two peripheral reflectors are to generate the reflected light. The peripheral reflectors may be designed as diffractive structures, reflective structures which can either specularly reflect light or diffuse light, a wavelength conversion material such as a phosphor that emits light under the excitation of the beam 120, or a mixture of both diffractive and reflective structures.

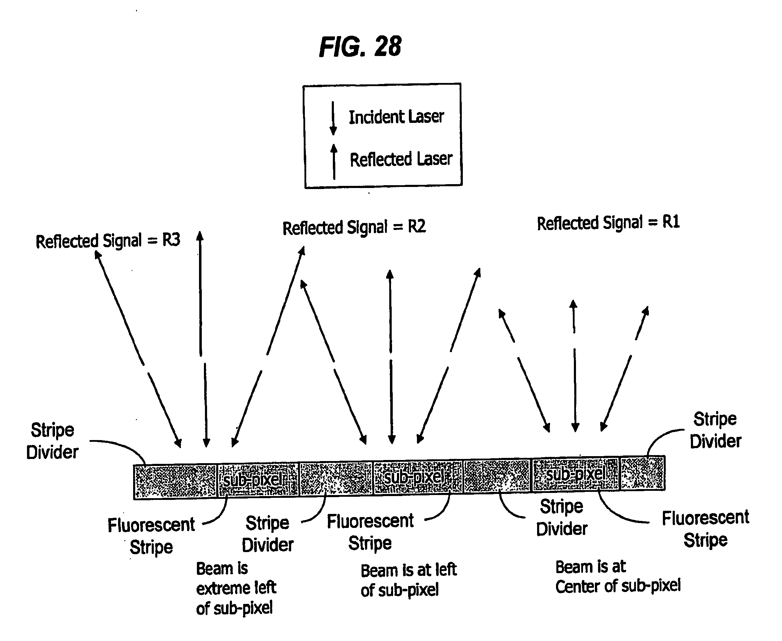

FIG. 28 illustrates an example of the relation of the reflected power level and the beam position offset the center of a sub-pixel. The subpixel can be designed to produce a highest reflectivity R3 at the outmost edge position from a center of the subpixel, a lowest reflectivity R1 at the center position of the subpixel and an intermediate reflectivity R2 for beam positions in between. As an example, the highest reflectivity R3 can be generated when the beam 120 is turned on at the center of a stripe divider. Hence, the level of the reflected light can be used to indicate the relative offset of the beam position from the center of each subpixel.

The servo reference marks associated with the fluorescent stripes described above allows the feedback light, either reflected light or fluorescent light, to vary in power with the position of the laser beam position in each subpixel. This power variation in the feedback light can be used to determine whether the beam 120 is turned on at the center of a subpixel or off the center of the subpixel. However, this power variation does not provide information on the direction of the offset in the position of the beam 120 in a subpixel. In order to produce a sign of a servo signal to indicate the direction of the offset of the position of the beam 120 in the subpixel, the scanning laser beam 120 is further modulated with a small delay signal superimposed on top of the scanning time of the laser beam 120 to control the timing of the optical pulses in the beam 120. This delay signal produces a signal pattern in the reflected light from the sub-pixels to indicate whether the position of the laser pulse on the screen should be moved to the right or to the left relative to the center of a sub-pixel or, in the time domain, the timing of a laser pulse should be delayed or advanced. This delay signal is a periodic signal and, as the laser beam 120 scans the screen 101, is positively and negatively delayed in a periodic fashion in the time domain. This periodic variation in timing of the pulses can be, for example, a sinusoidal wave or square wave.

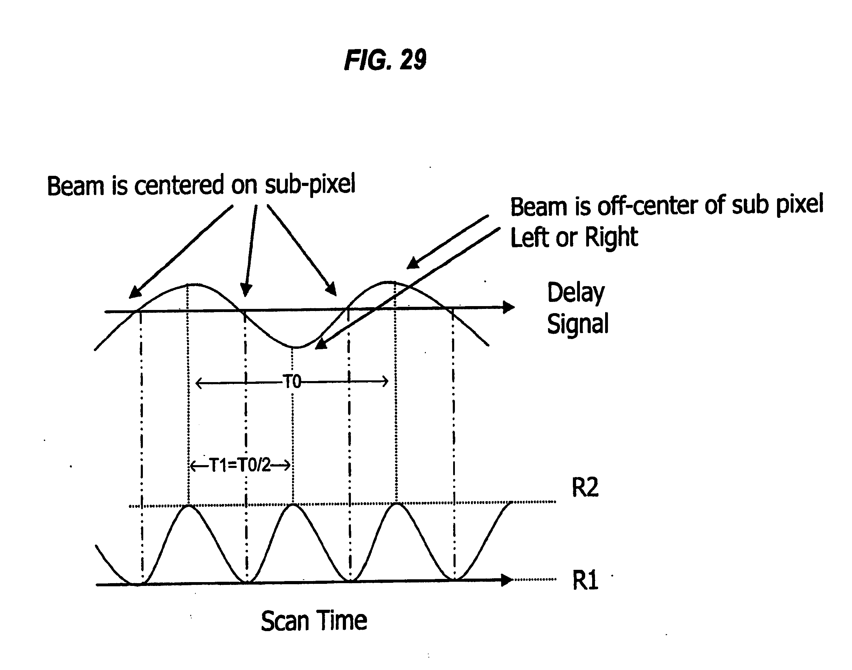

FIG. 29 shows one example of this periodic delay signal in a sinusoidal form. In each period in time of the delay signal, the scanning beam 120 sans over multiple subpixels along the horizontal scanning direction perpendicular to the fluorescent stripes. In the illustrated example, a total of three subpixels are scanned by the scanning beam 120 in one period of the delay signal. As the timing of the pulse is periodically modulated during the scan, the reflected signal detected by the optical servo sensor 1210 in FIG. 21 varies, also in a periodic form.

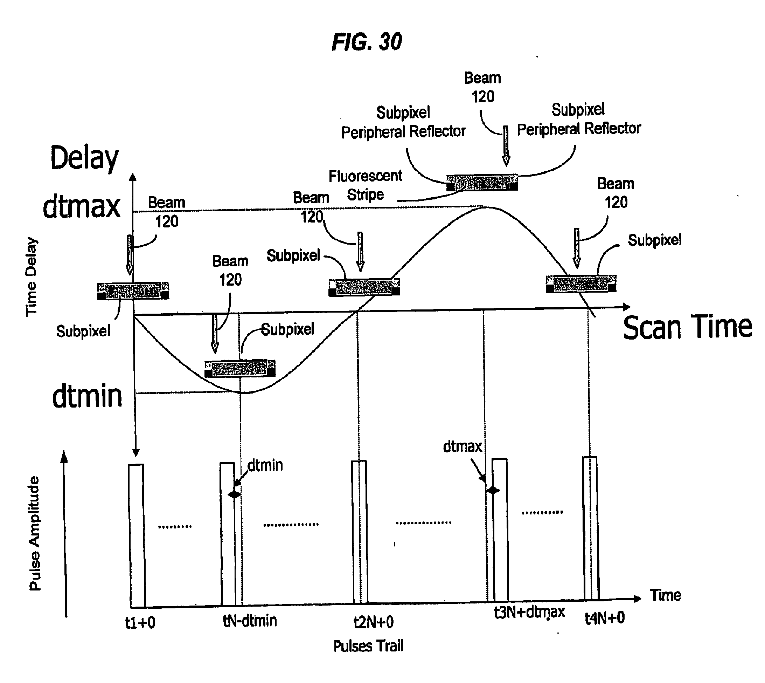

FIG. 30 further illustrates, in time domain, how the pulse timing in the beam 120 is modulated by the delay signal. Notably, the temporal variation in timing of the optical pulses is set to correspond to a spatial shift in the beam position less than the width of the fluorescent stripes along the horizontal scanning direction. Hence, the superimposed delay signal provides a perturbation of the beam position around the current beam position within a fluorescent stripe or subpixel along the horizontal beam scanning direction to cause a change in the servo signal. Because of the presence of the servo reference marks on the stripe dividers, this change in the servo signal indicates the direction and amount of the offset in the beam position from the center of a fluorescent stripe or subpixel along the horizontal beam scanning direction.

When the pulse is on as the beam 120 is at the center of a subpixel, the reflected light is at the minimum power level R1. When the pulse is on at other off-center positions, the reflected light has a higher power level that varies with the amount of the offset from the center. In a perfectly aligned system, when the delay is equal to zero, the laser beam "on time" is at the center of the sub-pixel. Under this condition, a reflected signal R1 is produced when the delay is positive or negative. When the laser beam 120 is offset with respect to the center of the sub-pixel due to the delay signal, the pulse of the beam 120 is turned on at offset positions near the center of the subpixel and thus the reflected signal R2 is produced. Notably, under this condition, the period T1 of the oscillation in the reflected signal is one half of the period T0 of the delay signal.

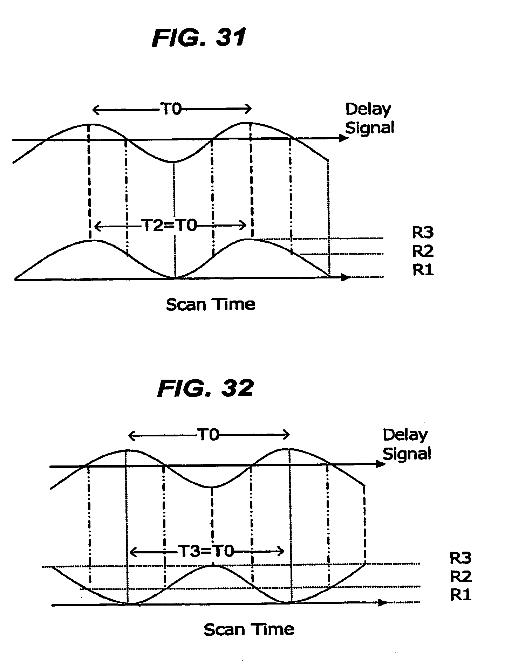

FIG. 31 illustrates the beam position offset to the left of the center of a sub-pixel that produces a highest reflectivity R3 at the outmost edge position from a center of the subpixel, a lowest reflectivity R1 at the center position of the subpixel and an intermediate reflectivity R2 for beam positions in between. Hence, when the laser beam 120 is turned on at a position offset from the center of the sub-pixel to the left, the delay signal superimposed on top of the scanning laser beam varies the positions of the laser beam 120 mostly to the left of the center of each sub-pixel. Hence, the reflected signal various in amplitude between the levels R1 and R3 and is synchronized in phase with the delay signal. As such, the period T2 of the reflected signal is equal to the period T0 of the delay signal. This state of the reflected signal indicates that the pulse is turned too early in time.

FIG. 32 illustrates an example for the beam position offset to the right of the center of a sub-pixel. Under this condition, the delay signal superimposed on top of the scanning laser beam is such that the laser beam is mostly to the right of the sub-pixels and the reflected signal is not synchronized with the delay signal is out of phase with the same period as the delay signal (T3=T0). The amplitude of the reflected signal varies between the signal levels R1 and R3. This state of the reflected signal indicates the pulse in the laser beam 120 is turned on too late in time. Notably, the phase of the reflected signals relative to the delay signals in FIGS. 31 and 32 are opposite and this difference can be measured to determine the direction of the offset for the servo control.

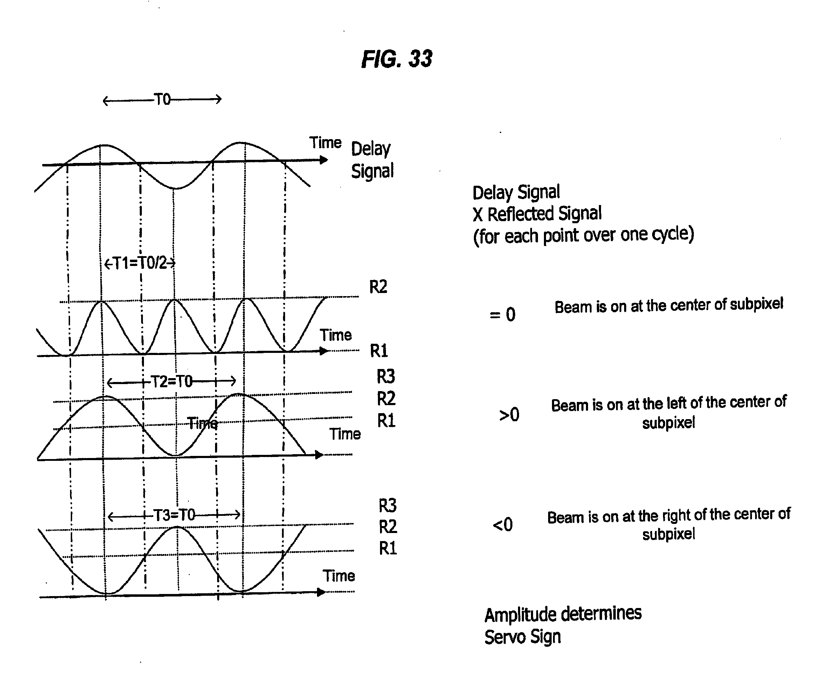

FIG. 33 illustrates a method of using the detected reflected signal to determine the direction of the beam offset from the center of the subpixel. An offset indicator signal is defined as the integration of the products of the delay signal and the reflected signal at all time locations over one delay period in the delay signal. The right hand side of FIG. 33 shows an example of the offset indicator signal. A positive value of this signal indicates that the beam is turned on too early in time and is located to the left of the center of the subpixel during a horizontal scan from the left to the right of the screen. A negative value of this signal indicates the beam is turned on too late in time and is located to the right of the center of the subpixel.

In the centered case, the reflectivity signal has twice the oscillation frequency of the delay signal. Hence an integration of the reflectivity signal over one delay cycle results in a negligible servo error signal. The servo response circuit can be configured to maintain the current timing of the pulses without altering the position of the laser on time. When the laser is mostly off the center of the sub-pixel to the right or left side, the reflected signal is out of phase with each other respect to the delay signal and each reflected signal has the same oscillation frequency of the delay signal. The integration of an entire reflectivity cycle multiplied by the delay signal yields a positive or negative servo error signal. In these two cases, the servo control mechanism can adjust the timing of the pulses in the laser beam 120 to reduce the beam offset and to achieve proper sub-pixel registration.

The change in the reflected signal is captured using an optical servo sensor 1210 as shown in FIG. 21. One detection scheme is to use a wide area detector as the sensor 1210 to capture a portion of the back-scattered light. Improved SNR can be obtained with a lens (or other flux collecting element such as a non-imaging concentrator). The lens represents a larger collecting area which brings more scattered light to the detector. If the scattered light is of a different wavelength as compared to the incident beam, e.g., when fluorescent servo reference marks are used, then a spectral filter may be used to reject other sources of radiation (including any unwanted backscatter of the incident beam). In addition, multiple detectors may be placed in several locations to improve detectability of the backscattered radiation. Because the signal may be weak compared to light from other sources of light, the servo signals may be averaged over many lines and frames to improve the signal to noise ratio.

The delay signal can be either periodic or non-periodic with various amounts of delay and periodicity. The variable delay signal is used here to measure the directionality of the correction. Note that the delay caused by the delay signal is set to be small enough so that the delay does not add color distortion to the screen. In some implementations, the delay signal can be configured so that less than 10% color bleed may result due to the delay signal. In yet other implementations, the phase of the period delay on the laser beam can be shifted by 90 degrees from one scanning line to the next to reduce a fixed pattern effect caused by the delay signal to a viewer.

In some implementations of the servo control, the servo signals from higher brightness areas of the screen can be measured and the amplitudes of the measured signals are normalized by the amplitude of the outgoing video signal in controlling the beam alignment along the horizontal scan direction. This technique can improve the signal to noise ratio in the detection because the servo delay signal is superimposed on a variable amplitude video signal.

The above time-delayed servo technique provides one approach to mitigation of the timing issue in systems where one beam is used to deliver the different colors on a display in order to accurately target the color elements. For screens where phosphors are arranged as parallel vertical stripes, the excitation laser beam is used to activate phosphors of the three primary colors, and as the beam scans across the phosphors, the beam activates each color sequentially in time. The targeting issue in space thus becomes a timing issue in controlling timing of the laser pulses. The variations of the system components due to temperature, aging and other factors and the component and device tolerances during the manufacturing thereof need to be accounted for the timing control of the laser beam on the screen. For example, thermal expansion effects, and distortions in the optical imaging will need corresponding adjustments in the precise timing to activate each color in a pixel. If the laser actuation does not properly correspond to the timing where the beam is directed with the central portion of a sub-pixel and is crossing the intended phosphor, the beam will either partially or completely activate the wrong color phosphor.

In addition to the servo control, a calibration "map" of timing adjustments can be provided to assist the servo control for correcting the timing over different portions of the screen. This calibration map includes beam alignment data for all sub-pixels on the screen and can be obtained using the servo control to measure alignment of the entire screen after the assembly of the display system is completed at the factory. This map of adjustments can be stored in the memory of the laser module 110 and reused for an interval of time if the effects that are being compensated for do not change rapidly. In operation, when the display system is turned on, the display system can be configured to, as a default, set the timing of the laser pulses of the scanning laser beam based on the alignment data in the calibration map and the servo control can operate to provide the real-time monitoring and control of the pulse timing during the operation. Additional calibration measurements may be made to update the stored calibration map in the memory. For example, a single or multiple consecutive versions of this map could be placed in the same memory that is used for buffering pixel color data. These calibration maps may be encoded to reduce both the amount of memory they occupy and the bandwidth of memory needed to access them. For the case of smoothly changing timing adjustments, a simple scheme such as delta modulation can be used effectively to compress these maps.

The calibration "map" can be obtained by operating each scanning laser beam 120 in a continuous wave (CW) mode for one frame during which the scanning laser beams simultaneously scan through the entire screen, one segment at a time, when multiple lasers are used as shown in FIG. 5. If a single laser is used, the single scanning beam is set in the CW mode to scan the entire screen, one line at a time. The feedback light from the servo reference marks on the stripe dividers is used to measure the laser position on the screen. The monitor signal from the photo detector can be sent through an electronic "peak" detector that creates a pulse whenever the monitor signal is at its highest relative amplitude. The time between these pulses can be measured by a sampling clock in a digital circuit or microcontroller that is used to process and generate the error signal. Because the scan speed of the scanning beam on the screen is known, the time between two adjacent pulses from the electronic peak detector can be used to determine the spacing of the two locations that produce the two adjacent pulses. This spacing can be used to determine the subpixel width and subpixel position. Depending on the beam scan rate and the frequency of the sampling clock, there are some nominal number of clocks for each sub-pixel. Due to optical distortions, screen defects or combination of these the distortions and defects, the number of clocks between two adjacent pulses for any given sub-pixel may vary from the nominal number of clocks. This delta can be encoded and stored in memory for each sub-pixel.

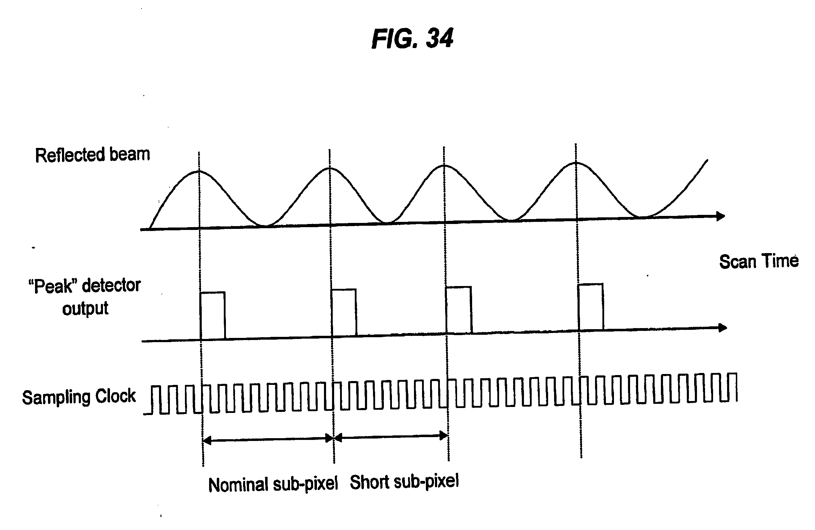

FIG. 34 shows one example of the detected reflected feedback light as a function of the scan time for a portion of one horizontal scan, the respective output of the peak detector and the sampling clock signal. A nominal subpixel with a width corresponding to 9 clock cycles of the sampling clock and an adjacent short subpixel corresponding to 8 clock cycles are illustrated. In some implementations, the width of a subpixel may correspond to 10-20 clock cycles. The clock cycle of the sampling clock signal of the digital circuit or microcontroller for the servo control dictates the spatial resolution of the error signal.

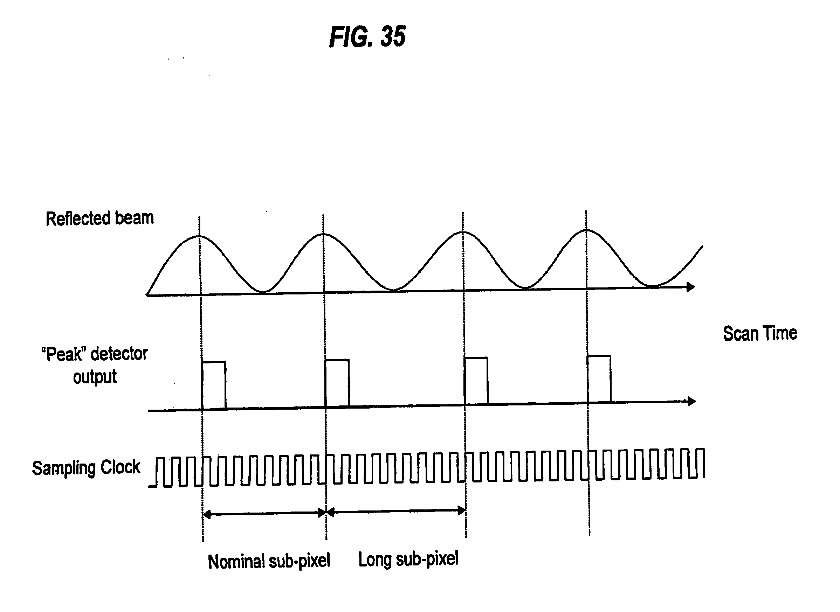

FIG. 35 shows one example of the detected reflected feedback light as a function of the scan time for a portion of one horizontal scan, the respective output of the peak detector and the sampling clock signal where a nominal subpixel corresponding to a width of 9 clock cycles and an adjacent long subpixel a corresponding to a width of 10 clock cycles re illustrated.

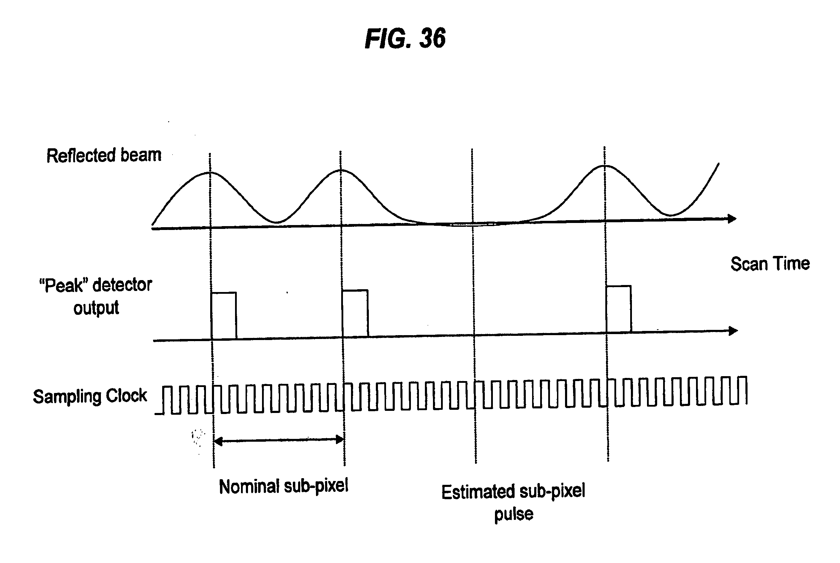

During calibration, contaminants such as dust on the screen, screen defects, or some other factors may cause missing of an optical pulse in the reflected feedback light that would have been generated by a servo reference mark between two adjacent subpixels on the screen. FIG. 36 illustrates an example where a pulse is missing. A missing pulse can be determined if a pulse is not sampled within the nominal plus the maximum expected deviation from nominal number of clocks. If a pulse is missed, the nominal value of clocks can be assumed for that sub-pixel and the next sub-pixel can contain the timing correction for both sub-pixels. The timing correction can be averaged over both sub-pixels to improve the detection accuracy. This method may be extended for any number of consecutive missed pulses.

A scanning beam display system can be implemented using various features described above. For example, such a system can include an optical module operable to produce a scanning beam of excitation light having optical pulses that are sequential in time and carry image information, and a fluorescent screen that includes a fluorescent area and a peripheral servo reference mark area outside the fluorescent area. The fluorescent area absorbs the excitation light and emits visible fluorescent light to produce images carried by the scanning beam. The fluorescent area includes first servo reference marks producing a first feedback optical signal under illumination of the scanning beam. The peripheral servo reference mark area includes at least one second servo reference mark producing a second feedback optical signal under illumination of the scanning beam. This example system includes two separate sensors for the servo control: (1) a first optical sensor positioned to receive the first feedback optical signal and to produce a first monitor signal indicating a spatial alignment of the optical pulses on the fluorescent screen; and (2) a second optical sensor positioned to receive the second feedback optical signal and to produce a second monitor signal indicating an optical property of the scanning beam on the fluorescent screen. A feedback control unit is included in the optical module to adjust the scanning beam in response to the first and second monitor signals to control at least the spatial alignment of spatial positions of the optical pulses on the fluorescent screen.

The above second optical sensor for detecting the second feedback optical signal from the peripheral servo reference mark area on the screen can be an optical detector that is connected to a light pipe that is connected to the peripheral servo reference mark area on the screen. In one implementation, the second servo reference mark in the peripheral servo reference mark area can be transmissive so that the transmitted light through the mark when illustrated by the excitation beam 120 is coupled into one end of the light pipe that is connected to the other side of the mark, e.g., on the viewer side of the screen. The light pipe can be a channel with reflective surfaces formed by dielectric interfaces under the total internal reflection (TIR) condition or metallic reflective side wall surfaces. The second optical sensor can be located at the other end of the light pipe to receive the light signal guided by the light pipe. When different types of servo reference marks are provided in the peripheral servo reference mark area for monitoring different parameters, e.g., beam focusing and beam SOL position, different light pipes can be implemented in the peripheral servo reference mark area for different reference marks. Each light pipe directs the signal to its respective optical detector.

As described above, different facets of a polygon scanner tend to have different facet orientations with respect to the scanner rotation axis due to the inaccuracy in manufacturing and other factors and such pyramidal errors can degrade the performance of the displayed images. FIG. 5 shows a scanning display system with a fluorescent screen where one or more excitation laser beams 532 are scanned by a galvo mirror 540 and a polygon scanner 550 onto a fluorescent screen 101. A display system using a passive screen can also be constructed based on the design in FIG. 5 where three modulated beams in different colors (e.g., red, green and blue) carrying image data can be overlapped as a single beam that is scanned by the galvo mirror 540 and the polygon scanner 550 on a passive screen to form colored images.

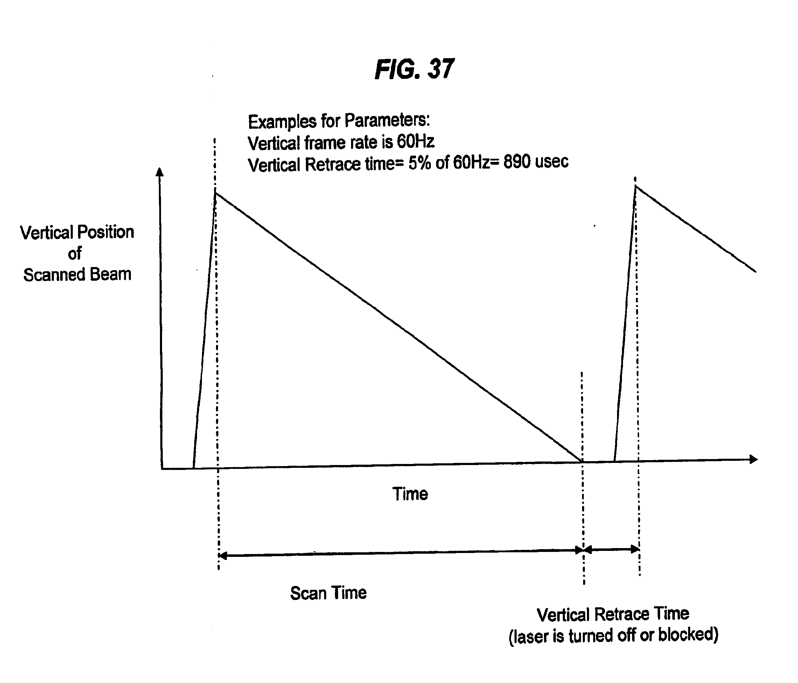

FIG. 37 illustrates the operation of the galvo mirror 540. Each cycle of motion of the galvo mirror 540 is divided into a regular scanning phase and a vertical retrace phase. In the regular scanning phase, the galvo mirror 540 scans over a scan time during which the light is directed to the galvo mirror 540 and the galvo mirror 540 scans the light to produce multiple horizontal scan lines at different vertical positions. During this scan time, multiple facets of the polygon 540 scan the beam. In the vertical retrace phase, the light is turned off or blocked and the galvo mirror 540 resets its position back to the initial scanning position from which another vertical scan begins. Depending on the design of the galvo mirror 540, the vertical retrace time usually takes a small fraction of the total scan, e.g., 5%. As an example, if the vertical scanning rate is 60 Hz which corresponds to a vertical scan time of about 16.7 ms, the vertical retrace time is 5% (1/60)= 890 micro seconds.

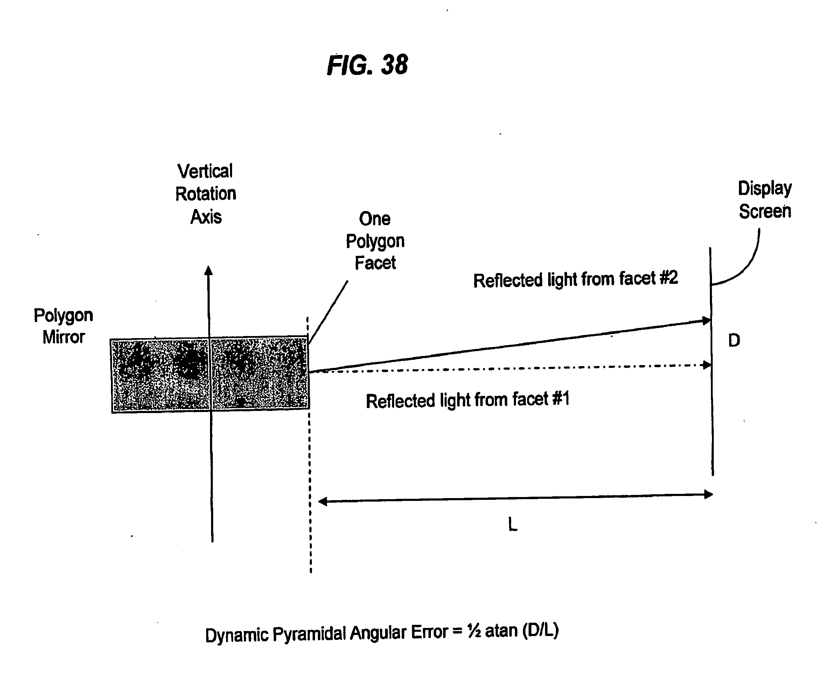

FIG. 38 illustrates the effect of the pyramidal error of the horizontal polygon scanner 550 in FIG. 5. Two adjacent facets, facet No. 1 and facet No. 2, have different facet orientations with respect to the vertical rotation axis of the scanner. Hence, for the same incident beam to be scanned, the facets No. 1 and No. 2 project the beam at two different vertical locations on the screen separated by a distance D on the screen. If the polygon 550 is away from the screen by a distance L, the pyramidal error is 1/2tan(D/L).

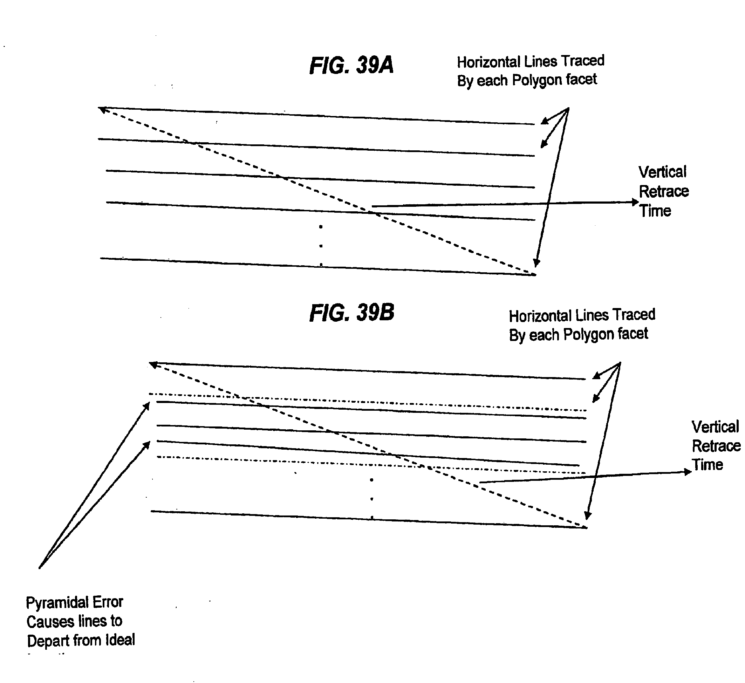

FIGS. 39A and 39B further illustrate the effect of the pyramidal errors in the polygon scanner 550 in FIG. 2 when multiple scanning beams are scanned at the same time as shown in FIG. 7. If the polygon 550 is free of pyramidal errors, different beams are simultaneously scanned at their designated vertical locations to produce parallel horizontal scan lines with an even vertical spacing. Due to the vertical scanning, each horizontal line is not perfectly horizontal and is skewed. FIG. 39A illustrates scanning of a single laser beam of a laser by different successive facets of the polygon 550 without pyramidal errors. FIG. 39B shows that, when the polygon 550 has pyramidal errors, the horizontal scans on successive facets of the polygon 550 would have uneven vertical spacing.

One exemplary technique to mitigate the effect of the pyramidal error is to design the scanning system so that each horizontal scanning line in successive frames is scanned by different facets on the polygon. Hence, each line perceived by the viewer appears to be thicker with a linewidth along the vertical direction about the position spread on the same horizontal line caused by the pyramidal errors. This technique essentially averages out the pyramidal errors and at the same time slightly degrades the vertical resolution on the screen.

In operation, this technique scans each horizontal line by using a different polygon facet in successive frames to cause the same line at successive fames to be at different vertical positions to cause a "blurred" line due to different pyramidal errors on different polygon facets. As one specific example, the retrace time on the galvo mirror 540 can be set to be less than 1 facet time. The assignment of the facets for scanning different lines can be made in various configurations. For example, the facets designated for retracing line 1 can be 5, 6, 7, 8, or 9 facets in the following arrangement:

| # of FACETS | FACET ASSIGNMENT FOR SCANNING LINE 1 | | | | | | | |
|---|---|---|---|---|---|---|---|---|
| 5 | 1 | 2 | 3 | 4 | 5 | 1 | | |
| 6 | 1 | 2 | 3 | 4 | 5 | 6 | 1 | |
| 7 | 1 | 4 | 7 | 3 | 6 | 2 | 5 | 1 |
| 8 | 1 | 8 | 7 | 6 | 5 | 4 | 3 | 2 | 1 |
| 9 | 1 | 5 | 9 | 4 | 8 | 3 | 7 | 2 | 6 |

This facet assignment for scanning can be achieved by controlling the polygon scanner.

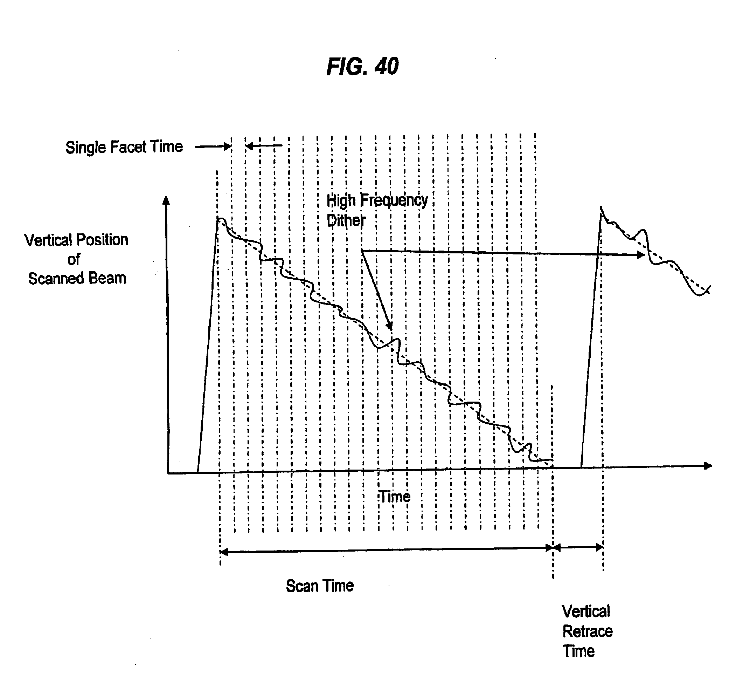

The above technique is an averaging technique and the averaging can also be implemented by dithering the vertical scanning mirror with a small amplitude at a dither frequency higher than the frame rate. This dithering is controlled so that the vertical spread of the scanning beam on the screen caused by the dithering is the beam position spread on the same horizontal line caused by the pyramidal errors. FIG. 40 shows the effect of the high-frequency dithering of the galvo mirror 540. Several dithering options may be implemented: a constant dither amplitude, a varying dither amplitude, a constant dither frequency, a varying dither frequency, or a combination of any of the above. The distribution of the dither (amplitudes, and or, frequencies) can be random, Gaussian or other profiles such as white noise, pink noise where the amplitude of a random signal decreases as the signal frequency increases while maintaining constant signal power per frequency increment.

In addition, the light intensity of the scanning beam may be adjusted by reducing the intensity at a position where the pyramidal error causes the horizontal lines to be denser and increasing the intensity at a position where the pyramidal error causes the horizontal lines to be sparser. This adjustment of light intensity can reduce the effect of the pyramidal error on the image quality.

Hence, based on the above, a scanning beam display system can be configured to include a polygon scanner having reflector facets and operable to rotate to scan an optical beam along a first direction (e.g., the horizontal direction) and a second scanner having a reflector to cause the optical beam to scan in a second direction (e.g., the vertical direction) perpendicular to the first direction. This system can include a control unit in communication with the second scanner to control scanning of the second scanner. The control unit can be operable to dither the second scanner to cause the optical beam to change its direction back and forth along the second direction during each scan at a dither frequency higher than a frame rate of an image carried by the optical beam. In one implementation, this system can include a mechanism to control a light intensity of the optical beam in a relation with pyramidal errors of different facets in the polygon scanner.

Also, based the above, a method for display can be provided to operate a scanning beam display. In this method, a polygon scanner having reflector facets is used to scan an optical beam along a first direction and a second scanner having a reflector is used to scan the optical beam in a second direction perpendicular to the first direction. The scanning of the optical beam is controlled to scan the optical beam with different facets of the polygon scanner at each horizontal scanning line in successive frames. In one implementation of this method, the second scanner can be dither to cause the optical beam to change its direction back and forth along the second direction during each scanning at a dither frequency higher than a frame rate of an image carried by the optical beam. In addition, the light intensity of the optical beam can be controlled in a relation with pyramidal errors of different facets in the polygon scanner to reduce the any visual effect of the pyramidal errors on the screen.

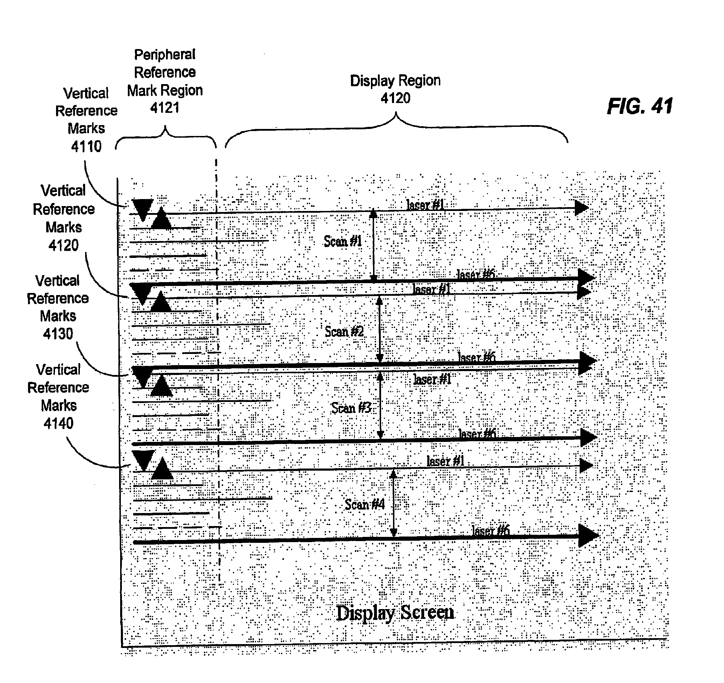

Referring to FIGS. 13-16, a fluorescent screen can have one or more peripheral reference mark regions outside the display region to provide vertical reference marks that measure the vertical position of a scanning beam. The screen design with one or more peripheral reference mark regions and vertical reference marks or other marks can be extended to passive screens without fluorescent materials. A detection circuit can be used to extract the vertical position information of the beam from the optical signals obtained from the reference marks. As described above, a feedback control can be applied to the galvo mirror 540 to correct a vertical shift caused by a pyramidal error of a facet in the polygon scanner 550. Because the pyramidal error can vary from facet to facet, the incident laser beams are not uniformly reflected to the display in the vertical dimension on each horizontal sweep. FIGS. 41, 42 and 43 show an exemplary implementation of a servo-based pyramidal correction using the vertical scanner and on-screen vertical reference marks for scanning display systems with either passive or active screens.

In this example, the scanning display has six lasers to direct six laser beams to the screen. Referring to FIG. 7, the six laser beams are scanned at the same time to over one segment of the screen at a time and then sequentially to scan other segments sequentially arranged in the vertical direction of the screen. One polygon facet scans all six laser beams along the horizontal direction to cover one vertical screen segment at a time and different polygon facets sequentially scan different vertical segments.

The screen in this system is designed to include vertical reference marks in each of the multiple vertical screen segments for monitoring the pyramidal error of the polygon scanner. FIG. 41 shows four exemplary successive horizontal scans labeled as Scan#1, Scan#2, Scan#3 and Scan#4 over four successive vertical screen segments, respectively, by four successive facets on the polygon scanner. Each scan has six laser beams from six lasers labeled as laser#1, laser#2, laser#3, laser#4, laser#5 and laser#6. The screen includes a peripheral reference mark region 4121 where displayed images do not appear and a central display region 4120 where the displayed images appear. In the peripheral reference mark region 4121, vertical reference marks 4110 are located in the upper left corner of the first vertical screen segment to measure the vertical location of the first laser beam from the laser#1. Similarly, vertical reference marks 4120, 4130 and 4140 are located in the upper left corner of the second, third and fourth vertical screen segments, respectively, to measure the vertical position of the laser beam from the laser#1. Alternatively, the vertical reference marks in each screen segment can be located at a different and known location to measure the vertical position.of the laser beam from the laser#1 or another laser beam. The vertical reference marks in each screen segment are used to measure a vertical position of one of the six laser beams and this measured vertical location is used to represent the vertical position of that laser scan reflected from a corresponding polygon facet. The vertical reference marks in each screen segment and the detection of the vertical position can be implemented by the examples in FIGS. 13-16.

When the polygon scanner is free of any pyramidal error, the laser scans #1 through #4 should be evenly spaced from one scan to another. The vertical position signals from the different vertical reference marks in different screen segments should either indicate an identical offset in the vertical position for each polygon facet, or no error in the vertical position of all scans. When the polygon scanner has a pyramidal error in at least one facet, the error signals are different. The position of the vertical scanner can be controlled to either equalize the errors in the vertical position or minimize the error in the vertical position to correct the effect of a pyramidal error on the screen.

In the illustrated four successive scans on the screen from four successive polygon facets, scan #1 and scan #2 are aligned vertically with their respective vertical reference marks and thus do not show pyramidal errors from the corresponding facets on the polygon scanner. However, the facets for producing the scan#3 and scan#4 show pyramidal errors: scan #2 and scan #3 are too close to each other because the scan#3 is too high in its vertical position, and scan #3 and #4 are too far apart because the scan#3 is too high vertically and the scan#4 is too low vertically. This is due to pyramidal error displacing the beam from facet to facet.

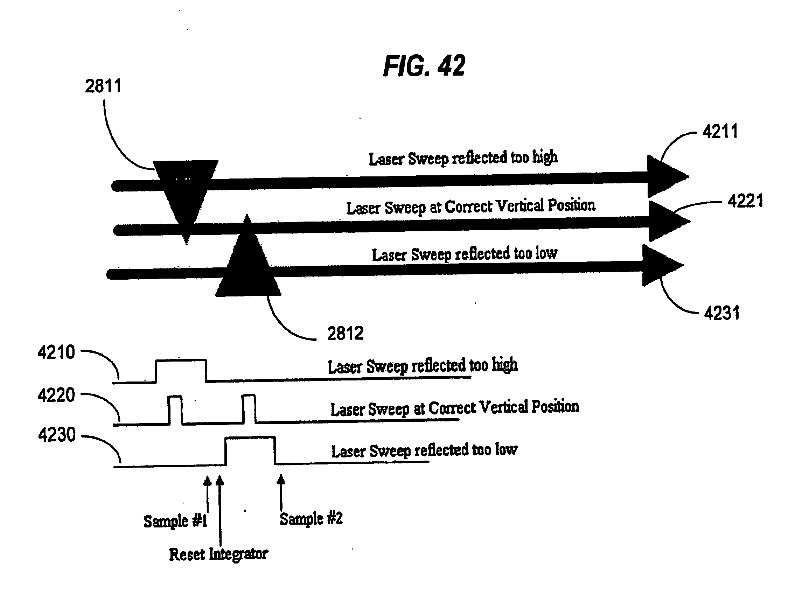

FIG. 42 illustrates operation of the vertical reference marks in each screen segment shown in FIG. 41 based on the reference mark in FIG. 13. Each reference mark includes two symmetric triangular reference marks 2811 and 2812 that are displaced from each other. In operation, laser light reflected from the triangular features 2811 and 2812 on the screen generates the waveform shown in the lower part of FIG. 42. The light from the first triangle is integrated. The detector circuit can be designed to generate a pulse with a pulse width proportional to the length of the scanning beam on each reference mark. The light from the second triangle reference mark 2812 is integrated, then compared to the value for the detector signal from the first triangle mark 2811. When the beam is vertically centered between the two triangle reference marks 2811 and 2812, subtracting the first integrated value from the second should result in zero. This error signal is passed to the micro-controller, which is used by the microcontroller to determine the amplitude and direction of the galvo position error, and to correct the corresponding pyramidal error in a subsequent scan by the same facet.

In the example illustrated in FIG. 42, the beam position 4211 is too high and thus generates a detector signal 4210. The difference between the pulses from the two reference marks is negative and indicates the beam's vertical position is too high. Accordingly, the next time the same facet performs a horizontal scan, the vertical scanner position is adjusted to offset this measured pyramidal error. As another example, the beam position 4221 is proper and generates two equal pulses in the detector signal 4220. The corresponding error signal is zero and no correction is needed for that facet. As yet another example, the beam position 4231 is too low and thus generates a detector signal 4230. The difference between the pulses from the two reference marks is positive and indicates the beam's vertical position is too low. Accordingly, the next time the same facet performs a horizontal scan, the vertical scanner is adjusted to offset this measured pyramidal error.

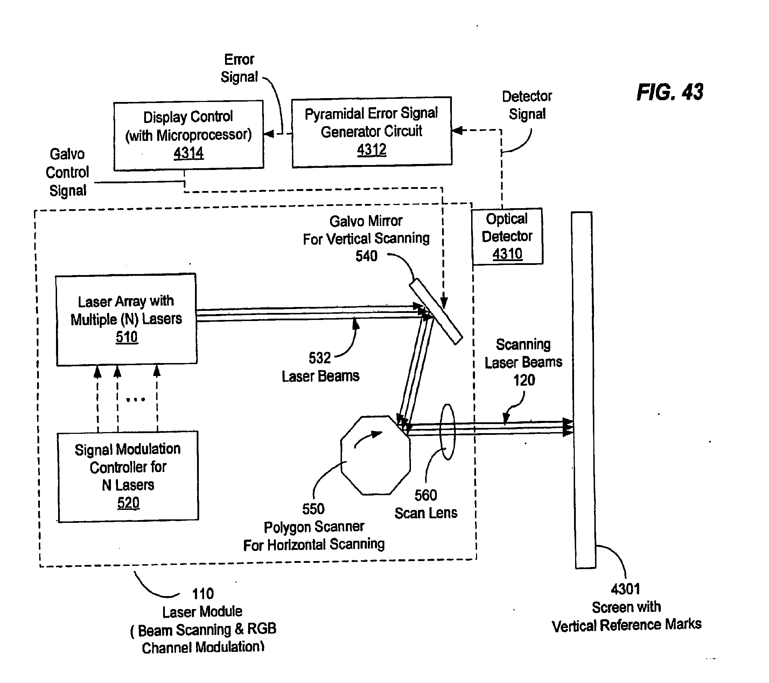

FIG. 43 shows a block diagram of the vertical scanner control. The screen 4301 has a peripheral reference region with vertical reference marks and a central display region for display images. An optical detector 4310 is at a location in front of the screen 4301 to receive light from the vertical reference marks and to produce a detector signal. A pyramidal error signal generator circuit 4312 is used to receive and process the detector signal to produce the error signal. For example, the circuit in FIG. 14A can be used to construct this circuit 4312. A control 4314 uses the error signal to produce a galvo control signal that controls the vertical position of the galvo mirror 540 to correct the detected pyramidal error of a respective polygon facet. The control 4314 may include a microprocessor or microcontroller which generates the control signal. In operation, the microcontroller uses the error signal described above to slightly re-position the galvo mirror 540 from its normal ramp position. This re-positioning corrects the small vertical deflection error of the laser beams caused by the pyramidal polygon error.

In a single frame, the laser beams are deflected from top to bottom of the screen 4301 in a continuous manner by a rotary motion of the galvo mirror 540. Ideally, the galvo mirror 540 scans in a continuous, linear angle to direct light from top to bottom of the screen 4301. However, during this vertical scanning, different successive polygon facets are involved in the horizontal scanning and thus a polygon pyramidal error for any of the horizontal scans need to be corrected by a small offset of the galvo mirror 540 at each respective horizontal scan in the middle of otherwise continuous vertical scanning by the galvo mirror 540. To avoid any visible effect on the screen, the small offset to the vertical positioning of the galvo mirror 540 is applied when the beam is in the peripheral reference mark region and outside the central display region of the screen 4301.

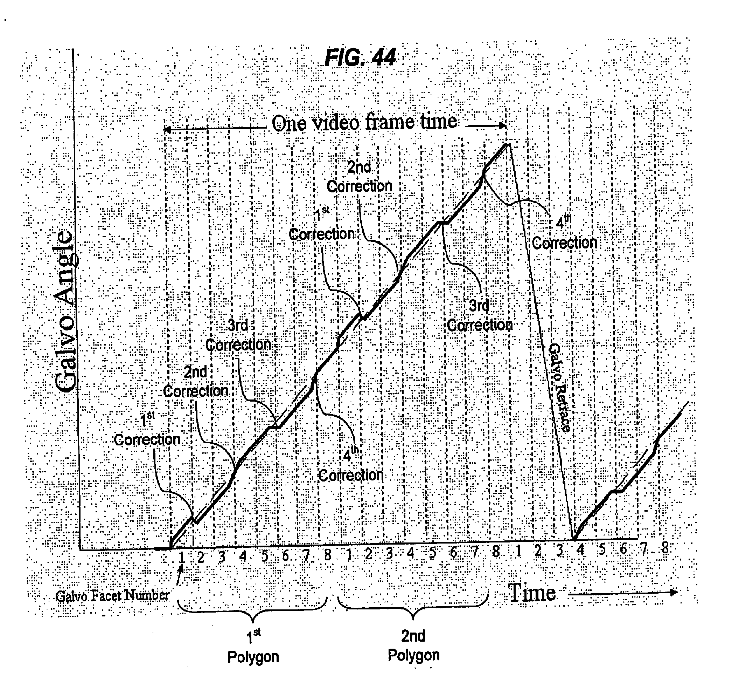

FIG. 44 illustrates the operation of the galvo mirror 540 in correcting pyramidal errors during the scanning for a single video frame on the screen 4301. In this example, a polygon scanner with eight facets is used as the scanner 550 and the screen 4301 is divided into sixteen vertical screen segments so that the polygon scanner 550 rotates two revolutions to scan through the entire screen and to produce a single video frame. As illustrated, each correction to the galvo angle is changed slightly between the end of one horizontal and the start of a subsequent new horizontal scan. During this transition time between the two successive horizontal scans, the laser beam is not viewable on the display. In the example, four pyramidal corrections are applied during one revolution of the polygon: a first correction at the beginning of the horizontal scan by the second facet which also applies to the next scan by the third facet, a second correction at the beginning of the horizontal scan by the fourth facet which continues to the fifth facet, and a third correction at the beginning of the horizontal scan by the sixth facet which continues to the seventh facet, and a fourth correction at the beginning of the eighth facet. The pattern for the correction has changes that are usually relatively small and form a microjog pattern. The same corrections are repeated for each revolution. In this example, the galvo retrace is done in a time for scanning through three polygon facets. The pattern in this example is slipped by three facet times, and the next video frame scan begins on facet #4. The microjog pattern repeats for each rotation of the polygon, and not for each video frame.

The microjog timing can be performed by the micro-controller in the control 4314 in FIG. 43, and the angle is increased or decreased by the amplitude and direction determined from the error signal. The polygon 550 can be configured to include a facet number sensor which provides facet ID numbers for the facets. The micro-controller receives the facet ID numbers and knows which facet on the polygon will be the next facet to direct the laser beams on the screen, and will control the galvo mirror 540 according to the sequence of the facets for the horizontal scanning.

The above pyramidal correction includes an error measurement mechanism based on vertical reference marks on the screen and optical detection of scattered or reflected light from the vertical reference marks to measure a pyramidal error of each polygon facet and an error correction mechanism that controls the vertical scanner in subsequent horizontal scans to correct the measured pyramidal error. Hence, as the pyramidal error changes, the error measurement mechanism can detect the change and thus can adjust the correction to the vertical scanner accordingly. This dynamic nature of the pyramidal correction can be used to enhance the display performance and to improve the reliability.

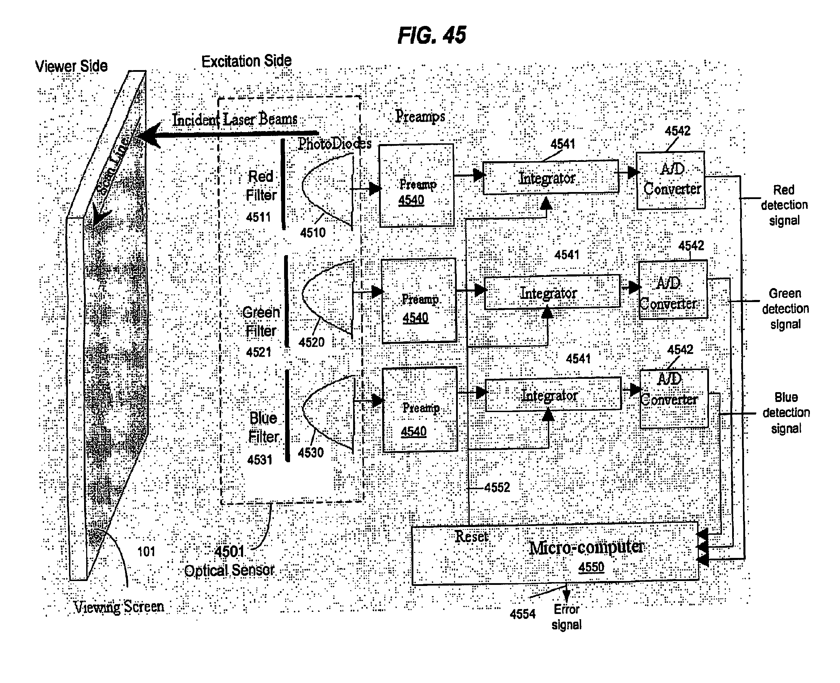

The following sections describe additional examples for generation of static and dynamic servo control signals using fluorescent light emitted by the fluorescent screen for controlling the timing of laser pulses in a scanning beam and alignment of the laser pulses on the screen. FIGS. 45-48 illustrate the examples below.

In one aspect, the servo control in the following examples is used to align the laser clock or the timing of laser pulses to illuminate the correct color sub-pixels on the screen as a laser beam is scanned along a horizontal scan across the fluorescent stripes on the screen. In the normal operation of such a system, a laser is pulsed to deliver optical pulses to selected subpixels on the screen to render images to be displayed by the fluorescent light generated by the fluorescent materials on the screen. The pulse amplitude, the pulse width or both can be controlled to produce a proper level of excited fluorescent luminance at each sub-pixel. The servo control is used to center a laser pulse on the center of a target subpixel to avoid illuminating an adjacent subpixel next to the target subpixel.

In some implementations, the servo control can include an error detection mechanism that detects the error in timing or alignment of the laser pulses with respect to the subpixels on the screen and a feedback control mechanism that reduces the detected error. For example, in the servo control in correcting the timing of the laser pulses, the control can be accomplished by varying the laser clock timing relative to a reference point along the horizontal direction, e.g., the peripheral reference mark for the start-of line (SOL). The error detection can be achieved by detecting and observing the relative amplitudes of Red, Green and Blue light coming from the fluorescent screen under excitation by the laser pulses.

Two different servo controls may be implemented: a static servo control and a dynamic servo control. The static servo feedback algorithm is performed once at the power-on of the display system before the system begins the normal display of the images on the screen. The display system is controlled to perform the initial clock calibration to align the laser pulses to the sub-pixel center positions. The dynamic servo feedback algorithm is performed after the initial power on of the system and can be, for example, continuously performed during the normal operation of the display system. This dynamic servo feedback keeps the pulses timed to the subpixel center position against variations in temperature, screen motion, screen warping, system aging and other factors that can change the alignment between the laser and the screen. The dynamic servo control is performed when the video data is displayed on the screen and is designed in a way that it is not apparent to the viewer. As described above, the laser beams are controlled to have a periodic delay signal which causes the laser pulses to be positively and negatively delayed in a periodic fashion in the time domain. As an example, the laser pulses can be advanced in phase by, e.g., one clock cycle of the clock in the servo digital circuit or microprocessor for one horizontal scan, and delayed in phase by, e.g., one clock cycle on the subsequent scan. In some implementations, the clock cycle of the servo digital circuit can be set so that the width of a subpixel corresponds to a scanning distance on the screen over 10 clock cycles, e.g., 16-20 clock cycles per subpixel. As an example, the duration of one clock cycle may be a few nanoseconds.

FIG. 45 illustrates an example of an optical servo design using an optical sensor 4501 placed away from a fluorescent screen 101 on the excitation side of the screen 101 in a scanning beam display system where the screen 101 is designed to allow at least some of the fluorescent light emitted by the fluorescent screen 101 to be present on the excitation side. In some implementations, the optical sensor 4501 may also be placed on the viewer side of the screen 101. The optical sensor 4501 may be configured and positioned to have a field of view of the entire screen 101. A collection lens may be used between the screen 101 and the sensor 4501 to facilitate collection of the fluorescent light from the screen 101. The optical sensor 4501 can include at least one optical detector to detect fluorescent light at a selected color, e.g., green from different colors (e.g., red, green and blue) emitted by the screen 101. Depending on the specific techniques used in the servo control, a single detector for a single color may be sufficient for the servo control in some implementations and, in other implementations, two or more optical detectors for detecting two or more colors of the fluorescent light from the screen 101 may be needed. Additional detectors may be used to provide detection redundancy for the servo control. Referring to the reference marks for generating reference signals, detection of such reference signals and control functions based on the reference signals described in FIGS. 11-19, the servo control can be combined with the control functions of the reference marks for the system. In an example described below, the start of line reference mark outside the screen area having the fluorescent stripes can be used as a timing reference for static servo control of the timing of optical pulses of the scanning beam.

In the example in FIG. 45, the optical sensor 4501 includes three servo optical detectors 4510, 4520 and 4530 (e.g., photodiodes) that detect, respectively, three different colors emitted by the screen 101. The photodiodes are arranged in three groupings and each group is filtered by a red filter 4511, a green filter 4521 or a blue filter 4531 so that three photodiodes 4510, 4520 and 4530 receive, respectively, three different colors. Each filter may be implemented in various configurations, such as a film which makes a photodiode sensitive only to one of the red, green and blue colors from the viewing screen. The detector circuit for each color group can include a preamplifier (preamp) 4540, a signal integrator (e.g., a charge integrator) 4541, and an A/D converter 4540 to digitize the red, green or blue detector signal for processing in a digital servo circuit 4550 which may be a microcomputer or microprocessor. The red, green and blue light intensities of the fluorescent light emitted from the screen can be measured and the measured results are sent to the digital servo circuit 4550. The digital servo circuit 4550 can generate and use a reset signal 4552 to reset the integrators 4541 to control the integration operation of the detectors. Using these signals, the digital servo circuit 4550 can determine whether there is an error in the alignment of a scanning laser beam on the screen 101 and, based on the detected error, determines whether the laser clock is to be advanced or delayed in time in order to center the laser pulses on the subpixels on the screen 101. The servo detection in FIG. 45 may be implemented in various scanning display systems, such as the system in FIG. 10, and may be used for both static servo control during the power-on stage of the system when the screen does not display images and dynamic servo control during the normal operation of the system when images are displayed on the screen.

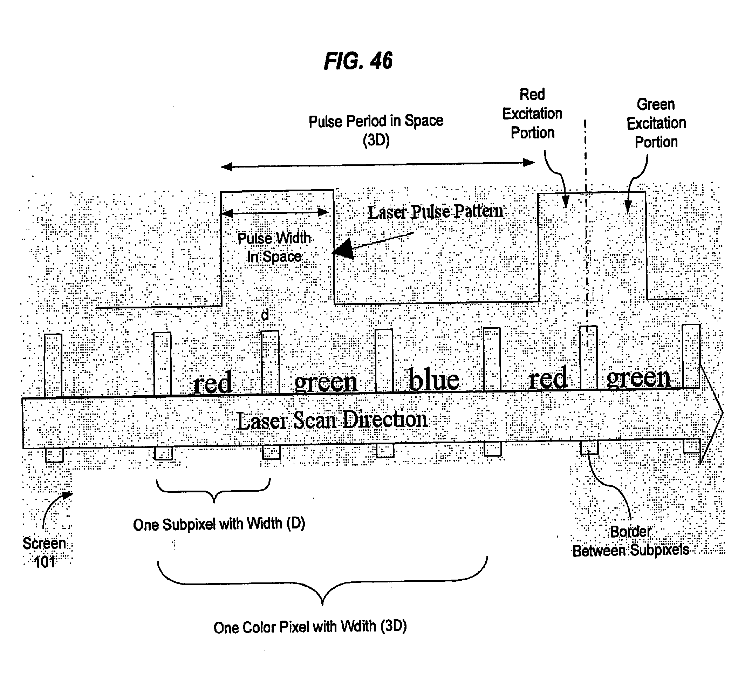

The static servo control operations described here are performed when the display system is not in the normal operation for displaying images on the screen. Hence, the regular frame scanning in both directions using the galvo vertical scanner and the polygon horizontal scanner during the normal operation can be avoided. The vertical scanning by the galvo scanner can be used to direct a scanning laser beam at a desired vertical position and fixed at that position to perform repetitive horizontal scans with different time delays in the laser pulse timing to obtain the desired error signal indicating the laser timing error in the horizontal scan. In addition, a special laser pulse pattern (e.g., FIG. 46) that does not.carry image signals can be used during the static servo operation to generate the error signal.

In the static servo control, the laser pulse pattern for a laser can be chosen to generate a signal that is proportional to the position error of the laser pulses on the screen 101. In one implementation where multiple lasers are used, each laser is pulsed one at a time across the screen 101 and the remaining lasers are turned off. This mode of operation allows the timing for each laser to be measured and corrected independently during a static servo control process.

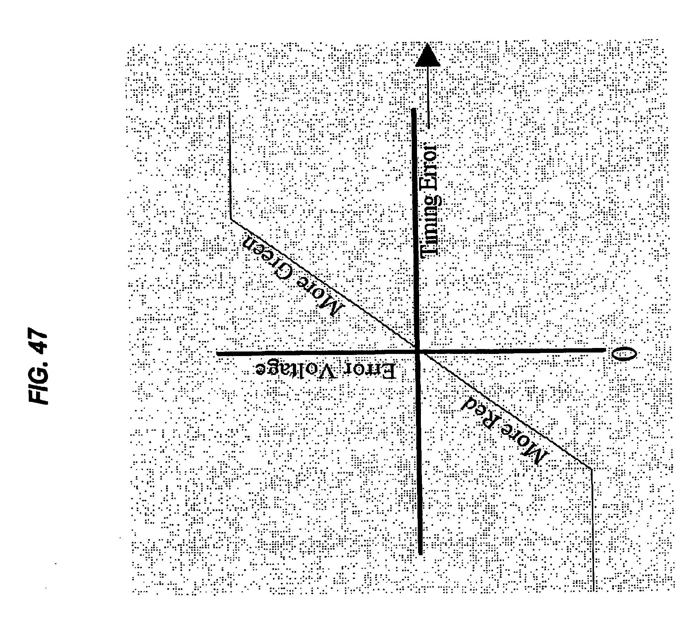

FIGS. 46 and 47 illustrate one example technique for generating the error signal for implementing the static servo control. FIG. 46 shows an example of a test optical pulse pattern modulated onto a scanning laser beam that has a periodic pulse pattern of laser pulses. The pulse width in time of this test pulse pattern corresponds to a spatial width on the screen that is greater than the width (d) of the border between two adjacent subpixels and less than twice of the width (D) of a subpixel (one fluorescent stripe). For example, the pulse width in time of this pulse pattern corresponds to a spatial width equal to the width (D) of a subpixel. The repetition time of the pulse pattern corresponds to a spatial separation of two adjacent laser pulses on the screen that is equal to the width (3D) of one color pixel (three successive fluorescent stripes).

In operation, the timing of the laser pulse pattern in FIG. 46 is adjusted so that each laser pulse partially overlaps with one subpixel and an adjacent subpixel to excite light of different colors in the two adjacent subpixels. Hence, a laser pulse overlapping with two adjacent subpixels (e.g., a red subpixel and a green subpixel) has a red excitation portion that overlaps with the red subpixel to produce red light and a green excitation portion that overlaps with the adjacent green subpixel to produce green light. The relative power levels of the emitted red light and the emitted green light are used to determine whether the center of the laser pulse is at the center of the border between two adjacent subpixels and the position offset between the center of the laser pulse and the center of the border. Based on the position offset, the servo control adjusts the timing of the laser pulse pattern to reduce the offset and to align the center of the laser pulse at the center of the border. Upon completion of this alignment, the servo control advances or delays the timing of the laser pulse pattern to shift each laser pulse by one half of the subpixel width to place the center of the laser pulse to the center of either of the two adjacent subpixels. This completes the alignment between a laser and a color pixel. During the above process, the vertical scanner is fixed to direct the laser under alignment to a fixed vertical position and the horizontal polygon scanner scans the laser beam repetitively along the same horizontal line to generate the error signal.

The above process uses the relative power levels of the emitted red light and the emitted green light to determine position offset between the center of the laser pulse and the center of the border between two adjacent subpixels. One way to implement this technique is to use a differential signal based on the difference in the amounts of light emitted by the two different phosphor materials. A number of factors in the servo detection in FIG. 45 can affect the implementation. For example, different fluorescent materials for emitting different colors may have different emission efficiencies at a given excitation wavelength so that, under the same scanning excitation beam, two adjacent subpixels can emit light in two different colors (e.g., green and red) with different power levels. As another example, the color filters 4511, 4521 and 4531 for transmitting red, green and blue colors may have different transmission values. As yet another example, the optical detectors 4510, 4520, and 4530 may have different detector efficiencies at the three different colors and thus for the same amount of light entered into the detectors at different colors, the detector outputs may be different. Now consider the condition where the center of a laser pulse is aligned to the center of the border between two adjacent subpixels and thus the laser pulse is equally spit between the two adjacent subpixels. Due to the above and other factors, the servo optical detectors corresponding to the emission colors of the two adjacent subpixels may produce two detector outputs of two different signal levels when the laser pulse is equally spit between the two adjacent subpixels. Hence, for a given display system, the servo detector signals can be calibrated to account for the above and other factors to accurately represent the position offset of the laser pulse. The calibration can be achieved via the hardware design, software in the digital signal processing in the servo digital circuit 4550 in FIG. 45, or a combination of both the hardware design and signal processing software. In the following sections, it is assumed that the proper calibration is implemented so that the calibrated detector outputs from two different servo optical detectors are equal when the laser pulse is equally spit between the two adjacent subpixels.

Therefore, under a proper alignment condition, each of the laser pulses has one half of the pulse over a green subpixel, and the remaining one half of the same pulse over an adjacent red subpixel. This pulse pattern generates equal amounts of red and green light on the servo detectors when the alignment is proper. Therefore, the difference in the detector output voltage between the red detector and the green detector is an error signal that indicates whether the alignment is proper. When the alignment is proper, the differential signal between the red and green detectors is zero; and, when the alignment is off from the proper alignment, the difference is either a positive value or a negative value indicating the direction of the offset in alignment. This use of a differential signal between two color channels can be used to negate the importance of measuring the absolute amplitude of the light emanated from the viewing screen phosphor. Alternatively, the difference between two different color channels, the blue and red detectors or the green and blue detectors, may also be used to indicate the alignment error. In some implementations, because the blue light is closest to the incident excitation laser light wavelength, it can be more practical to use the difference between the green and red detectors for the servo control. An optical sensor for detecting light from the reference mark, which is separate from the optical sensor 4501 for detecting the fluorescent feedback light from the screen in FIG. 45, is used to generate the detection signal and is connected to the digital servo circuit 4550.

In the static servo control, the start of the timing scan can be corrected first using the test pulse pattern in the scanning laser beam. The timing is corrected for the first group of adjacent pixels along the horizontal scan (e.g., 5 pixels), then the next group of adjacent pixels of the same size, e.g., the next 5, then the next 5, until the entire scan has been corrected for a given laser. Here, the number of 5 pixels is chosen as an example for illustration. Such grouping can be used to reduce the amount of time needed for the servo control and to increase the signal-to-noise ratio of the error signal when the signals generated from different pixels in one group are integrated. In practice, the number of pixels for each of the groups can be selected based on specific requirements of the display system. For example, the severity of the initial timing error may be considered where a small timing error may permit a large number of successive pixels to be in a group for the servo control and a large timing error may require a smaller number of successive pixels to be grouped together for the servo control. In each measurement, the timing error of the scanning beam can be corrected to one clock cycle of the digital clock of the digital servo circuit 4550. In FIG. 45, digital servo circuit 4550 is a micro-controller which is designed to have timing control for each individual laser and is used to correct the timing of the laser pulse for each pixel.

Notably, many phosphors exhibit persistence in fluorescent emission. This property of phosphors can cause the phosphor to produce light after the laser pulse has moved to the next pixel. Referring to FIG. 45, the signal integrator 4541 can be connected at the output of the preamp 4540 for each servo detector to offset this effect of the phosphor. The integrator 4541 can be used to effectively "sum" all the light for a given preamp 4540 over multiple pixels while the reset line for the integrator is low to set the integrator in the integration mode. When the micro-controller initiates an A/D sample, the summed light for a given color is sampled. The reset line 4552 for each integrator 4541 then goes high until the integrator voltage is set back to zero to reset the integrator 4541 and is subsequently released back to low to restart a new integration period during which the integrator 4541 starts summing the light again.

FIG. 47 illustrates how the error signal varies as the laser timing is varied from its nominal position directly centered between the red and green subpixels using the laser pulse pattern in FIG. 46. When the error voltage of a differential signal based on the laser pulse pattern in FIG. 46 is equal to zero as shown in FIG. 47, there are equal amounts of Red and Green light on the red and green servo detectors, and the timing of the laser pulses is directly over the borders between two adjacent sub-pixels. In this manner, the error signal at each sample represents the laser timing error only for the period after the previous reset pulse. Using this scheme, a corrected laser timing map can be generated for each laser on every horizontal sweep until the entire screen timing is corrected for each laser. The vertical scanner is used to change the vertical position of the horizontal scanning beam from each laser.

The above technique for generating the static servo error signal uses a border between the two adjacent subpixels as an alignment reference to align the laser pulse in a laser pulse pattern. Alternatively, the center of each subpixel may be directly used as an alignment reference to center the laser pulses directly over the subpixels without using the borders between two adjacent subpixels. Under this alternative method, the output from a single color servo optical detector is sufficient to generate the error signal for the servo control. An alignment reference mark, such as the start of line (SOL) peripheral alignment reference mark in FIG. 12 and a separate SOL optical detector that detects the feedback light from the SOL mark, can be used to provide a timing reference and assist the alignment. Referring to FIG. 45, the SOL optical detector is connected to direct its output to the digital servo circuit 4550.

This alternative static servo technique can be implemented as the follows. A test pulse pattern that has at least one pulse corresponding to one subpixel within a pixel used to modulate the scanning laser beam where the pulse width corresponds to one subpixel width (D) or less. In a horizontal scan, the laser timing is adjusted on the first group of subpixels of the scan after the SOL signal is detected by the SOL optical detector. Based on the timing reference from the SOL signal, the laser timing of the laser pulse pattern is adjusted to maximize the detected optical power of one of the three colors emitted by the fluorescent screen, e.g., the Green light (or Red, or Blue). The adjustment can be achieved by pulsing the laser once per pixel and adjusting the laser timing. When the Green light is maximized on the first 5 pixels, the next five green subpixels are pulsed. The timing is advanced by one clock cycle during one horizontal scan, then delayed by one clock cycle on subsequent laser horizontal scans at the same vertical position on the screen. The timing that produces the maximum Green light is chosen as the correct laser timing: If the output signal from advancing the clock cycle is equal to the output signal form delaying the clock cycle, then the laser timing is proper and is left unchanged. The next 5 pixels are then illuminated with the advanced and delayed laser clock cycles, and the timing that produces the maximum Green light is chosen for this group of 5 pixels. This operation is repeated across the horizontal length of the screen until the end of the screen is reached. This method can also produce a laser clock that is corrected for each laser as the beam from the laser sweeps horizontally across the screen.

The above static servo control operations are performed when the display system is not in the normal operation and thus a test pulse pattern (e.g., FIG. 46) that does not carry image signals can be used. The dynamic servo correction is performed during normal operation and viewing of images on the screen. Hence, the error detection needs to be achieved using the image-carrying scanning beam that excites the fluorescent screen without using a separate test pulse pattern. When both static and dynamic servo controls are implemented, the test pulse pattern is applied to the scanning beam during a power-on stage when images to be shown on the screen to a viewer are not displayed on the screen, and, subsequently after the power-on stage, the test pulse pattern modulated on the scanning beam is replaced by a pulse sequence carrying the images to be shown during a normal operation. During the normal operation, the laser pulses are supposed to be centered directly over respective subpixels on the screen to ensure desired display image quality. In a scanning display system with multiple lasers in a scanning mode in FIG. 7 (e.g., the system in FIG. 5), scanning laser beams from the multiple lasers circumscribe an area (e.g., approximately 1 inch X 1 inch) on the viewing screen. During the normal operation, the normal raster frame scanning is performed so that a particular horizontal scan occurs once in a frame. In order to obtain error measurements on the same horizontal scan line with different laser pulse timing delays, different frame scans are needed to generate the error signal.

On a given horizontal scan, all the lasers can be advanced in phase by one clock cycle of the digital circuit 4550. This operation causes all the laser beams to shift in their positions on the screen by a scanning distance over the one clock cycle and this shift is small when the scanning distance is small (e.g., less than one tenth of the subpixel width). Accordingly, the amplitude of the emitted color light from a subpixel (e.g., the green detector) is slightly changed. On the next frame, all the lasers are delayed in phase by one clock cycle. If the nominal laser pulse position is initially correct, the amplitudes of the delayed and advanced scans of the two different and successive image frames should be equal for any color chosen to be measured and observed. When the amplitudes of the delayed and advanced scans of two different frames are different, there is a laser timing error and a correction can be applied to the laser timing to reduce the difference in subsequent image frames while the error signal is being monitored and the correction is updated based on the newly generated error signal. The sign of the difference indicates the direction of the offset in the laser timing error so that the servo control can apply the correction to negate the offset. Similar to the second static servo control method described above, the output from a single color servo optical detector is sufficient to generate the error signal for the dynamic servo control.

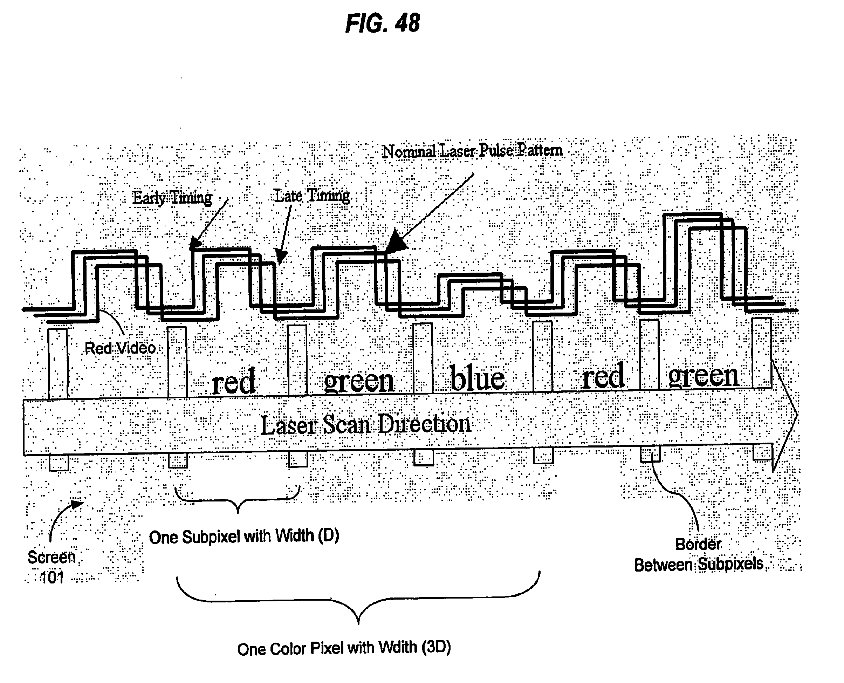

FIG. 48 illustrates an example of generation of the dynamic feedback servo signal on successive horizontal laser scans. When advancing or delaying the laser timing by one clock cycle, a color shift in the displayed image on the screen can be avoided by advancing or delaying all the pulses for all colors. In this manner, all the colors are made slightly brighter or dimmer in intensity, thus avoiding undesired color shift. Because two successive image frames may have very different luminance contents, the servo can normalize the servo optical detector signals to cancel the effect of amplitude difference between subsequent frames. As an example, the final error signal generated by the micro-controller can be normalized by:

$$ErrorSignal = (Vtick\,/\,LaserAmplitude) - (Vtock\,/\,LaserAmplitude)$$

where the LaserAmplitude value is the sum of the laser drive for the color being used for the servo control, the values of Vtick and Vtock are voltage outputs of the integrator for advancing and delaying one clock cycle in the two successive frames, respectively. If the error signal is zero, then the nominal laser pulse position is centered on the subpixels. Advancing or delaying the laser pulses from their nominal value (centered directly on the subpixels), will cause the light emanated from the screen to decrease. If the light increases when the laser pulse timing is varied, then the optical system has shifted slightly in position and the timing of the pulses must be adjusted until the error signal is zero again.

The dynamic servo system can correct motion variations in the screen of the same approximate size of the laser pattern on the screen for the multiple laser beams, e.g., approximately 1 inch X 1 inch. This is because all the lasers are advanced and delayed together in phase, and illuminate an area approximately 1 X 1 inch. Further refinement may allow advancing and delaying the phase of part of the lasers, e.g., one half or fewer and the amplitude of the error signal may decrease accordingly.

While this specification contains many specifics, these should not be construed as limitations on the scope of an invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable subcombination.

**Claims**

1.   A scanning beam display system, comprising:

an optical module (110) including a polygonal scanning mirror operable to produce a scanning beam of excitation light (120) having optical pulses that cany image information; and
a fluorescent screen (101) which absorbs the excitation light (120) and emits visible fluorescent light to produce images carried by the scanning beam (120);
wherein the optical module (110) comprises a feedback control unit (320) operable to adjust timing of the optical pulses carried by the scanning beam (120) in response to a monitor signal (812) to control the spatial alignment of spatial positions of the optical pulses on the fluorescent screen (101); **characterised by**
an optical sensor (810, 110, 1210) positioned to receive a feedback optical signal (1201) from the fluorescent screen (101) generated by the scanning beam (120) and arranged to produce the monitor signal (812), which indicates a spatial alignment of the optical pulses on the fluorescent screen (101), wherein the feedback optical signal comprises feedback light at a wavelength different from a wavelength of the excitation light (120).

2.   The system as in claim 1, wherein:

the screen (101) comprises a display area (2600) comprising parallel fluorescent stripes which produce the images carried by the scanning beam (120), and a start of line servo reference mark (2710) outside the display area (2600) comprising the fluorescent stripes in a beam scanning path perpendicular to the fluorescent stripes, the start of line servo reference mark (2710) producing a start of line servo feedback light when illuminated by the scanning beam (120) to indicate a position of the scanning beam (120) from the fluorescent stripes;
the system further comprises a start of line optical detector located to receive the start of line servo feedback light and to produce a start of line signal, and
the optical module (110) is operable to use the start of line signal to control the timing of the optical pulses to be at a time when the scanning beam (120) reaches a beginning position of the fluorescent stripes in the display area (2600).

3.   The system as in claim 1, wherein:

the screen (101) comprises a display area (2600) comprising parallel fluorescent stripes which produce the images carried by the scanning beam (120), a vertical beam position servo reference mark (2810, 4110) outside the fluorescent stripes in a beam scanning path perpendicular to the fluorescent stripes, and a vertical beam position servo reference mark (2810, 4110) outside the fluorescent stripes in a beam scanning path perpendicular to the fluorescent stripes and structured to produce a vertical beam position servo feedback light when illuminated by the scanning beam (120) to indicate an offset of a vertical beam position from a predetermined vertical beam position in a vertical direction that is parallel to the fluorescent stripes;

the system further comprises: an optical detector located to receive the vertical beam position servo feedback light and to produce a vertical beam position servo signal; and

the optical module (110) is operable to use the vertical beam position servo signal to control a direction of the scanning beam (120) to reduce the offset of the vertical beam position on the screen (101).

4. The system as in claim 3, wherein:

the vertical beam position servo reference mark (2810, 4110) comprises first and second servo marks (2811, 2812) separated from each other along the beam scanning path; and

the optical module (110) is operable to use a difference in reflection from the first and second servo marks (2811, 2812) to determine the direction of the offset of the vertical beam position on the screen (101).

5. The system as in claim 3, wherein:

the vertical beam position servo reference mark (2810, 4110) comprises first and second servo marks (2811, 2812) separated from each other along the beam scanning path; and

the optimal module (110) Is operable to use a time difference in receiving optical signals from the first and second servo marks (2811, 2812) to determine the direction of the offset of the vertical beam position on the screen (101).

6. The system as in claim 1, wherein:

the screen (101) comprises a display area (2800) comprising parallel fluorescent stripes which produce the images carried by the scanning beam (120), and a beam focus sensing reference mark (3310) outside the fluorescent stripes in a beam scanning path perpendicular to the fluorescent stripes, the beam focus sensing reference mark (3310) producing a beam focusing servo feedback light when illuminated by the scanning beam (120) to indicate a beam spot size of the scanning beam (120) on the screen (101);

the system further comprises a beam focus optical detector located to receive the beam focusing servo feedback light and to produce a beam focus servo signal; and

the optical module (110) is operable to use the beam focus servo signal to control a focus of the scanning beam (120) to control the beam spot size of the scanning beam (120) on the screen (101).

7. The system as in claim 1, wherein:

the screen (101) comprises a display area (2600) comprising parallel fluorescent stripes which produce the images carried by the scanning beam (120), and a power sensing reference mark (3410) outside the fluorescent stripes in a beam scanning path perpendicular to the fluorescent stripes to produce a beam power servo feedback light when illuminated by the scanning beam (120) to indicate a power level of the scanning beam (120) on the screen (101);

the system further comprises an optical power monitor detector located to receive the beam power servo feedback light and to produce a beam power servo signal; and

the optical module (110) is operable to use the beam power servo signal to control a power of the scanning beam (120) on the screen (101).

8. The system as in claim 1, wherein:

the screen (101) comprises parallel fluorescent stripes which emit fluorescent light of three different colors from three successive fluorescent stripes to produce the images carried by the scanning beam (120),

the feedback optical signal (1201) is a portion of the visible fluorescent light emitted by the screen (101),

the optical sensor (810, 1010, 4501) comprises a first optical filter (4511) to filter the feedback optical signal (1201) to select the visible fluorescent light of a first color of the three different colors, and a first optical detector (4510) to receive light of the first color from the first optical filter (4511), and wherein the optical sensor (810, 1010, 4501) produces the monitor signal based on at least the received light of the first color, and

the feedback control unit (320) in the optical module (110) processes the monitor signal (812) to extract an error in timing of the optical pulses in the scanning beam (120) along a scanning direction perpendicular to the parallel fluorescent stripes on the screen (101) and to control the timing of the optical pulses in the scanning beam (120) to reduce the error.

9. The system as in claim 8, wherein:

the optical module (110) is operable to produce a test pulse pattern for the optical pulses in the scanning beam (120) to output at least one optical pulse when the scanning beam (120) scans through every three successive parallel fluorescent stripes,
the optical sensor (1210) further comprises a second optical filter (4521) to filter the feedback optical signal (1201) to select the visible fluorescent light of a second color of the three different colors, and a second optical detector (4520) to receive light of the second color from the second optical filter, and wherein the optical sensor (810, 1010, 4501) produces the monitor signal based on at least the received light of the first color and the received light of the second color, and
the feedback control unit (320) in the optical module (110) is operable to use a difference between the received light of the first color and the received light of the second color to indicate the error in timing of the optical pulses in the scanning beam (120).

10. The system as in claim 9, wherein:

the optical module (110) is operable to apply the test pulse pattern to the scanning beam (120) during a power-on stage when images to be shown on the screen (101) to a viewer are not displayed on the screen (101), and to, subsequently after the power-on stage, terminate the test pulse pattern and apply a pulse sequence carrying the images to be shown to the scanning beam (120) during a normal operation.

11. The system as in claim 1, wherein:

the optical module (110) comprises a first scanner (540) to scan along a first direction the scanning beam (120) having optical pulses that can carry image information, and a second scanner (550) having a polygon with a plurality of reflective facets to rotate around a rotation axis that is along the first direction to scan the scanning beam (120) along a second direction perpendicular to the first direction;
the screen (101) comprises (1) a display region (2600, 4120) which displays images carried by the scanning beam (120) by the emitted visible fluorescent light, and (2) reference marks (2810, 4110) positioned in paths along the second direction of the scanning beam on the screen and displaced from one another along the first direction, each reference mark (2810, 4110) operable to produce an optical monitor signal when illuminated by the scanning beam (120); and
the system further comprises:

an optical detector (4310) positioned to receive the optimal monitor signal from the screen (101) and to produce a detector signal containing information on a position offset of the least one scanning beam (120) relative to a respective reference mark on the screen (101); and
a first scanner control (4314) that measures a pyramidal error of the polygon from the detector signal and controls scanning of the second scanner (550) to correct the position offset caused by the pyramidal error.

12. The system as in claim 11, wherein:

the first scanner control (4314) comprises a mechanism that identifies a facet of the polygon that generates the measured pyramidal error and controls the scanning of the second scanner (550) to correct the position offset caused by the pyramidal error when the identified facet subsequently scans the scanning beam (120).

13. The system as in claim 1, wherein:

the optical module (110) comprises a first scanner (540) to scan the scanning beam (120) along a first direction and a second scanner (550) comprising a polygon having reflective facets and operable to spin aground an axis parallel to the first direction and to use the reflective facets to scan the scanning beam (120) along a second, perpendicular direction;
the screen (101) comprises (1) a fluorescent area (2600) having a plurality of parallele fluorescent stripes each along the first direction and spatially displaced from one another along the second direction and (2) a peripheral servo reference mark area (2610, 4121) outside the fluorescent area (2600), wherein fluorescent stripes absorb the excitation light and emit visible fluorescent light to produce images carried by the scanning beam (120), and the fluorescent area (2600) comprises a plurality of first servo reference marks (1312) producing a first feedback optical signal to indicate a spatial alignment of the optical pulses to the fluorescent stripes along the second direction, and wherein the peripheral servo reference mark area (2610, 4121) comprises a plurality of second servo reference marks (2810, 4110) each producing a second feedback optical signal under illumination of the scanning beam (120) indicating a position offset of the scanning beam along the first direction;

the optical sensor (1210) comprises a first optical sensor (1210) positioned to receive the first feedback optical signal and to produce a first monitor signal indicating the spatial alignment of the optical pulses relative to the fluorescent stripes, and a second optical sensor positioned to receive the second feedback optical signal and to produce a second monitor signal indicating the position offset of the scanning beam along the first direction when scanned by a respective reflective facet; and

the feedback control unit (320) is operable to adjust the scanning beam (120) in response to the first and second monitor signals to control at least the spatial alignment of spatial positions of the optical pulses relative to the fluorescent stripes and to reduce the position offset of the scanning beam (120) along the first direction.

**14.** The system as in claim 1, wherein:

the screen (101) comprises (1) a fluorescent area (2600) having a plurality of parallel fluorescent stripes each along the first direction and spatially displaced from one another along the second direction, the fluorescent stripes absorbing the excitation light and emitting visible fluorescent light to produce images carried by the scanning beam (120), the fluorescent area (2600) comprising a plurality of first servo reference marks (1312) producing a first feedback optical signal to indicate a spatial alignment of the optical pulses in the fluorescent area (2600), and (2) a peripheral servo reference mark area (2610, 4121) outside the fluorescent area (2600) to comprise a plurality of second servo reference marks each producing a second feedback optical signal under illumination of the scanning beam (120) indicating a spatial alignment of the scanning beam (120) relative to the fluorescent area (2600);

the optical sensor (1210) comprises a first optical sensor (1210) positioned to receive the first feedback optical signal from the fluorescent area of the screen (101) and to produce a first monitor signal indicating the spatial alignment of the optical pulses relative to the fluorescent stripes, and a second optical sensor positioned to receive the second feedback optical signal from the peripheral servo reference mark area (2610, 4121) and to produce a second monitor signal indicating the spatial alignment of the scanning beam (120) with respect to the fluorescent area (2600); and

the feedback control unit (320) is operable to adjust the scanning beam (120) in response to the first and second monitor signals to control spatial positions of the optical pulses relative to the fluorescent stripes.

**15.** The system as in claim 1, wherein:

the screen (101) comprises parallel fluorescent stripes which produce the images carried by the scanning beam (120), and servo reference marks (1312) respectively located at boundaries of the fluorescent stripes to produce the feedback optical signal (1201) under illumination of the scanning beam (120), wherein the feedback optical signal (1201) varies in amplitude with a position of the scanning beam (120) across each fluorescent stripe,

the optical module (110) is operable to create a temporal variation in timing of the optical pulses in the scanning beam (120) to shift positions of the optical pulses on the screen (101) along a beam scanning direction perpendicular to the fluorescent stripes, and

the feedback control unit (320) is operable to adjust timing of the optical pulses in response to information in the monitor signal to direct a position of each optical pulse towards a center of a fluorescent stripe along the beam scanning direction.

**Patentansprüche**

**1.** Abtaststrahl-Anzeigesystem, umfassend:

ein optisches Modul (110), das einen polygonalen Abtastspiegel beinhaltet, der zum Erzeugen eines Abtaststrahls von Erregungslicht (120) funktionell ist, der optische Impulse hat, die Bildinformationen tragen, und einen Leuchtschirm (101), der das Erregungslicht (120) absorbiert und sichtbares fluoreszierendes Licht abstrahlt, um Bilder zu erzeugen, die von dem Abtaststrahl (120) getragen werden, wobei das optische Modul (110) eine Rückkopplungsregelungseinheit (320) aufweist, die zum Einstellen der Zeitsteuerung der optischen Pulse, die von dem Abtaststrahl (120) getragen werden, als Reaktion auf ein Monitorsignal (812) zum Steuern der räumlichen Ausrichtung räumlicher Positionen der optischen Pulse auf dem Leuchtschirm (191) funktionell ist, **gekennzeichnet durch**

einen optischen Sensor (810, 110, 1210), der zum Empfangen eines optischen Rückkopplungssignals (1201) von dem Leuchtschirm (101) positioniert ist, das von dem Abtaststrahl (120) generiert wird und zum Erzeugen des Monitorsignals (812) angeordnet ist, das eine räumliche Ausrichtung der optischen Pulse auf dem Leuchtschirm (101) anzeigt, wobei das optische Rückkopplungssignal Rückkopplungslicht mit einer Wellenlänge aufweist, die sich von einer Wellenlänge des Erregungslichts (120) unterscheidet.

**2.** System nach Anspruch 1, wobei:

der Bildschirm (101) einen Anzeigebereich (2600), der parallele fluoreszierende Streifen aufweist, welche die von dem Abtaststrahl (120) getragenen Bilder erzeugen, und eine Zeilenanfangsservobezugsmarkierung (2710) außerhalb des Anzeigebereichs (2600), der die fluoreszierenden Streifen aufweist, in einem zu den fluoreszierenden Streifen lotrechten Strahlabtastweg aufweist, wobei die Zeilenanfangsservobezugsmarkierung (2710) ein Zeilenanfangsservorückkopplungslicht erzeugt, wenn sie von dem Abtaststrahl (120) beleuchtet wird, um eine Position des Abtaststrahls (120) von den fluoreszierenden Streifen anzuzeigen,
das System ferner einen optischen Zeilenanfangs-Detektor aufweist, der zum Empfangen des Zeilenanfangsservorückkopplungslichts und zum Erzeugen eines Zeilenanfangssignals angeordnet ist, und
das optische Modul (110) funktionell ist zur Verwendung des Zeilenanfangssignals zum Steuern der Zeitsteuerung der optischen Pulse, so dass sie zu einer Zeit erfolgen, wenn der Abtaststrahl (120) eine Ausgangsposition der fluoreszierenden Streifen in dem Anzeigebereich (2600) erreicht.

**3.** System nach Anspruch 1, wobei:

der Bildschirm (101) Folgendes aufweist: einen Anzeigebereich (2600), der parallele fluoreszierende Streifen aufweist, welche die von dem Abtaststrahl (120) getragenen Bilder erzeugen, eine Servoreferenzmarkierung für die vertikale Strahlposition (2810, 4110) außerhalb der fluoreszierenden Streifen in einem Strahlabtastweg, der lotrecht zu den fluoreszierenden Streifen ist, und eine Servoreferenzmarkierung für die vertikale Strahlposition (2810, 4110) außerhalb der fluoreszierenden Streifen in einem Strahlabtastweg, der lotrecht zu den fluoreszierenden Streifen ist und zum Erzeugen eines Servorückkopplungslichts für die vertikale Strahlposition strukturiert ist, wenn sie von dem Abtaststrahl (120) belichtet wird, um ein Offset einer vertikalen Strahlposition von einer vorbestimmten vertikalen Strahlposition in einer vertikalen Richtung, die zu den fluoreszierenden Streifen parallel ist, anzuzeigen,
wobei das System ferner Folgendes aufweist: einen optischen Detektor, der zum Empfangen des Servorückkopplungslichts für die vertikale Strahlposition und zum Erzeugen eines Servosignals für die vertikale Strahlposition angeordnet ist, und
das optische Modul (110) funktionell ist zur Verwendung des Servosignals für die vertikale Strahlposition zum Steuern der Richtung des Abtaststrahls (120), um das Offset der vertikalen Strahlposition auf dem Bildschirm (101) zu reduzieren.

**4.** System nach Anspruch 3, wobei:

die Servoreferenzmarkierung für die vertikale Strahlposition (2810, 4110) eine erste und eine zweite Servomarkierung (2811, 2812) aufweist, die an dem Strahlabtastweg entlang voneinander getrennt sind, und
das optische Modul (110) funktionell ist zum Verwenden einer Differenz der Reflektion von der ersten und der zweiten Servomarkierung (2811, 2812), um die Richtung des Offsets der vertikalen Strahlposition auf dem Bildschirm (101) zu ermitteln.

**5.** System nach Anspruch 3, wobei:

die Servoreferenzmarkierung für die vertikale Strahlposition (2810, 4110) eine erste und eine zweite Servomarkierung (2811, 2812) aufweist, die an dem Strahlabtastweg entlang voneinander getrennt sind, und
das optische Modul (110) funktionell ist zum Verwenden einer Zeitdifferenz beim Empfang optischer Signale von der ersten und der zweiten Servomarkierung (2811, 2812), um die Richtung des Offsets der vertikalen Strahlposition auf dem Bildschirm (101) zu ermitteln.

**6.** System nach Anspruch 1, wobei:

der Bildschirm (101) einen Anzeigebereich (2600) aufweist, der parallele fluoreszierende Streifen, welche die von dem Abtaststrahl (120) getragenen Bilder erzeugen, und eine Strahlfokuserfassungsreferenzmarkierung (3310) außerhalb der fluoreszierenden Streifen in einem Strahlabtastweg, der lotrecht zu den fluoreszierenden Streifen ist, aufweist, wobei die Strahlfokuserfassungsreferenzmarkierung (3310) ein Strahlfokussierungsservorückkopplungslicht erzeugt, wenn sie von dem Abtaststrahl (120) belichtet wird, um eine Strahlpunktgröße des Abtaststrahls (120) auf dem Bildschirm (101) anzuzeigen,

das System ferner einen optischen Strahlfokus-Detektor aufweist, der zum Empfangen des Strahlfokussierungsservorückkopplungslichts und zum Erzeugen eines Strahlfokusservosignals angeordnet ist, und

das optische Modul (110) funktionell ist zur Verwendung des Strahlfokusservosignals zum Steuern eines Fokus des Abtaststrahls (120), um die Strahlpunktgröße des Abtaststrahls (120) auf dem Bildschirm (101) zu regeln.

**7.** System nach Anspruch 1, wobei:

der Bildschirm (101) einen Anzeigebereich (2600) aufweist, der parallele fluoreszierende Streifen, welche die von dem Abtaststrahl (120) getragenen Bilder erzeugen, und eine Leistungserfassungsreferenzmarkierung (3410) außerhalb der fluoreszierenden Streifen in einem Strahlabtastweg aufweist, der lotrecht zu den fluoreszierenden Streifen ist, um ein Strahlleistungsservorückkopplungslicht zu erzeugen, wenn sie von dem Abtaststrahl (120) belichtet wird, um ein Leistungsniveau des Abtaststrahls (120) auf dem Bildschirm (101) anzuzeigen,

das System ferner einen optischen Leistungsmonitor-Detektor, der zum Empfangen des Strahlleistungsservorückkopplungslichts und zum Erzeugen eines Strahlleistungsservosignals angeordnet ist, und

das optische Modul (110) funktionell ist zur Verwendung des Strahlleistungsservosignals zum Regeln einer Leistung des Abtaststrahls (120) auf dem Bildschirm (101).

**8.** System nach Anspruch 1, wobei:

der Bildschirm (101) parallele fluoreszierende Streifen aufweist, die fluoreszierendes Licht in drei verschiedenen Farben von drei aufeinanderfolgenden fluoreszierenden Streifen abstrahlen, um die von dem Abtaststrahl (120) getragenen Bilder zu erzeugen,

das optische Rückkopplungssignal (1201) ein Teil des sichtbaren fluoreszierenden Lichts ist, das von dem Bildschirm (101) abgestrahlt wird,

der optische Sensor (810, 1010, 4501) ein erstes optisches Filter (4511) zum Filtern des optischen Rückkopplungssignals (1201), um das sichtbare fluoreszierende Licht einer ersten Farbe der drei verschiedenen Farben zu wählen, und einen ersten optischen Detektor (4510) zum Empfangen von Licht der ersten Farbe von dem ersten optischen Filter (4511) aufweist und wobei der optische Sensor (810, 1010, 4501) das Monitorsignal auf der Basis von wenigstens dem empfangenen Licht der ersten Farbe erzeugt, und

die Rückkopplungsregelungseinheit (320) in dem optischen Modul (110) das Monitorsignal (812) verarbeitet, um einen Fehler bei der Zeitsteuerung der optischen Pulse in dem Abtaststrahl (120) an einer Abtastrichtung entlang zu extrahieren, die zu den parallelen fluoreszierenden Streifen auf dem Bildschirm (101) lotrecht ist, und um die Zeitsteuerung der optischen Pulse in dem Abtaststrahl (120) zu steuern, um den Fehler zu reduzieren.

**9.** System nach Anspruch 8, wobei:

das optische Modul (110) funktionell ist zum Erzeugen eines Testpulsmusters für die optischen Pulse in dem Abtaststrahl (120), um wenigstens einen optischen Puls auszugeben, wenn der Abtaststrahl (120) durch alle drei aufeinanderfolgenden parallelen fluoreszierenden Streifen abtastet,

der optische Sensor (1210) ferner ein zweites optisches Filter (4521) zum Filtern des optischen Rückkopplungssignals (1201), um das sichtbare fluoreszierende Licht einer zweiten Farbe der drei verschiedenen Farben zu wählen, und einen zweiten optischen Detektor (4520) zum Empfangen von Licht der zweiten Farbe von dem zweiten optischen Filter aufweist und wobei der optische Sensor (810, 1010, 4501) das Monitorsignal auf der Basis von wenigstens dem empfangenen Licht der ersten Farbe und dem empfangenen Licht der zweiten Farbe erzeugt und

die Rückkopplungsregelungseinheit (320) in dem optischen Modul (110) funktionell ist zum Verwenden einer Differenz zwischen dem empfangenen Licht der ersten Farbe und dem empfangenen Licht der zweiten Farbe, um den Fehler bei der Zeitsteuerung der optischen Pulse in dem Abtaststrahl (120) anzuzeigen.

**10.** System nach Anspruch 9, wobei:

das optische Modul (110) funktionell ist zum Anwenden des Testpulsmusters während einer Einschaltstufe auf den Abtaststrahl (120), wenn einem Betrachter auf dem Bildschirm (101) anzuzeigende Bilder nicht auf dem Bildschirm (101) angezeigt werden, und um anschließend nach der Einschaltstufe das Testpulsmuster zu beenden und während eines normalen Betriebs eine die zu zeigenden Bilder tragende Pulsfolge an den Abtaststrahl (120) anzulegen.

11. System nach Anspruch 1, wobei

das optische Modul (110) einen ersten Scanner (540) zum Abtasten entlang einer ersten Richtung des Abtaststrahls (120) mit optischen Pulsen, die Bildinformationen tragen können, und einen zweiten Scanner (550) mit einem Polygon mit einer Vielzahl von reflektierenden Facetten zum Drehen um eine Drehachse, die entlang der ersten Richtung ist, um den Abtaststrahl (120) an einer zweiten, zu der ersten Richtung lotrechten Richtung entlang abzutasten, aufweist,

der Bildschirm (101) (1) eine Anzeigeregion (2600, 4120), die von dem Abtaststrahl (120) getragene Bilder durch das abgestrahlte sichtbare fluoreszierende Licht anzeigt, und (2) Referenzmarkierungen (2810, 4110) aufweist, die in Wegen entlang der zweiten Richtung des Abtaststrahls auf dem Bildschirm positioniert sind und entlang der ersten Richtung voneinander verlagert sind, wobei jede Referenzmarkierung (2810, 4110) funktionell ist zum Erzeugen eines optischen Monitorsignals, wenn sie von dem Abtaststrahl (120) belichtet wird, und

das System ferner Folgendes aufweist:

einen optischen Detektor (4310), der zum Empfangen des optischen Monitorsignals von dem Bildschirm (101) und zum Erzeugen eines Detektorsignals, das Informationen über ein Positionsoffset des geringsten Abtaststrahls (120) relativ zu einer jeweiligen Referenzmarkierung auf dem Bildschirm (101) enthält, positioniert ist, und

eine erste Scannersteuerung (4314), die einen Pyramidalfehler des Polygons anhand des Detektorsignals misst und das Abtasten des zweiten Scanners (550) steuert, um den von dem Pyramidalfehler verursachten Positionsoffset zu korrigieren.

12. System nach Anspruch 11, wobei:

die erste Scannersteuerung (4314) einen Mechanismus aufweist, der eine Facette des Polygons identifiziert, die den gemessenen Pyramidalfehler erzeugt, und das Abtasten des zweiten Scanners (550) steuert, um das durch den Pyramidalfehler verursachte Positionsoffset zu korrigieren, wenn die identifizierte Facette anschließend den Abtaststrahl (120) abtastet.

13. System nach Anspruch 1, wobei:

das optische Modul (110) einen ersten Scanner (540) zum Abtasten des Abtaststrahls (120) entlang einer ersten Richtung und einen zweiten Scanner (550), der ein Polygon aufweist, das reflektierende Facetten hat und funktionell ist zum Rotieren um eine Achse, die zu der ersten Richtung parallel ist, und zum Verwenden der reflektierenden Facetten, um den Abtaststrahl (120) an einer zweiten, lotrechten Richtung abzutasten, aufweist,

der Bildschirm (101) (1) einen fluoreszierenden Bereich (2600), der eine Vielzahl von parallelen fluoreszierenden Streifen hat, die jeweils entlang der ersten Richtung verlaufen und entlang der zweiten Richtung räumlich voneinander verlagert sind, und (2) einen Umfangsservoreferenzmarkierungsbereich (2610, 4121) außerhalb des fluoreszierenden Bereichs (2600) aufweist, wobei fluoreszierende Streifen das Erregungslicht absorbieren und sichtbares fluoreszierendes Licht abstrahlen, um von dem Abtaststrahl (120) getragene Bilder zu erzeugen, und der fluoreszierende Bereich (2600) eine Vielzahl von ersten Servoreferenzmarkierungen (1312) aufweist, die ein erstes optisches Rückkopplungssignal erzeugen, um eine räumliche Ausrichtung der optischen Pulse zu den fluoreszierenden Streifen entlang der zweiten Richtung anzuzeigen, und wobei der Umfangsservoreferenzmarkierungsbereich (2610, 4121) eine Vielzahl von zweiten Servoreferenzmarkierungen (2810, 4110) aufweist, die unter Beleuchtung des Abtaststrahls (120) jeweils ein zweites optisches Rückkopplungssignal erzeugen, das ein Positionsoffset des Abtaststrahls entlang der ersten Richtung anzeigt,

der optische Sensor (1210) einen ersten optischen Sensor (1210), der zum Empfangen des ersten optischen Rückkopplungssignals und zum Erzeugen eines ersten Monitorsignals, das die räumliche Ausrichtung der optischen Pulse relativ zu den fluoreszierenden Streifen anzeigt, positioniert ist, und einen zweiten optischen Sensor, der zum Empfangen des zweiten optischen Rückkopplungssignals und zum Erzeugen eines zweiten Monitorsignals, das das Positionsoffset des Abtaststrahls entlang der ersten Richtung, wenn von einer jeweiligen reflektierenden Facette abgetastet, aufweist, und

die Rückkopplungsregelungseinheit (320) funktionell ist zum Einstellen des Abtaststrahls (120) als Reaktion auf das erste und das zweite Monitorsignal, um wenigstens die räumliche Ausrichtung räumlicher Positionen der optischen Pulse relativ zu den fluoreszierenden Streifen zu regeln und das Positionsoffset des Abtaststrahls (120) entlang der ersten Richtung zu reduzieren.

14. System nach Anspruch 1, wobei:

der Bildschirm (101) (1) einen fluoreszierenden Bereich (2600), der eine Vielzahl von parallelen fluoreszierenden Streifen hat, die jeweils entlang der ersten Richtung verlaufen und entlang der zweiten Richtung räumlich voneinander verlagert sind, wobei die fluoreszierenden Streifen das Erregungslicht absorbieren und sichtbares fluoreszierendes Licht abstrahlen, um von dem Abtaststrahl (120) getragene Bilder zu erzeugen, wobei der fluoreszierende Bereich (2600) eine Vielzahl von ersten Servoreferenzmarkierungen (1312) aufweist, die ein erstes optisches Rückkopplungssignal erzeugen, um eine räumliche Ausrichtung der optischen Pulse in dem fluoreszierenden Bereich (2600) anzuzeigen, und (2) einen Umfangsservoreferenzmarkierungsbereich (2610, 4121) außerhalb des fluoreszierenden Bereichs (2600) aufweist, um eine Vielzahl von Vielzahl von zweiten Servoreferenzmarkierungen aufzuweisen, die unter Beleuchtung des Abtaststrahls (120) jeweils ein zweites optisches Rückkopplungssignal erzeugen, das eine räumliche Ausrichtung des Abtaststrahls (120) relativ zu dem fluoreszierenden Bereich (2600) anzeigt,
der optische Sensor (1210) einen ersten optischen Sensor (1210), der zum Empfangen des ersten optischen Rückkopplungssignals von dem fluoreszierenden Bereich des Bildschirms (101) und zum Erzeugen eines ersten Monitorsignals, das die räumliche Ausrichtung der optischen Pulse relativ zu den fluoreszierenden Streifen anzeigt, positioniert ist, und einen zweiten optischen Sensor, der zum Empfangen des zweiten optischen Rückkopplungssignals von dem Umfangsservoreferenzmarkierungsbereich (2610, 4121) und zum Erzeugen eines zweiten Monitorsignals, das die räumliche Ausrichtung des Abtaststrahls (120) in Bezug auf den fluoreszierenden Bereich (2600) anzeigt, aufweist, und
die Rückkopplungsregelungseinheit (320) funktionell ist zum Einstellen des Abtaststrahls (120) als Reaktion auf das erste und das zweite Monitorsignal, um die räumlichen Positionen der optischen Pulse relativ zu den fluoreszierenden Streifen zu regeln.

15. System nach Anspruch 1, wobei:

der Bildschirm (101) parallele fluoreszierende Streifen, die die von dem Abtaststrahl (120) getragenen Bilder erzeugen, und Servoreferenzmarkierungen (1312), die jeweils an Grenzen der fluoreszierenden Streifen angeordnet sind, um unter Beleuchtung des Abtaststrahls (120) das optische Rückkopplungssignal (1201) zu erzeugen, aufweist, wobei die Amplitude des optischen Rückkopplungssignals (1201) im Verhältnis zu einer Position des Abtaststrahls (120) über jeden fluoreszierenden Streifen variiert,
das optische Modul (110) funktionell ist, um eine zeitliche Variation der Zeitsteuerung der optischen Pulse in dem Abtaststrahl (120) entstehen zu lassen, um Positionen der optischen Pulse auf dem Bildschirm (101) entlang einer Strahlabtastrichtung, die zu den fluoreszierenden Streifen lotrecht ist, zu verschieben, und
die Rückkopplungsregelungseinheit (320) funktionell ist zum Einstellen der Zeitsteuerung der optischen Pulse als Reaktion auf Informationen in dem Monitorsignal zum Lenken einer Position jedes optischen Pulses in Richtung auf eine Mitte eines fluoreszierenden Streifens entlang der Strahlabtastrichtung.

**Revendications**

1. Système d'affichage à faisceau de balayage, comprenant :

un module optique (110) comprenant un miroir de balayage polygonal utilisable pour produire un faisceau de balayage de lumière d'excitation (120) ayant des impulsions optiques qui portent des informations d'image; et
un écran fluorescent (101) qui absorbe la lumière d'excitation (120) et émet une lumière fluorescente visible pour produire les images portées par le faisceau de balayage (120);
dans lequel le module optique (110) comprend une unité de contrôle de réaction (320) utilisable pour régler la synchronisation des impulsions optiques portées par le faisceau de balayage (120) en réponse à un signal de surveillance (812) pour contrôler l'alignement spatial des positions spatiales des impulsions optiques sur l'écran fluorescent (101); **caractérisé par**
un capteur optique (810, 110, 1210) positionné pour recevoir un signal optique de réaction (1201) de l'écran fluorescent (101) généré par le faisceau de balayage (120) et arrangé pour produire le signal de surveillance (812), qui indique un alignement spatial des impulsions optiques sur l'écran fluorescent (101), dans lequel le signal optique de réaction comprend une lumière de réaction à une longueur d'onde différente d'une longueur d'onde de la lumière d'excitation (120).

**2.** Système selon la revendication 1, dans lequel :

l'écran (101) comprend une zone d'affichage (2600) comprenant des bandes fluorescentes parallèles qui produisent les images portées par l'écran de balayage (120) et une marque d'asservissement de référence de début de ligne (2710) hors de la zone d'affichage (2600) comprenant les bandes fluorescentes, dans une trajectoire de balayage du faisceau perpendiculaire aux bandes fluorescentes, la marque d'asservissement de référence de début de ligne (2710) produisant une lumière d'asservissement de réaction de début de ligne lorsque éclairé par le faisceau de balayage (120) pour indiquer une position du faisceau de balayage (120) par rapport aux bandes fluorescentes;

le système comprend en outre un détecteur optique de début de ligne situé pour recevoir la lumière d'asservissement de réaction de début de ligne et produire un signal de début de ligne; et

le module optique (110) est utilisable pour utiliser le signal de début de ligne pour contrôler que la synchronisation des impulsions optiques ait lieu à un moment auquel le faisceau de balayage (120) atteint une position de commencement des bandes fluorescentes dans la zone d'affichage (2600).

**3.** Système selon la revendication 1, dans lequel :

l'écran (101) comprend une zone d'affichage (2600) comprenant des bandes fluorescentes parallèles qui produisent les images portées par le faisceau de balayage (120); une marque d'asservissement de référence de position verticale du faisceau (2810, 4110) à l'extérieur des bandes fluorescentes dans une trajectoire de balayage du faisceau perpendiculaire aux bandes fluorescentes, et une marque d'asservissement de référence de position verticale du faisceau (2810, 4110) à l'extérieur des bandes fluorescentes dans une trajectoire de balayage du faisceau perpendiculaire aux bandes fluorescentes et structuré pour produire une lumière d'asservissement de réaction de position verticale du faisceau lorsque éclairé par le faisceau de balayage (120) pour indiquer un décalage d'une position verticale du faisceau par rapport à une position verticale du faisceau prédéterminée dans une direction verticale qui est parallèle aux bandes fluorescentes;

le système comprend en outre: un détecteur optique situé pour recevoir la lumière d'asservissement de réaction de position verticale du faisceau et produire un signal d'asservissement de position verticale du faisceau; et

le module optique (110) est utilisable pour utiliser le signal d'asservissement de position verticale du faisceau pour contrôler une direction du faisceau de balayage (120) afin de réduire le décalage de la position verticale du faisceau sur l'écran (101).

**4.** Système selon la revendication 3, dans lequel :

la marque d'asservissement de référence de position verticale du faisceau (2810, 4110) comprend une première et deuxième marques d'asservissement (2811, 2812) séparées l'une de l'autre le long de la trajectoire de balayage du faisceau; et

le module optique (110) est utilisable pour utiliser une différence dans la réflexion de la première et deuxième marques d'asservissement (2811, 2812) afin de déterminer la direction du décalage de la position verticale du faisceau sur l'écran (101).

**5.** Système selon la revendication 3, dans lequel :

la marque d'asservissement de référence de position verticale du faisceau (2810, 4110) comprend une première et deuxième marques d'asservissement (2811, 2812) séparées l'une de l'autre le long de la trajectoire de balayage du faisceau; et

le module optique (110) est utilisable pour utiliser une différence de temps dans la réception des signaux optiques de la première et deuxième marques d'asservissement (2811, 2812) afin de déterminer la direction du décalage de la position verticale du faisceau sur l'écran (101).

**6.** Système selon la revendication 1, dans lequel :

l'écran (101) comprend une zone d'affichage (2600) comprenant des bandes fluorescentes parallèles qui produisent les images portées par le faisceau de balayage (120), et une marque de référence de détection de focalisation du faisceau (3310) à l'extérieur des bandes fluorescentes dans une trajectoire de balayage du faisceau perpendiculaire aux bandes fluorescentes, la marque de référence de détection de focalisation du faisceau (3310) produisant une lumière d'asservissement de réaction focalisant le faisceau lorsque éclairé par le faisceau de balayage (120) pour indiquer une taille de spot de faisceau du faisceau de balayage (120) sur l'écran (101).

le système comprend en outre un détecteur optique de focalisation du faisceau situé pour recevoir la lumière d'asservissement de réaction focalisant le faisceau et pour produire un signal d'asservissement de focalisation du faisceau; et

le module optique (110) est utilisable pour utiliser le signal d'asservissement de focalisation du faisceau pour contrôler une focalisation du faisceau de balayage (120) afin de contrôler la taille de spot de faisceau du faisceau de balayage (120) sur l'écran (101).

7. Système selon la revendication 1, dans lequel :

l'écran (101) comprend une zone d'affichage (2600) comprenant des bandes fluorescentes parallèles qui produisent les images portées par le faisceau de balayage (120), et une marque de référence de détection de puissance (3410) à l'extérieur des bandes fluorescentes dans une trajectoire de balayage du faisceau perpendiculaire aux bandes fluorescentes pour produire une lumière d'asservissement de réaction de puissance du faisceau lorsque éclairé par le faisceau de balayage (120) pour indiquer un niveau de puissance du faisceau de balayage (120) sur l'écran (101);

le système comprend en outre un détecteur de contrôle de puissance optique situé pour recevoir la lumière d'asservissement de réaction de puissance du faisceau et pour produire un signal d'asservissement de puissance du faisceau; et

le module optique (110) est utilisable pour utiliser le signal d'asservissement de puissance du faisceau pour contrôler une puissance du faisceau de balayage (120) sur l'écran (101).

8. Système selon la revendication 1, dans lequel :

l'écran (101) comprend des bandes fluorescentes parallèles qui émettent une lumière fluorescente de trois couleurs différentes à partir de trois bandes fluorescentes successives pour produire les images portées par le faisceau de balayage (120),

le signal optique de réaction (1201) est une partie de la lumière fluorescente visible émise par l'écran (101),

le capteur optique (810, 1010, 4501) comprend un premier filtre optique (4511) pour filtrer le signal optique de réaction (1201) afin de sélectionner la lumière fluorescente visible d'une première couleur des trois couleurs différentes, et un premier détecteur optique (4510) pour recevoir la lumière de la première couleur du premier filtre optique (4511), et où le capteur optique (810, 1010, 4501) produit le signal de surveillance sur la base d'au moins la lumière reçue de la première couleur, et

l'unité de contrôle de réaction (320) dans le module optique (110) traite le signal de surveillance (812) pour extraire une erreur dans la synchronisation des impulsions optiques dans le faisceau de balayage (120) le long d'une direction de balayage perpendiculaire aux bandes fluorescentes parallèles sur l'écran (101) et pour contrôler la synchronisation des impulsions optiques dans le faisceau de balayage (120) afin de réduire l'erreur.

9. Système selon la revendication 8, dans lequel :

le module optique (110) est utilisable pour produire un modèle d'impulsions de test pour les impulsions optiques dans le faisceau de balayage (120) pour sortir au moins une impulsion optique lorsque le faisceau de balayage (120) balaie à travers toutes les trois bandes fluorescentes parallèles successives,

le capteur optique (1210) comprend en outre un deuxième filtre optique (4521) pour filtrer le signal optique de réaction (1201) afin de sélectionner la lumière fluorescente visible d'une deuxième couleur des trois couleurs différentes, et un deuxième détecteur optique (4520) pour recevoir la lumière de la deuxième couleur du deuxième filtre optique, et où le capteur optique (810, 1010, 4501) produit le signal de surveillance sur la base d'au moins la lumière reçue de la première couleur et de la lumière reçue de la deuxième couleur, et

l'unité de contrôle de réaction (320) dans le module optique (110) est utilisable pour utiliser une différence entre la lumière reçue de la première couleur et la lumière reçue de la deuxième couleur afin d'indiquer l'erreur dans la synchronisation des impulsions optiques dans le faisceau de balayage (120).

10. Système selon la revendication 9, dans lequel :

le module optique (110) est utilisable pour appliquer un modèle d'impulsions de test au faisceau de balayage (120) durant un stade de mise sous tension lorsque les images à montrer sur l'écran (101) à un spectateur ne sont pas affichées sur l'écran (101) et pour, suite au stade de mise sous tension, terminer le modèle d'impulsions de test et appliquer une séquence d'impulsions portant les images à montrer au faisceau de balayage (120) pendant un fonctionnement normal.

11. Système selon la revendication 1, dans lequel :

le module optique (110) comprend un premier scanneur (540) pour balayer le faisceau de balayage le long d'une première direction, (120) ayant des impulsions optiques qui peuvent porter des informations d'images, et un deuxième scanneur (550) ayant un polygone doté d'une pluralité de facettes réfléchissantes pour tourner autour d'un axe de rotation qui est le long de la première direction pour balayer le faisceau de balayage (120) le long d'une deuxième direction perpendiculaire à la première direction ;

l'écran (101) comprend (1) une région d'affichage (2600, 4120) qui affiche les images portées par le faisceau de balayage (120) par la lumière fluorescente visible émise, et les marques de référence (2810, 4110) positionnées sur des trajectoires le long de la deuxième direction du faisceau de balayage sur l'écran et déplacées l'une de l'autre le long de la première direction, chaque marque de référence (2810, 4110) étant utilisable pour produire un signal de surveillance optique lorsque éclairé par le faisceau de balayage (120) ; et

le système comprend en outre :

un détecteur optique (4310) positionné pour recevoir le signal de surveillance optique de l'écran (101) et pour produire un signal de détection contenant des informations sur un décalage de position du au moins un faisceau de balayage (120) par rapport à une marque de référence respective sur l'écran (101) ; et

un premier contrôle de scanneur (4314) qui mesure une erreur pyramidale du polygone à partir du signal de détection et contrôle le balayage du deuxième scanneur (550) pour corriger le décalage de position causé par l'erreur pyramidale.

12. Système selon la revendication 11, dans lequel :

le premier contrôle de scanneur (4314) comprend un mécanisme qui identifie une facette du polygone qui génère l'erreur pyramidale mesurée et contrôle le balayage du deuxième scanneur (550) pour corriger le décalage de position causé par l'erreur pyramidale lorsque la facette identifiée balaie subséquemment le faisceau de balayage (120).

13. Système selon la revendication 1, dans lequel :

le module optique (110) comprend un premier scanneur (540) pour balayer le faisceau de balayage (120) le long d'une première direction et un deuxième scanneur (550) comprenant un polygone ayant des facettes réfléchissantes et utilisable pour tourner autour d'un axe parallèle à la première direction et utiliser les facettes réfléchissantes pour balayer le faisceau de balayage (120) le long d'une deuxième direction perpendiculaire ;

l'écran (101) comprend (1) une zone fluorescente (2600) ayant une pluralité de bandes fluorescentes parallèles chacune le long de la première direction et déplacées spatialement les unes des autres le long de la deuxième direction et (2) une zone périphérique de marques d'asservissement de référence (2810, 4121) à l'extérieur de la zone fluorescente (2600), où les bandes fluorescentes absorbent la lumière d'excitation et émettent une lumière fluorescente visible pour produire les image portées par le faisceau de balayage (120), et la zone fluorescente (2600) comprend une pluralité de premières marques d'asservissement de référence (1312) produisant un premier signal optique de réaction pour indiquer un alignement spatial des impulsions optiques aux bandes fluorescentes le long de la deuxième direction, et où la zone périphérique de marques d'asservissement de référence (2610, 4121) comprend une pluralité de deuxièmes marques d'asservissement de référence (2810, 4110) produisant chacune un deuxième signal optique de réaction sous l'éclairage du faisceau de balayage (120) indiquant un décalage de position du faisceau de balayage le long de la première direction ;

le capteur optique (1210) comprend un premier capteur optique (1210) positionné pour recevoir le premier signal optique de réaction et pour produire un premier signal de surveillance indiquant l'alignement spatial des impulsions optiques par rapport aux bandes fluorescentes, et un deuxième capteur optique positionné pour recevoir le deuxième signal optique de réaction et pour produire un deuxième signal de surveillance indiquant le décalage de position du faisceau de balayage le long de la première direction lorsque balayée par une facette réfléchissante respective ; et

l'unité de contrôle de réaction (320) est utilisable pour régler le faisceau de balayage (120) en réponse au premier et deuxième signaux de surveillance afin de contrôler au moins l'alignement spatial des positions spatiales des impulsions optiques par rapport aux bandes fluorescentes et de réduire le décalage de position du faisceau de balayage (120) le long de la première direction.

**14.** Système selon la revendication 1, dans lequel :

l'écran (101) comprend (1) une zone fluorescente (2600) ayant une pluralité de bandes fluorescentes parallèles chacune le long de la première direction et déplacées spatialement les unes des autres le long de la deuxième direction, les bandes fluorescentes absorbant la lumière d'excitation et émettant une lumière fluorescente visible pour produire les images portées par le faisceau de balayage (120), la zone fluorescente (2600) comprenant une pluralité de premières marques d'asservissement de référence (1312) produisant un premier signal optique de réaction pour indiquer un alignement spatial des impulsions optiques dans la zone fluorescente (2600), et (2) une zone périphérique de marques d'asservissement de référence (2610, 4121) à l'extérieur de la zone fluorescente (2600) pour comprendre une pluralité de deuxièmes marques d'asservissement de référence produisant chacune un deuxième signal optique de réaction sous l'éclairage du faisceau de balayage (120) indiquant un alignement spatial du faisceau de balayage (120) par rapport à la zone fluorescente (2600);

le capteur optique (1210) comprend un premier capteur optique (1210) positionné pour recevoir le premier signal optique de réaction de la zone fluorescente de l'écran (101) et produire un premier signal de surveillance indiquant l'alignement spatial des impulsions optiques par rapport aux bandes fluorescentes, et un deuxième capteur optique positionné pour recevoir le deuxième signal optique de réaction de la zone périphérique de marques d'asservissement de référence (2610, 4121) et produire un deuxième signal de surveillance indiquant l'alignement spatial du faisceau de balayage (120) par rapport à la zone fluorescente (2600); et

l'unité de contrôle de réaction (320) est utilisable pour régler le faisceau de balayage (120) en réponse au premier et deuxième signaux de surveillance pour contrôler les positions spatiales des impulsions optiques par rapport aux bandes fluorescentes.

**15.** Système selon la revendication 1, dans lequel :

l'écran (101) comprend des bandes fluorescentes parallèles qui produisent les images portées par le faisceau de balayage (120) et des marques d'asservissement de référence (1312) situées respectivement aux limites des bandes fluorescentes pour produire le signal optique de réaction (1201) sous l'éclairage du faisceau de balayage (120), dans lequel le signal optique de réaction (1201) varie en amplitude avec la position du faisceau de balayage (120) sur chaque bande fluorescente,

le module optique (110) est utilisable pour créer une variation temporelle dans la synchronisation des impulsions optiques dans le faisceau de balayage (120) afin de déplacer les positions des impulsions optiques sur l'écran (101) le long d'une direction de balayage du faisceau perpendiculaire aux bandes fluorescentes, et

l'unité de contrôle de réaction (320) est utilisable pour régler la synchronisation des impulsions optiques en réponse aux informations dans le signal de surveillance, de diriger une position de chaque impulsion optique vers un centre d'une bande fluorescente le long de la direction de balayage du faisceau.

# FIG. 1

Horizontal scan direction

Vertical Scan Direction

Scanning Laser Beam 120

110
Laser Module
( Beam Scanning & RGB Channel Modulation)

101
Screen with Radiation-Excited, Vertical Phosphor Stripes for Red, Green, and Blue Colors

One Unit Pattern of Stripes

Red Phosphor Stripe

Green Phosphor Stripe

Blue Phosphor Stripe

EP 1 989 699 B1

## FIG. 2A

Color Phosphor Stripe Layer
203

Green Light
(to Viewer)

Color Subpixel
212

Front Substrate
202

• • •

• • •

| R | G | B | R | G | B | R | G | B | R | G | B |

• • •

• • •

• • •

210
Color Pixel

Rear Substrate
201

• • •

120
Scanning Excitation
Laser Beam

Horizontal Scanning

## FIG. 2B

Scan Direction

| R | G | B | R | G | B | R | G | B | R | G | B |

Footprint
of
Scanning
Laser
Beam

Pixel N

Pixel N+1

## FIG. 2C

White Phosphor Layer with
Mixed Phosphors
220

Filter Layer
230

Substrate
202

Excitation Light
120

Substrate
201

Visible Colored
Light to Viewer

EP 1 989 699 B1

## FIG. 3

Screen
101

Scanning
Excitation
Beam
120

```
┌ ─ ─ ─ ─ ─ ─ ─ ─ ─ ─ ─ ─ ─ ─ ─ ─ ─ ┐
│  ┌──────────┐      ┌──────────────┐ │
│  │  Laser   │      │Beam Scanning │ │
│  │  Source  │─────▶│ and Imaging  │ │
│  │   310    │      │   Module     │ │
│  └──────────┘      │    330       │ │
│        ▲           └──────────────┘ │
│        ┊                            │
│  ┌──────────┐      312             │
│  │  Signal  │      Modulated       │
│  │Modulation│      Excitation      │
│  │Controller│      Beam            │
│  │   320    │                      │
│  └──────────┘                      │
└ ─ ─ ─ ─ ─ ─ ─ ─ ─ ─ ─ ─ ─ ─ ─ ─ ─ ┘
                  110
```

## FIG. 4

Screen
101

Scanning
Excitation
Beam
120

```
┌ ─ ─ ─ ─ ─ ─ ─ ─ ─ ─ ─ ─ ─ ─ ─ ─ ─ ─ ─ ─ ─ ┐
│              ┌──────────┐                    │
│              │  Signal  │                    │
│              │Modulation│                    │
│              │Controller│                    │
│              │   430    │                    │
│              └──────────┘                    │
│                    ┊                         │
│  ┌──────┐    ┌──────────┐   ┌──────────────┐ │
│  │Laser │    │ Optical  │   │Beam Scanning │ │
│  │Source│───▶│Modulator │──▶│ and Imaging  │ │
│  │ 410  │    │   420    │   │   Module     │ │
│  └──────┘    └──────────┘   │    330       │ │
│                             └──────────────┘ │
│         412           422                    │
│         CW            Modulated              │
│         Excitation    Excitation             │
│         Beam          Beam                   │
└ ─ ─ ─ ─ ─ ─ ─ ─ ─ ─ ─ ─ ─ ─ ─ ─ ─ ─ ─ ─ ─ ┘
                       110
```

## FIG. 5

Laser Module
( Beam Scanning & RGB
Channel Modulation)
110

Laser Beams
512

Galvo Mirror
For Vertical Scanning
540

Laser Array with
Multiple (N) Lasers
510

Relay
Optics
Module
530

532
Laser Beams

Scanning
Laser Beams
120

Signal Modulation
Controller for
N Lasers
520

550
Polygon Scanner
For Horizontal Scanning

560
Scan Lens

101
Fluorescent
Screen

EP 1 989 699 B1

## FIG. 6

Red
Sub Pixel
Time

Green
Sub Pixel
Time

Blue
Sub Pixel
Time

Time
(Arb. Unit)

1 Color Pixel Time

## FIG. 7

Start Edge
of Image Area

End Edge
of Image Area

Horizontal Direction

Screen
Segment
No. 1

Screen
Segment
No. 2

1
2
3
•
•
N

Vertical
Direction

45

## FIG. 8

Sensor
Feedback Signal
812

On-Screen
Optical
Sensing
Unit
810

One Unit
Pattern of
Stripes

Scanning
Laser Beam
120

101
Screen

110
Laser Module

Red
Phosphor
Stripe

Green
Phosphor
Stripe

Blue
Phosphor
Stripe

## FIG. 9

Color Phosphor
Stripe Layer
203

Red    Green    Blue

PD3

PD2

BS3

BS2

BS1

Front Substrate
202

• • •

R | G | B | R | G | B | R | G | B | R | G | B

• • •

PD1

Rear Substrate
201

• • •

1st
Color
Pixel

120
Scanning Excitation
Laser Beam

Horizontal Scanning

46

## FIG. 10

Screen
101

One Unit
Pattern of
Stripes

Scanning
Laser Beam
120

110
Laser Module

Red
Phosphor
Stripe

Green
Phosphor
Stripe

Blue
Phosphor
Stripe

R  G  B

PD3

PD1  PD2

1010
Off-Screen Optical

812
Sensor
Feedback Signal

## FIG. 11

EP 1 989 699 B1

Screen
101

Active Fluorescent Display Region with Fluorescent Stripesr
2600

2610
Peripheral
Reference
Mark Region

2620
Peripheral
Reference
Mark Region

FIG. 12

Fixed Known Spacing

Active Fluorescent Display Region with Fluorescent Stripes 2600

SOL Stripe Mark 2710

2610

## FIG. 13

## FIG. 14A

## FIG. 14B

Y (Vertical)

X (Horizontal)

Laser Beam
120

Sensor Pattern 1
2811

Horizontal
Scan Direction

2812
Sensor Pattern 2

PIN Diode Preamp Output

Time

Integrator Output Voltage

Time

Sensor Pattern 1

Integrator Reset

Sensor Pattern 2

Position Error Voltage = (Sensor Pattern 1 – Sensor Pattern 2) / (Sensor Pattern 1 +Sensor Pattern 2)

EP 1 989 699 B1

## FIG. 15

Reference Mark 3011

Reference Mark 3012

Horizontal Scan Direction

Laser Beam 120

DX(Y)

3010

PIN Diode Preamp Output

Time

Pulse Interval

Pulse Detector Output

Time

EP 1 989 699 B1

**FIG. 16**

```
PIN Diode Preamp    →    Pulse Detector    →    Time Interval
      3110                    3120               Measurement
                                                   Circuit
                                                    3130
```

```
A/D Converter    →    Micro Controller or    →    D/A Converter
     3140              Digital Processor              3160
                            3150
```

```
Laser Vertical
Position Actuator
   Controller
     2960
```

EP 1 989 699 B1

EP 1 989 699 B1

## FIG. 17

Screen
101

Laser Collimator Lens
3230

Laser Diode
3210

Laser Diode
Mount
3220

3240
Lens Actuator

## FIG. 18

Laser Beam
120

Optical Detector Output
3301

Spot too large

Laser Beam
120

Optical Detector Output
3302

Spot correct size

Laser Beam
120

Horizontal
Scan Direction

3311
Vertical
Reflective Stripe

3310
Beam Focus Sensing Mark

EP 1 989 699 B1

FIG. 19

Power Sensing Mark
3410

Beam Focus Sensing Mark
3310

SOL Stripe Mark
2710

Fixed Known Spacing

Active Fluorescent
Display Region
with Fluorescent
Stripes
2600

Vertical Reference Mark
2810

2610
Peripheral Reference Mark Region

EP 1 989 699 B1

FIG. 20A

FIG. 20B

FIG. 20C

FIG. 20D

## FIG. 21

Laser Module
110

Scan Lens
360

Scanning
Excitation Beam
120

Screen
101

Laser
Source
310

Beam
Scanning
Module
330

Sensor Feedback Signal

Signal
Modulation
Controller
320

Servo
Sensor
1210

1220
Collection
Lens

1201
Feedback
Light

EP 1 989 699 B1

## FIG. 22

Reflective or Fluorescent
Servo Reference Mark
1312

Scanning
Excitation Beam
120

Fluorescent
Stripe

R    G    B

• • •                    • • •

Absorbent
Stripe Divider
1310

Viewer Side

EP 1 989 699 B1

## FIG. 23

Reflective or
Fluorescent
Stripe Divider
1410

Scanning
Excitation Beam
120

Fluorescent
Stripe

R    G    B

• • •                    • • •

Absorbent Layer
1420

Viewer Side

## FIG. 24

Blackened
Absorptive Layer
1420

Stripe Divider
1500

Blackened
Absorptive Layer
1420

Stripe 1500

30

82°

75

50

184

234

1501
Film Base Layer

EP 1 989 699 B1

EP 1 989 699 B1

# FIG. 25

Red Fluorescent Stripe 1610

Green Fluorescent Stripe 1620

Blue Fluorescent Stripe 1630

Stripe Divider 1600

1632

1621

1622

1600 Stripe Divider

1631

1600

1600

1601

1602

1603

t1

t2

t3

Time

Horizontal Scan Direction

1633
Off-Center Position where Laser Beam Position When Laser is Off

1623
Center position where Laser Beam Position When Laser is On

61

## FIG. 26A

Beam is Left
of sub-pixel

Reflected Signal = R2

Stripe
Divider

Reflector

Black Absorber

sub-pixel

Fluorescent
Stripe

## FIG. 26B

Beam is at
Center of sub-pixel

Reflected Signal = R1

Stripe
Divider

sub-pixel

Fluorescent
Stripe

Viewer Side

## FIG. 26C

Beam is Right
of sub-pixel

Reflected Signal =R2

Stripe
Divider

sub-pixel

Fluorescent
Stripe

↓ Incident Laser

↑ Reflected Laser

EP 1 989 699 B1

FIG. 27

Sub Pixel Wide Spot Reflected Light

EP 1 989 699 B1

## FIG. 28

Incident Laser

Reflected Laser

Reflected Signal = R3    Reflected Signal = R2    Reflected Signal = R1

Stripe
Divider

Stripe
Divider

Fluorescent
Stripe

Stripe
Divider

Fluorescent
Stripe

sub-pixel    sub-pixel    sub-pixel

Stripe
Divider

Fluorescent
Stripe

Beam is
extreme left
of sub-pixel

Beam is at left
of sub-pixel

Beam is at
Center of sub-pixel

EP 1 989 699 B1

## FIG. 29

Beam is centered on sub-pixel

Beam is off-center of sub pixel
Left or Right

Delay
Signal

T0

T1=T0/2

R2

R1

Scan Time

EP 1 989 699 B1

# FIG. 30

## FIG. 31

## FIG. 32

## FIG. 33

Delay Signal
X Reflected Signal
(for each point over one cycle)

= 0    Beam is on at the center of subpixel

> 0    Beam is on at the left of the center of subpixel

< 0    Beam is on at the right of the center of subpixel

Amplitude determines
Servo Sign

## FIG. 34

Reflected beam

Scan Time

"Peak" detector
output

Sampling Clock

Nominal sub-pixel   Short sub-pixel

EP 1 989 699 B1

EP 1 989 699 B1

## FIG. 35

Reflected beam

Scan Time

"Peak" detector
output

Sampling Clock

Nominal sub-pixel    Long sub-pixel

## FIG. 36

Reflected beam

Scan Time

"Peak" detector output

Sampling Clock

Nominal sub-pixel

Estimated sub-pixel pulse

EP 1 989 699 B1

## FIG. 37

Examples for Parameters:
Vertical frame rate is 60Hz
Vertical Retrace time= 5% of 60Hz= 890 usec

Vertical Position
of
Scanned Beam

Time

Scan Time

Vertical Retrace Time
(laser is turned off or blocked)

EP 1 989 699 B1

## FIG. 38

Dynamic Pyramidal Angular Error = ½ atan (D/L)

EP 1 989 699 B1

*FIG. 39A*

Horizontal Lines Traced
By each Polygon facet

Vertical
Retrace
Time

*FIG. 39B*

Horizontal Lines Traced
By each Polygon facet

Vertical
Retrace
Time

Pyramidal Error
Causes lines to
Depart from Ideal

## FIG. 40

Single Facet Time

High Frequency Dither

Vertical Position
of
Scanned Beam

Time

Scan Time

Vertical
Retrace
Time

EP 1 989 699 B1

Peripheral Reference Mark Region 4121

Display Region 4120

Vertical Reference Marks 4110

Vertical Reference Marks 4120

Vertical Reference Marks 4130

Vertical Reference Marks 4140

*FIG. 41*

laser #1

Scan #1

laser #6

laser #1

Scan #2

laser #6

laser #1

Scan #3

laser #6

laser #1

Scan #4

laser #6

Display Screen

## FIG. 42

2811

Laser Sweep reflected too high — 4211

Laser Sweep at Correct Vertical Position — 4221

Laser Sweep reflected too low

— 4231

2812

4210 — Laser Sweep reflected too high

4220 — Laser Sweep at Correct Vertical Position

4230 — Laser Sweep reflected too low

Sample #1     Sample #2

Reset Integrator

EP 1 989 699 B1

FIG. 43

Error Signal

Display Control (with Microprocessor) 4314

Pyramidal Error Signal Generator Circuit 4312

Detector Signal

Galvo Control Signal

Galvo Mirror For Vertical Scanning 540

Optical Detector 4310

Laser Array with Multiple (N) Lasers 510

532 Laser Beams

Scanning Laser Beams 120

Signal Modulation Controller for N Lasers 520

550 Polygon Scanner For Horizontal Scanning

560 Scan Lens

110 Laser Module ( Beam Scanning & RGB Channel Modulation)

4301 Screen with Vertical Reference Marks

EP 1 989 699 B1

FIG. 44

## FIG. 45

Viewer Side

Excitation Side

Incident Laser Beams

Preamps

PhotoDiodes

Scan Line

Red Filter 4511

4510

Preamp 4540

4541 Integrator

4542 A/D Converter

Red detection signal

Green Filter 4521

4520

Preamp 4540

4541 Integrator

4542 A/D Converter

Green detection signal

Blue Filter 4531

4530

Preamp 4540

4541 Integrator

4542 A/D Converter

Blue detection signal

4552

101

4501 Optical Sensor

Reset

Micro-computer 4550

Viewing Screen

4554 Error signal

EP 1 989 699 B1

80

## FIG. 46

Pulse Period in Space (3D)

Red Excitation Portion

Green Excitation Portion

Laser Pulse Pattern

Pulse Width In Space

d

red    green    blue    red    green

Laser Scan Direction

One Subpixel with Width (D)

Screen 101

Border Between Subpixels

One Color Pixel with Wdith (3D)

EP 1 989 699 B1

FIG. 47

## FIG. 48

Nominal Laser Pulse Pattern

Early Timing

Late Timing

Red Video

red    green    blue    red    green

Laser Scan Direction

One Subpixel with Width (D)

Screen 101

Border Between Subpixels

One Color Pixel with Wdith (3D)

EP 1 989 699 B1

**EP 1 989 699 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5138441 A
- US 5587818 A
- US 5684552 A

84